(19) Europäisches Patentamt
European Patent Office
Office européen des brevets

(11) **EP 4 040 194 B1**

(12) **EUROPEAN PATENT SPECIFICATION**

(45) Date of publication and mention
of the grant of the patent:
**03.09.2025 Bulletin 2025/36**

(21) Application number: **20879856.1**

(22) Date of filing: **23.10.2020**

(51) International Patent Classification (IPC):
**G01S 7/48** (2006.01)

(52) Cooperative Patent Classification (CPC):
**G01S 15/931; G01S 7/4808; G01S 13/08;
G01S 13/931; G01S 15/08; G01S 15/586;
G01S 15/86; G01S 17/08; G01S 17/86;
G01S 17/931**

(86) International application number:
**PCT/CN2020/123398**

(87) International publication number:
**WO 2021/078283 (29.04.2021 Gazette 2021/17)**

(54) **DATA ASSOCIATION METHOD AND DEVICE**

DATENZUORDNUNGSVERFAHREN UND -VORRICHTUNG

PROCÉDÉ ET DISPOSITIF D'ASSOCIATION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2019 CN 201911019381**

(43) Date of publication of application:
**10.08.2022 Bulletin 2022/32**

(73) Proprietor: **Shenzhen Yinwang Intelligent
Technologies Co., Ltd.
Shenzhen, Guangdong 518129 (CN)**

(72) Inventors:
• **WANG, Jianguo
Shenzhen, Guangdong 518129 (CN)**

• **LUO, Jingxiong
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A2-02/091016        CN-A- 101 655 561
CN-A- 102 749 626      CN-A- 102 749 626
CN-A- 103 116 688      CN-A- 103 293 531
CN-A- 103 473 757      CN-A- 103 575 279
CN-A- 103 885 029      CN-A- 108 828 527
CN-A- 108 957 413      CN-A- 109 270 523
JP-A- 2011 145 096     US-A1- 2009 244 263
US-A1- 2016 187 466    US-B1- 9 739 881

## Description

## TECHNICAL FIELD

This application relates to the field of sensor technologies, and in particular, to a data association method and apparatus.

## BACKGROUND

A variety of sensors, such as a radar, sonar, ultrasonic sensor, and a visual sensor including a camera, are usually configured in an advanced driver assistance system (advanced driver assistance system, ADAS) or autonomous driving (autonomous driving, AD) system, to perceive an ambient environment and target information. Platforms of the sensors may be in-vehicle, ship-borne, airborne, or satellite-borne systems. These sensors are deployed on the sensor platforms and can provide measurement data of targets moving relative to a reference system or targets stationary relative to the reference system around a mobile device. The reference system may be the earth or an inertial coordinate system relative to the earth. For example, the targets moving relative to the reference system may be vehicles, pedestrians, or the like. The targets stationary relative to the reference system may be obstacles, guardrails, curbs, lamp poles, surrounding trees, buildings, or the like. The measurement data may include one or more of a range of the target relative to the sensor, an azimuth angle of the target relative to the sensor, a pitch angle of the target relative to the sensor, a radial velocity of the target relative to the sensor, and a scattering cross section of the target relative to the sensor.

Functions such as classification, recognition, and tracking on ambient environments and objects can be implemented by using the measurement data provided by the foregoing sensors. The tracking function is used to determine a quantity of targets in an ambient environment and state vectors of the targets. A state vector of a target usually includes information such as a position vector and a velocity vector. Each frame of data obtained by a sensor usually includes measurement data of a plurality of targets. It needs to be determined which pieces of measurement data in different frames come from a same target. That is, data association needs to be performed on measurement data in different frames. In existing actual application, a data association problem is usually divided into two stages: a track maintenance stage and a track initiation stage.

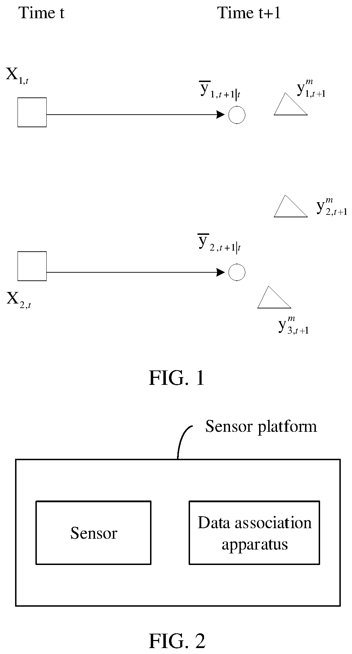

A track of a target has been established in the track maintenance stage. That is, a state vector of the target has been obtained. Especially, a position vector and a velocity vector of the target have been obtained. Therefore, the state vector of the target in a next frame may be predicted based on the state vector in a current frame. A measurement vector of the target in the next frame may also be predicted based on the state vector of the target in the next frame. As shown in FIG. 1, $X_{1,t}$ and $X_{2,t}$ are respectively state vectors of target 1 and target 2 in a current frame, and $\bar{y}_{1,t+1|t}$ and $\bar{y}_{2,t+1|t}$ are respectively predicted measurement vectors of the two targets in a next frame, where $y_{j,t+1}^{m}$ (j = 1, 2, and 3) is three pieces of measurement data measured by a sensor in the next frame. It can be determined, based on $\bar{y}_{1,t+1|t}$ and $\bar{y}_{2,t+1|t}$, which data in $y_{j,t+1}^{m}$ comes from target 1 and which data in $y_{j,t+1}^{m}$ comes from target 2.

A track of a target has not been established in the track initialization stage. A state vector of the target, especially a velocity vector of the target, has not been obtained. Therefore, the state vector of the target in a next frame cannot be completely predicted. Consequently, a measurement vector of the target in the next frame cannot be completely predicted, and further data association cannot be performed, based on the predicted measurement vector of the target in the next frame, on measurement data measured by a sensor in the next frame. Therefore, in a conventional technology, a velocity vector is usually preset for a state vector of a target in the first frame, and the state vector of the target in a next frame is predicted based on the preset velocity vector. However, the preset velocity vector may be inaccurate. As a result, associated measurement data cannot be accurately determined finally.

CN 102 749 626 A discloses a radar sensor which comprises an optical transmitting unit and an optical receiving unit. The optical transmitting unit is used for transmitting a single laser beam and can divide the single laser beam into three laser beams, the optical receiving unit is used for receiving reflected target light echo signals of the three laser beams in a projection area, and consists of two optical receiving modules, and each optical receiving module is used for receiving the reflected target light echo signals of the corresponding two adjacent laser beams of the three laser beams in the projection area.

## SUMMARY

The present invention is set out in the appended set of claims. Embodiments of this application provide a data association method and apparatus, to help accurately determine associated measurement data.

According to a first aspect, an embodiment of this application provides a data association method. The method includes: obtaining a plurality of pieces of measurement data, where each of the plurality of pieces of measurement data includes position measurement data and velocity measurement data; determining, based on position measurement data included in at least two of the plurality of pieces of measurement data, a velocity estimate corresponding to an association hypothesis of the at least two pieces of measurement data; determining, based on the velocity estimate corresponding to the association hypothesis and velocity measurement data in the at least two pieces of measurement data, a metric value corresponding to the association hypothesis; and determining an association relationship of the plurality of pieces of measurement data based on a metric value corresponding to at least one association hypothesis of the plurality of pieces of measurement data; where each of the at least one association hypothesis of the plurality of pieces of measurement data corresponds to the at least two of the plurality of pieces of measurement data. Based on the method described in the first aspect, the metric value corresponding to the at least one association hypothesis can be determined by using the plurality of pieces of measurement data measured by a sensor, and further the association relationship of the plurality of pieces of measurement data can be determined based on the metric value corresponding to the at least one association hypothesis. This avoids using a prior velocity value with an excessively large error to determine the association relationship of the plurality of pieces of measurement data, thereby improving accuracy of determining the association relationship of the plurality of pieces of measurement data.

In an optional implementation, the at least two pieces of measurement data come from at least two moments; or the at least two pieces of measurement data come from at least two sensors.

In an optional implementation, the velocity estimate includes one or more of a smoothed velocity estimate, a filtered velocity estimate, and a predicted velocity estimate. For example, the plurality of pieces of measurement data come from two moments $t_{k-1}$ and $t_k$, and the velocity estimate corresponding to the association hypothesis may include a smoothed velocity estimate and/or a filtered velocity estimate. For another example, the plurality of pieces of measurement data come from three moments $t_{k-1}$, $t_k$, and $t_{k+1}$, and the velocity estimate corresponding to the association hypothesis may include a smoothed velocity estimate and/or a filtered velocity estimate and/or a predicted velocity estimate. Based on this optional implementation, the association relationship of the plurality of pieces of measurement data can be more accurately determined based on one or more of the smoothed velocity estimate, the filtered velocity estimate, and the predicted velocity estimate.

In an optional implementation, a specific implementation of the determining, based on the velocity estimate corresponding to the association hypothesis and velocity measurement data in the at least two pieces of measurement data, a metric value corresponding to the association hypothesis is: determining, based on an estimate of a projected velocity component corresponding to the association hypothesis and the velocity measurement data in the at least two pieces of measurement data, the metric value corresponding to the association hypothesis, where the estimate of the projected velocity component includes a radial velocity estimate and/or a lateral velocity estimate and/or a longitudinal velocity estimate, the radial velocity estimate is obtained based on the velocity estimate, the lateral velocity estimate is obtained based on the velocity estimate, and the longitudinal velocity estimate is obtained based on the velocity estimate. Based on the optional implementation, the estimate of the projected velocity component corresponding to the association hypothesis can be determined based on the velocity estimate corresponding to the association hypothesis, and the metric value corresponding to the association hypothesis can be determined based on the estimate of the projected velocity component corresponding to the association hypothesis and the velocity measurement data in the at least two pieces of measurement data. This helps more accurately determine the association relationship of the plurality of pieces of measurement data.

In an optional implementation, a specific implementation of the determining, based on the velocity estimate corresponding to the association hypothesis and velocity measurement data in the at least two pieces of measurement data, a metric value corresponding to the association hypothesis is: determining, based on the velocity estimate corresponding to the association hypothesis and the velocity measurement data in the at least two pieces of measurement data, whether the association hypothesis is a valid association hypothesis; and for a valid association hypothesis, determining the metric value corresponding to the association hypothesis. Based on this implementation, an invalid association hypothesis can be filtered out, and this helps reduce a subsequent calculation amount.

In an optional implementation, that the association hypothesis is valid means: a range value determined based on the velocity estimate corresponding to the association hypothesis and the velocity measurement data in the at least two pieces of measurement data is less than or equal to a preset threshold. Based on this implementation, a valid association hypothesis can be accurately determined. Optionally, for a valid association hypothesis, the range value may be determined as a metric value corresponding to the association hypothesis.

In an optional implementation, that the association hypothesis is valid means: a likelihood function value or a log-likelihood function value that is determined based on the velocity estimate corresponding to the association hypothesis and at least one piece of velocity measurement data in the at least two pieces of measurement data is less than or equal to a preset threshold. Based on this implementation, a valid association hypothesis can be accurately determined. Optionally, for a valid association hypothesis, the likelihood function value or the log-likelihood function value may be determined as a metric value corresponding to the association hypothesis.

In an optional implementation, the metric value corresponding to the association hypothesis is a likelihood function value or a log-likelihood function value or a range value that is obtained based on the velocity measurement data and the velocity estimate. Based on this implementation, it is conducive to accurately determining the association relationship of the plurality of pieces of measurement data.

Optionally, the metric value is a likelihood function value or a log-likelihood function value. The likelihood function value or the log-likelihood function value corresponding to the association hypothesis can be obtained based on a probability density function of the velocity estimate and the velocity measurement data. The probability density function may be a probability density function of Gaussian distribution, a density function of uniform distribution, a density function of exponential distribution, a density function of Poisson distribution, or the like.

In an optional implementation, a specific implementation of the determining an association relationship of the plurality of pieces of measurement data based on a metric value corresponding to at least one association hypothesis of the plurality of pieces of measurement data is: determining a maximum-likelihood association hypothesis or a global nearest-neighbor association hypothesis based on the metric value corresponding to the at least one association hypothesis of the plurality of pieces of measurement data; and determining the association relationship of the plurality of pieces of measurement data based on the maximum-likelihood association hypothesis or the global nearest-neighbor association hypothesis. Based on this implementation, it is conducive to accurately determining the association relationship of the plurality of pieces of measurement data.

In an optional implementation, a specific implementation of the determining an association relationship of the plurality of pieces of measurement data based on a metric value corresponding to at least one association hypothesis of the plurality of pieces of measurement data is: determining the association relationship of the plurality of pieces of measurement data based on the metric value corresponding to the at least one association hypothesis of the plurality of pieces of measurement data and according to a first constraint rule, where the first constraint rule is that one piece of measurement data comes from one target, and the one target generates one or more pieces of measurement data. Based on this implementation, it is conducive to accurately determining the association relationship of the plurality of pieces of measurement data.

According to a second aspect, a data association apparatus is provided, and can perform the method according to any one of the first aspect and the optional implementations of the first aspect. The function may be implemented by hardware, or may be implemented by hardware executing corresponding software. The hardware or software includes one or more units corresponding to the foregoing function. The unit may be software and/or hardware. Based on a same inventive concept, for a problem resolving principle and beneficial effects of the data association apparatus, refer to the method according to any one of the first aspect and the optional implementations of the first aspect and the beneficial effects thereof. Details are not repeated.

According to a third aspect, a data association apparatus is provided. The data association apparatus includes a processor and a memory, and the processor is connected to the memory. The memory is configured to store a program, and the processor invokes the program stored in the memory, to implement the method according to any one of the first aspect and the optional implementations of the first aspect. For a problem-resolving implementation and beneficial effects of the data association apparatus, refer to the method and beneficial effects according to any one of the first aspect and the optional implementations of the first aspect. Details are not described again.

According to a fourth aspect, a computer program product is provided. When the computer program product is run on a computer, the computer is enabled to perform the method according to any one of the first aspect and the optional implementations of the first aspect.

According to a fifth aspect, an embodiment of this application provides a chip system. The chip system includes a processor and may further include a memory and/or a communication interface, and is configured to implement the method according to any one of the first aspect and the optional implementations of the first aspect. The memory is configured to store a program or instructions. The communication interface is configured to provide an information or data input/output function for the processor. The chip system may include a chip, or may include a chip and another discrete component.

According to a sixth aspect, a computer storage medium is provided. The computer storage medium stores instructions. When the instructions are run on a computer, the computer is enabled to perform the method according to any one of the first aspect and the optional implementations of the first aspect.

According to a seventh aspect, a system is provided. The system includes at least one sensor and a data association apparatus. The data association apparatus is configured to implement the method according to any one of the first aspect and the optional implementations of the first aspect.

**BRIEF DESCRIPTION OF DRAWINGS**

FIG. 1 is a schematic diagram of an existing data association;
FIG. 2 is a schematic diagram of a system architecture according to an embodiment of this application;
FIG. 3 is a schematic diagram of measurement data according to an embodiment of this application;
FIG. 4 is a schematic diagram of measurement data according to an embodiment of this application;
FIG. 5 is a schematic flowchart of a data association method according to an embodiment of this application;
FIG. 6 is a schematic flowchart of a data association method according to an embodiment of this application;
FIG. 7 is a schematic flowchart of a data association method according to an embodiment of this application;
FIG. 8 is a schematic diagram of a structure of a data association apparatus according to an embodiment of this application; and
FIG. 9 is a schematic diagram of a structure of a data association apparatus according to an embodiment of this application.

## DESCRIPTION OF EMBODIMENTS

The following further describes specific embodiments of this application in detail with reference to accompanying drawings.

Embodiments of this application provide a data association method and apparatus, to help accurately determine associated measurement data.

To better understand embodiments of this application, the following describes a system architecture to which embodiments of this application are applicable.

FIG. 2 is a schematic diagram of a system architecture according to an embodiment of this application. As shown in FIG. 2, the system architecture includes a sensor platform. At least one sensor is configured on the sensor platform. The system architecture further includes a data association apparatus. The data association apparatus may be deployed on the sensor platform, that is, the data association apparatus may be integrated with the sensor platform. Alternatively, the data association apparatus may be deployed outside the sensor platform, and the data association apparatus communicates with the sensor platform by using a wireless network. A sensor may be deployed inside or outside the data association apparatus. FIG. 2 uses an example in which the data association apparatus is deployed on the sensor platform, and the sensor is deployed outside the data association apparatus.

The sensor platform may be a mobile device. For example, the sensor platform may be an in-vehicle platform, such as a car, a motorcycle, or a bicycle. Alternatively, the sensor platform may be a ship-borne platform, such as a ship, a steamer, or a motorboat. Alternatively, the sensor platform may be an airborne platform, such as an unmanned aerial vehicle, a helicopter, a jet aircraft, or a balloon. Alternatively, the sensor platform may be a satellite-borne platform, for example, a satellite.

The at least one sensor on the sensor platform may include a radar sensor, for example, a millimeter wave radar or a laser radar. Alternatively, the sensor may be a sonar or ultrasonic sensor. Alternatively, the sensor may be a direction finding sensor having a frequency shift measurement capability. The direction finding sensor obtains radial velocity information by measuring a frequency shift of a received signal relative to a known frequency. Alternatively, the sensor may be a visual sensor or an imaging sensor, such as a camera lens, a camera, or an imaging radar such as a laser radar and a synthetic aperture radar. The visual sensor or the imaging sensor can obtain a motion velocity vector or a motion velocity component of a target, such as a longitudinal velocity component, a radial velocity component, or range rate measurement data, based on a scale change of the target on an image plane. Further, optionally, the at least one sensor may further include at least one camera apparatus.

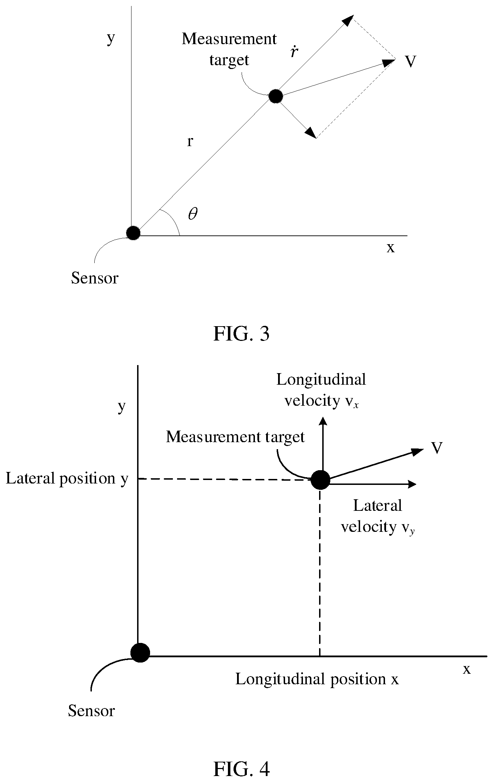

The sensor can perform measurement on a surrounding target (for example, a target stationary relative to a reference system or a target moving relative to the reference system, an obstacle, or a building), to obtain measurement data of the surrounding target. The measurement data includes position measurement data and velocity measurement data. In an example of a radar, measurement data provided by the radar may include one or more of a range r of a target relative to the sensor, an azimuth $\theta$ of the target relative to the sensor, a pitch angle $\varphi$ of the target relative to the sensor, and a radial velocity $\dot{r}$ of the target relative to the sensor. As shown in FIG. 3, for example, the measurement data provided by the radar includes the range r, the azimuth $\theta$, and the radial velocity $\dot{r}$. The range r of the target relative to the sensor, the azimuth $\theta$ of the target relative to the sensor, and the pitch angle $\varphi$ of the target relative to the sensor belong to position measurement data, and the radial velocity $\dot{r}$ of the target relative to the sensor belongs to velocity measurement data.

In another example of a camera or a camera lens, measurement data provided by the camera or the camera lens may include one or more of a longitudinal range or longitudinal position x of a target relative to a sensor, a lateral range or lateral position y of the target relative to the sensor, a longitudinal velocity or range rate $v_x$ of the target relative to the sensor, and a lateral velocity or range rate $v_y$ of the target relative to the sensor. As shown in FIG. 4, for example, the measurement data provided by the camera or the camera lens includes the longitudinal position x, the lateral position y, the longitudinal velocity $v_x$, and the lateral velocity $v_y$. The longitudinal range or longitudinal position x of the target relative to the sensor and the lateral range or lateral position y of the target relative to the sensor belong to position measurement data, and the

longitudinal velocity $v_x$ or lateral velocity $v_y$ of the target relative to the sensor belongs to velocity measurement data. Specifically, the longitudinal velocity $v_x$ or the lateral velocity $v_y$ may be obtained based on an optical flow method by using a relationship between an image plane and a horizontal plane of the camera. In addition, the longitudinal velocity or the lateral velocity may also be obtained based on a scale change of the target on the image plane by using the relationship between the image plane and the horizontal plane of the camera. Details are not described herein.

It should be further noted that physical composition of the sensor herein may be one or more physical sensors. For example, each of the one or more physical sensors may separately measure position measurement data and velocity measurement data, or may derive position measurement data and velocity measurement data from measurement data of the one or more physical sensors. This is not limited herein.

A system to which this application is applied may be a sensor system, a fusion perception system, or a planning/control system integrated with the foregoing systems, such as an assisted driving or autonomous driving system.

The following further describes the data association method and apparatus provided in this application.

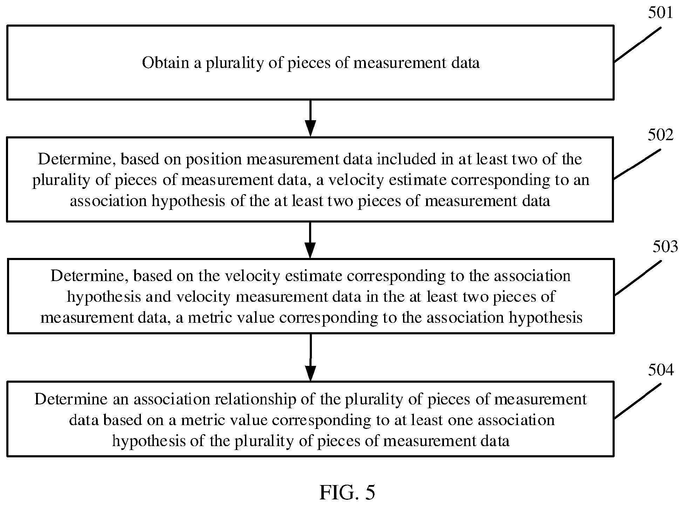

FIG. 5 is a schematic flowchart of a data association method according to an embodiment of this application. The method may be performed by a sensor system, a fusion perception system, or a planning/control system integrated with the foregoing systems, such as an assisted driving or autonomous driving system. Alternatively, the method may be performed by software or hardware (for example, a data association apparatus). Different execution steps may be implemented in a centralized manner or in a distributed manner. The method may alternatively be performed by a chip system. The chip system includes at least one processor and a communication interface or a memory. The memory is configured to store a program or instructions. The communication interface is configured to provide an information or data input/output function for the processor. As shown in FIG. 5, the data association method includes the following step 501 to step 504.

501. Obtain a plurality of pieces of measurement data, where each of the plurality of pieces of measurement data includes position measurement data and velocity measurement data. The obtaining step may be understood as local obtaining or receiving.

Specifically, the plurality of pieces of measurement data are measurement data obtained by a local sensor through detection, or may be measurement data received from a remote sensor over a data link.

The plurality of pieces of measurement data include measurement data at least two moments, and measurement data at each moment may include one or more pieces of measurement data. For example, the plurality of pieces of measurement data may include at least two frames of measurement data. Different frames of measurement data come from different moments, and a same frame of measurement data comes from a same moment. Each frame of measurement data may be considered as one "snapshot" of an object or a target in an ambient environment. When a radar or sonar sensor is used as an example, the sensor may transmit a signal periodically or aperiodically and obtain measurement data from a received echo signal. For example, the signal transmitted may be a linear frequency modulation signal. Distance information of the target may be obtained based on a delay of the echo signal. A radial velocity measurement value of a target relative to the sensor may be obtained based on phase differences between a plurality of echo signals. An angle measurement value of the target relative to the sensor may be obtained based on a plurality of transmit and/or receive antenna array geometries of the sensor. In addition, the sensor may also be a passive sensor, and passively receives a signal within a period of time to obtain the angle measurement value of the target relative to the sensor. In addition, an offset of a frequency of a received signal relative to a reference frequency may also be measured to obtain the radial velocity measurement value of the target. The sensor may perform periodic measurement on the surrounding target with a fixed time length as a cycle, or may perform triggered measurement on a specified area based on a specified time window. Regardless of periodic measurement or triggered measurement, the sensor can obtain a plurality of frames of measurement data, and each frame of measurement data may include a plurality of pieces of measurement data.

For example, the plurality of pieces of measurement data in step 501 include measurement data at two moments. The plurality of pieces of measurement data in step 501 include measurement data $Z_{i,k-1}$ ($i = 1, 2, ...,$ and $N_{k-1}$) obtained by the sensor through measurement at a moment $t_{k-1}$, and include measurement data $Z_{i,k}$ ($i = 1, 2, ...,$ and $N_k$) obtained by the sensor through measurement at a moment $t_k$. $N_{k-1}$ and $N_k$ are quantities of pieces of the measurement data obtained by the sensor at the moment $t_{k-1}$ and the moment $t_k$, respectively. For another example, the plurality of pieces of measurement data in step 501 include measurement data at three moments. The plurality of pieces of measurement data in step 501 include measurement data $Z_{i,k-1}$ ($i = 1, 2, ...,$ and $N_{k-1}$), measurement data $Z_{i,k}$ ($i = 1, 2, ...,$ and $N_k$), and measurement data $Z_{i,k+1}$ ($i = 1, 2, ...,$ and $N_{k+1}$) that are obtained by the sensor at the moment $t_{k-1}$, the moment $t_k$, and a moment $t_{k+1}$, respectively.

Optionally, the plurality of pieces of measurement data in step 501 come from at least two sensors.

Further, optionally, measurement data at different moments in the plurality of pieces of measurement data in step 501 comes from different sensors. For example, the plurality of pieces of measurement data in step 501 include measurement data $Z_{s1,i,k-1}$ ($i = 1, 2, ...,$ and $N_{s1,k-1}$) obtained by a sensor $s_1$ through measurement at the moment $t_{k-1}$ and include measurement data $Z_{s2,i,k}$ ($i = 1, 2, ...,$ and $N_{s2,k}$) obtained by a sensor $s_2$ through measurement at the moment $t_k$. $N_{s1,k-1}$ and $N_{s2,k}$ are respectively a quantity of pieces of the measurement data obtained by the sensor $s_1$ at the moment

$t_{k-1}$ and a quantity of pieces of the measurement data obtained by the sensor $s_2$ at the moment $t_k$. For another example, the plurality of pieces of measurement data in step 501 include measurement data $Z_{s1,i,k-1}$ ($i$ = 1, 2, ..., and $N_{s1,k-1}$) obtained by a sensor $s_1$ through measurement at the moment $t_{k-1}$, measurement data $Z_{s2,i,k}$ ($i$ = 1, 2, ..., and $N_{s2,k-1}$) obtained by a sensor $s_2$ through measurement at the moment $t_k$, and measurement data $Z_{s3,i,k}$ ($i$ = 1, 2, ..., and $N_{s3,k-1}$) obtained by a sensor $s_3$ through measurement at the moment $t_{k+1}$. $N_{s1,k-1}$, $N_{s2,k}$, and $N_{s3,k-1}$ are respectively a quantity of pieces of the measurement data obtained by the sensor $s_1$ at the moment $t_{k-1}$, a quantity of pieces of the measurement data obtained by the sensor $s_2$ at the moment $t_k$, and a quantity of pieces of the measurement data obtained by the sensor $s_3$ at the moment $t_{k+1}$.

Alternatively, measurement data at a same moment may come from different sensors. For example, the plurality of pieces of measurement data in step 501 include measurement data at the moment $t_{k-1}$ and measurement data at the moment $t_k$. The measurement data at the moment $t_{k-1}$ may include measurement data $Z_{s1,i,k-1}$ ($i$ = 1, 2, ..., and $N_{s1,k-1}$) obtained by a sensor $s_1$ through measurement at the moment $t_{k-1}$ and measurement data $Z_{s2,i,k-1}$ ($i$ = 1, 2, ..., and $N_{s2,k-1}$) obtained by a sensor $s_2$ through measurement at the moment $t_{k-1}$. $N_{s1,k-1}$ and $N_{s2,k-1}$ are respectively a quantity of pieces of the measurement data obtained by the sensor $s_1$ at the moment $t_{k-1}$ and a quantity of pieces of the measurement data obtained by the sensor $s_2$ at the moment $t_{k-1}$. The measurement data at the moment $t_k$ includes measurement data $Z_{s3,i,k}$ ($i$ = 1, 2, ..., and $N_{s3,k}$) obtained by a sensor $s_3$ through measurement at the moment $t_k$ and measurement data $Z_{s4,i,k}$ ($i$ = 1, 2, ..., and $N_{s4,k}$) obtained by a sensor $s_4$ through measurement at the moment $t_k$. $N_{s3,k}$ and $N_{s4,k}$ are respectively a quantity of pieces of the measurement data obtained by the sensor $s_3$ at the moment $t_k$ and a quantity of pieces of the measurement data obtained by the sensor $s_4$ at the moment $t_k$. The sensor $s_3$ and the sensor $s_4$ may be the same as or different from the sensor $s_1$ and the sensor $s_2$.

The position measurement data may include one or more of a range r of a target relative to a sensor, an azimuth $\theta$ of the target relative to the sensor, a pitch angle $\varphi$ of the target relative to the sensor, and the like. Alternatively, the position measurement data may include one or more of rectangular coordinate positions x, y, and z of a target relative to a sensor. The velocity measurement data may include a radial velocity $\dot{r}$ of a target relative to a sensor, a longitudinal velocity component $\dot{x}$ of the target, a lateral velocity component $\dot{y}$ of the target, a projected component of a velocity vector of the target in a specific direction, and/or the like. Alternatively, the position measurement data and the velocity measurement data may further be other data obtained by a sensor through measurement. This is not limited in this embodiment of this application.

502. Determine, based on position measurement data included in at least two of the plurality of pieces of measurement data, a velocity estimate corresponding to an association hypothesis of the at least two pieces of measurement data.

503. Determine, based on the velocity estimate corresponding to the association hypothesis and velocity measurement data in the at least two pieces of measurement data, a metric value corresponding to the association hypothesis. For an explanation of the metric value, refer to the following description.

Herein, it should be noted that, steps 502 and 503 may alternatively be combined into one step. To be specific, the velocity estimate corresponding to the association hypothesis is determined based on the position measurement data and the velocity measurement data that are included in the at least two of the plurality of pieces of measurement data. Herein, steps 502 and 503 are distinguished and described for clearer description of the method procedure.

A metric value corresponding to at least one association hypothesis may be determined based on the plurality of pieces of measurement data. A data association relationship is determined from the plurality of pieces of measurement data based on the metric value corresponding to the at least one association hypothesis. A manner of determining a metric value corresponding to one association hypothesis is specifically: determining, based on position measurement data included in at least two of the plurality of pieces of measurement data, a velocity estimate corresponding to an association hypothesis of the at least two pieces of measurement data. A metric value corresponding to the association hypothesis is determined based on the velocity estimate corresponding to the association hypothesis and velocity measurement data in the at least two pieces of measurement data. Same practice applies to determining a metric value corresponding to another association hypothesis.

One or more association hypotheses may be determined from the plurality of pieces of obtained measurement data. An association hypothesis refers to a hypothetical data association. Each association hypothesis corresponds to at least two pieces of measurement data. It is assumed that the at least two pieces of measurement data corresponding to the association hypothesis are in an association relationship. The at least two pieces of measurement data come from at least two moments. That is, measurement data corresponding to each association hypothesis comes from at least two moments.

For example, the plurality of pieces of measurement data in step 501 may include measurement data at two moments, where one association hypothesis corresponds to two pieces of measurement data, and the two pieces of measurement data respectively come from the two moments. The plurality of pieces of measurement data in step 501 include $N_{k-1}$ pieces of measurement data obtained by a sensor through measurement at the moment $t_{k-1}$ and $N_k$ pieces of measurement data obtained by the sensor through measurement at the moment $t_k$.

Specifically, an index set of the $N_{k-1}$ pieces of measurement data at the moment $t_{k-1}$ may be $M_1 = \{1, 2, ..., N_{k-1}\}$, and an index set of the $N_k$ pieces of measurement data at the moment $t_k$ may be $M_2 = \{1, 2, ..., N_k\}$. An association hypothesis set is A, and A may be a set of all possible association hypotheses of the measurement data.

That is, $A = M_1 \times M_2 = \{(i_1, i_2) | i_1 \in M_1, i_2 \in M_2\}$. The association hypothesis set A may alternatively be a subset of $M_1 \times M_2$, where $M_1 \times M_2$ represents a direct product of the sets $M_1$ and $M_2$. $i_1$ is an index or a reference sign of the measurement data at the moment $t_{k-1}$, and $i_2$ is an index or a reference sign of the measurement data at the moment $t_k$.

For an association hypothesis in the association hypothesis set A, a velocity estimate corresponding to the association hypothesis may be obtained based on position measurement data corresponding to the association hypothesis. For example, $M_1$ includes indexes of measurement data 1 and measurement data 2, and $M_2$ includes indexes of measurement data 3 and measurement data 4. For the foregoing measurement data, there may be four association hypotheses, which are respectively: association hypothesis 1 between measurement data 1 and measurement data 3; association hypothesis 2 between measurement data 1 and measurement data 4; association hypothesis 3 between measurement data 2 and measurement data 3; and association hypothesis 4 between measurement data 3 and measurement data 4. Each association hypothesis corresponds to two pieces of measurement data from different moments. A velocity estimate corresponding to association hypothesis 1 is determined based on position measurement data included in measurement data 1 and position measurement data included in measurement data 3. A velocity estimate corresponding to association hypothesis 2 is determined based on the position measurement data included in measurement data 1 and position measurement data included in measurement data 4. A velocity estimate corresponding to association hypothesis 3 is determined based on position measurement data included in measurement data 2 and the position measurement data included in measurement data 3. A velocity estimate corresponding to association hypothesis 4 is determined based on the position measurement data included in measurement data 3 and the position measurement data included in measurement data 4.

Further, a metric value corresponding to association hypothesis 1 is determined based on the velocity estimate corresponding to association hypothesis 1, velocity measurement data in measurement data 1, and velocity measurement data in measurement data 3. Similarly, a metric value corresponding to association hypothesis 2 may be determined based on the velocity estimate corresponding to association hypothesis 2, the velocity measurement data in measurement data 1, and velocity measurement data in measurement data 4. A metric value corresponding to association hypothesis 3 may be determined based on the velocity estimate corresponding to association hypothesis 3, velocity measurement data in measurement data 2, and the velocity measurement data in measurement data 3. A metric value corresponding to association hypothesis 4 may be determined based on the velocity estimate corresponding to association hypothesis 4, the velocity measurement data in measurement data 2, and the velocity measurement data in measurement data 4.

Associated measurement data is determined from the set A based on the metric values respectively corresponding to association hypothesis 1 to association hypothesis 4.

Alternatively, only metric values corresponding to some of the association hypotheses may be determined. For example, only the metric values respectively corresponding to association hypothesis 1 to association hypothesis 3 are determined. Associated measurement data is determined from association hypothesis 1 to association hypothesis 4 based on the metric values respectively corresponding to association hypothesis 1 to association hypothesis 3.

For another example, the plurality of pieces of measurement data in step 501 may include measurement data at three moments. One association hypothesis corresponds to three pieces of measurement data which come from the three moments. The plurality of pieces of measurement data in step 501 include $N_{k-1}$ pieces of measurement data at the moment $t_{k-1}$, $N_k$ pieces of measurement data at the moment $t_k$, and $N_{k+1}$ pieces of measurement data at the moment $t_{k+1}$. Specifically, an index set of the $N_{k-1}$ pieces of measurement data at the moment $t_{k-1}$ may be $M_1 = \{1, 2, ..., N_{k-1}\}$, an index set of the $N_k$ pieces of measurement data at the moment $t_k$ may be $M_2 = \{1, 2, ..., N_k\}$, and an index set of the $N_{k+1}$ pieces of measurement data at the moment $t_{k+1}$ may be $M_3 = \{1, 2, ..., N_{k+1}\}$. An association hypothesis set is A, and A may be a set of all possible association hypotheses of the measurement data, that is, $A = M_1 \times M_2 \times M_3 = \{(i_1, i_2, i_3) | i_1 \in M_1, i_2 \in M_2, i_3 \in M_3\}$. The association hypothesis set A may alternatively be a subset of $M_1 \times M_2 \times M_3$, where $M_1 \times M_2 \times M_3$ represents a direct product of the sets $M_1$, $M_2$, and $M_3$. $i_1$ is an index or a reference sign of the measurement data measured at the moment $t_{k-1}$, $i_2$ is an index or a reference sign of the measurement data measured at the moment $t_k$, and $i_3$ is an index or a reference sign of the measurement data measured at the moment $t_{k+1}$.

For an association hypothesis in the association hypothesis set A, a velocity estimate corresponding to the association hypothesis may be obtained based on position measurement data corresponding to the association hypothesis. For example, $M_1$ includes indexes of measurement data 1 and measurement data 2, $M_2$ includes indexes of measurement data 3 and measurement data 4, and $M_3$ includes indexes of measurement data 5 and measurement data 6. For the foregoing measurement data, there may be eight association hypotheses, which are respectively: association hypothesis 1 among measurement data 1, measurement data 3, and measurement data 5; association hypothesis 2 among measurement data 1, measurement data 3, and measurement data 6; association hypothesis 3 among measurement data 1, measurement data 4, and measurement data 5; association hypothesis 4 among measurement data 1, measurement data 4, and measurement data 6; association hypothesis 5 among measurement data 2, measurement data 3, and measurement data 5; association hypothesis 6 among measurement data 2, measurement data 3, and measurement data 6; association hypothesis 7 among measurement data 2, measurement data 4, and measurement data 5; and association hypothesis 8 among measurement data 2, measurement data 4, and measurement data 6.

Similarly, metric values corresponding to all or some of the association hypotheses may be determined, and then associated measurement data may be determined from association hypothesis 1 to association hypothesis 8 based on the metric values corresponding to all or some of the association hypotheses.

At least two pieces of measurement data corresponding to each association hypothesis may alternatively come from different sensors. Optionally, at least two pieces of measurement data corresponding to each association hypothesis come from different moments, and may further come from different sensors. For example, the $N_{k-1}$ pieces of measurement data at the moment $t_{k-1}$ come from the sensor $s_1$, the $N_k$ pieces of measurement data at the moment $t_k$ come from the sensor $s_2$, and the $N_{k+1}$ pieces of measurement data at the moment $t_{k+1}$ come from the sensor $s_3$. Alternatively, measurement data corresponding to each association hypothesis at a same moment may also come from different sensors. For example, $N_{k-1,s1}$ of the $N_{k-1}$ pieces of measurement data at the moment $t_{k-1}$ come from the sensor $s_1$, and $N_{k-1,s2}$ of the $N_{k-1}$ pieces of measurement data come from the sensor $s_2$, where $N_{k-1,s1} + N_{k-1,s1} = N_{k-1}$.

In an optional implementation, the velocity estimate may be an estimate of the velocity vector. For example, the velocity estimate may include estimates of components of the velocity vector. The velocity estimate may alternatively include an estimate of a projected component of the velocity vector in one direction or estimates of projected components of the velocity vector in a plurality of directions, and the plurality of directions may be directions perpendicular to each other.

In an optional implementation, the velocity measurement data may be a measured value of a function of the velocity vector or a measured value of a projection of the velocity vector in a specific direction, for example, a radial velocity measured value or a measured value of a component of the velocity vector.

In an optional implementation, the velocity estimate corresponding to the association hypothesis may include one or more of a smoothed velocity estimate, a filtered velocity estimate, and a predicted velocity estimate.

In an implementation, the plurality of pieces of measurement data come from two moments $t_{k-1}$ and $t_k$, and the velocity estimate corresponding to the association hypothesis may include the smoothed velocity estimate and/or the filtered velocity estimate. For example, the smoothed velocity estimate may be a velocity estimate of the target at the moment $t_{k-1}$ that is obtained based on the measurement data at the moments $t_{k-1}$ and $t_k$. For another example, the filtered velocity estimate may be a velocity estimate of the target at the moment $t_k$ that is obtained based on the measurement data at the moments $t_{k-1}$ and $t_k$.

In another implementation, the plurality of pieces of measurement data come from three moments $t_{k-1}$, $t_k$, and $t_{k+1}$, and the velocity estimate corresponding to the association hypothesis may be a smoothed velocity estimate and/or a filtered velocity estimate and/or a predicted velocity estimate. The smoothed velocity estimate may be a velocity estimate of the target at the moment $t_{k-1}$ that is obtained based on the measurement data at the moments $t_{k-1}$ and $t_k$. Alternatively, the smoothed velocity estimate may be a velocity estimate of the target at the moment $t_{k-1}$ that is obtained based on the measurement data at the moments $t_{k-1}$ and $t_{k+1}$. Alternatively, the smoothed velocity estimate may be a velocity estimate of the target at the moment $t_k$ that is obtained based on the measurement data at the moments $t_k$ and $t_{k+1}$. The filtered velocity estimate may be a velocity estimate of the target at the moment $t_k$ that is obtained based on the measurement data at the moments $t_{k-1}$ and $t_k$, or may be a velocity estimate of the target at the moment $t_{k+1}$ that is obtained based on the measurement data at the moments $t_{k-1}$, $t_k$, and $t_{k+1}$. The predicted velocity estimate may be a velocity estimate of the target at the moment $t_{k+1}$ that is obtained based on the measurement data at the moments $t_{k-1}$ and $t_k$.

In an optional implementation, the smoothed velocity estimate includes a smoothed estimate of each component of the velocity vector, for example, may be a smoothed estimate of a component of the velocity vector on each coordinate axis. Alternatively, the smoothed velocity estimate may be a smoothed estimate of a projected velocity component. The projected velocity component includes a radial velocity and/or a lateral velocity and/or a longitudinal velocity. The filtered velocity estimate includes a filtered estimate of each component of the velocity vector, for example, may be a filtered estimate of a component of the velocity vector on each coordinate axis. Alternatively, the filtered velocity estimate may be a filtered estimate of the projected velocity component. The predicted velocity estimate includes a predicted estimate of each component of the velocity vector, for example, may be a predicted estimate of a component of the velocity vector on each coordinate axis. Alternatively, the predicted velocity estimate may be a predicted estimate of the projected velocity component.

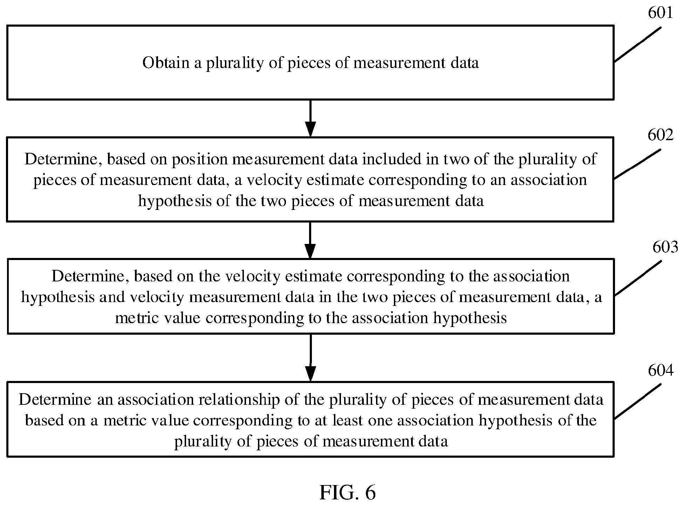

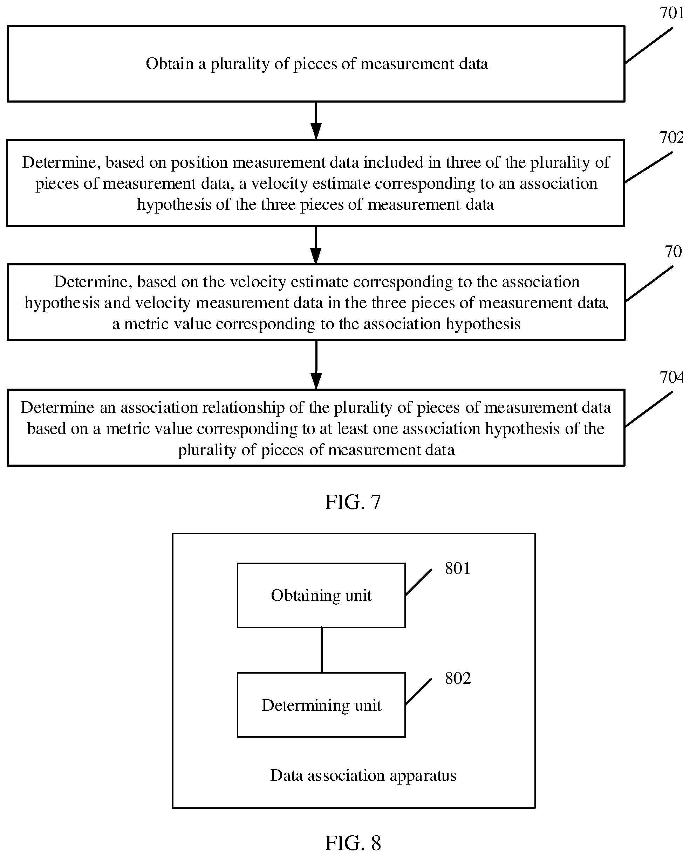

The plurality of pieces of obtained measurement data may come from the two moments $t_{k-1}$ and $t_k$. For details about how to determine the velocity estimate corresponding to the association hypothesis in this case, refer to a description in an embodiment corresponding to FIG. 6 below. Details are not described herein. The plurality of pieces of obtained measurement data may come from the three moments $t_{k-1}$, $t_k$, and $t_{k+1}$. For details about how to determine the velocity estimate corresponding to the association hypothesis in this case, refer to a description in an embodiment corresponding to FIG. 7 below. Details are not described herein.

In an optional implementation, the velocity estimate corresponding to the association hypothesis may include a smoothed estimate, a filtered estimate, or a predicted estimate of each component of the velocity vector. A smoothed estimate, a filtered estimate, or a predicted estimate of the projected velocity component may be obtained based on the velocity estimate. For example, at least one of a smoothed estimate of a radial velocity, a smoothed estimate of a lateral velocity, a filtered estimate of the radial velocity, a filtered estimate of the lateral velocity, a predicted estimate of the radial velocity, and a predicted estimate of the lateral velocity may be obtained based on the velocity estimate. The metric value corresponding to the association hypothesis is determined based on at least one of the smoothed estimate of the radial velocity, the smoothed estimate of the lateral velocity, the filtered estimate of the radial velocity, the filtered estimate of the lateral velocity, the predicted estimate of the radial velocity, and the predicted estimate of the lateral velocity and at least one of a radial velocity measured value at the moment $t_{k-1}$ that corresponds to the association hypothesis, a radial velocity measured value at the moment $t_k$ that corresponds to the association hypothesis, a radial velocity measured value at the moment $t_{k+1}$ that corresponds to the association hypothesis, a lateral velocity measured value at the moment $t_{k-1}$ that corresponds to the association hypothesis, a lateral velocity measured value at the moment $t_k$ that corresponds to the association hypothesis, and a lateral velocity measured value at the moment $t_{k+1}$ that corresponds to the association hypothesis.

In an optional implementation, the metric value corresponding to the association hypothesis may be a likelihood function (likelihood function) value, a log-likelihood function (log-likelihood function) value, or a range value. The range value may be a Mahalanobis distance (mahalanobis distance) or a Euclidean distance (euclidean distance). Optionally, specifically, the metric value corresponding to the association hypothesis may be obtained based on a probability density function of the velocity estimate and the radial velocity measured value that correspond to the association hypothesis. The probability density function may be a probability density function of Gaussian distribution (gaussian distribution), a density function of uniform distribution, a density function of exponential distribution, a density function of Poisson distribution (poisson distribution), or the like.

The plurality of pieces of obtained measurement data may come from the two moments $t_{k-1}$ and $t_k$. For details about how to determine the metric value corresponding to the association hypothesis based on the velocity estimate corresponding to the association hypothesis, refer to the description corresponding to FIG. 6 below. The plurality of pieces of obtained measurement data may come from the three moments $t_{k-1}$, $t_k$, and $t_{k+1}$. For details about how to determine the metric value corresponding to the association hypothesis based on the velocity estimate corresponding to the association hypothesis, refer to the description corresponding to FIG. 7 below.

In an optional implementation, a specific implementation of determining, based on the velocity estimate corresponding to the association hypothesis and at least one piece of velocity measurement data in the at least two pieces of measurement data, the metric value corresponding to the association hypothesis is: determining, based on the velocity estimate corresponding to the association hypothesis and the at least one piece of velocity measurement data in the at least two pieces of measurement data, whether the association hypothesis is a valid association hypothesis; and for a valid association hypothesis, determining the metric value corresponding to the association hypothesis. Based on this implementation, an invalid association hypothesis can be filtered out, and this helps reduce a subsequent calculation amount.

Optionally, an invalid association hypothesis may be deleted from the foregoing association hypothesis set A, so as to ensure that all association hypotheses included in the association hypothesis set A are valid association hypotheses. The data association apparatus may determine an association relationship of measurement data based on a metric value corresponding to an association hypothesis in the association hypothesis set A.

For example, a range value may be determined based on the velocity estimate corresponding to the association hypothesis and the at least one piece of velocity measurement data in the at least two pieces of measurement data. The range value may be a Mahalanobis distance or a Euclidean distance. If the range metric value is less than or equal to a preset threshold, the association hypothesis is a valid association hypothesis. Otherwise, the association hypothesis is an invalid association hypothesis. In other words, that the association hypothesis is valid means: the range value determined based on the velocity estimate corresponding to the association hypothesis and the at least one piece of velocity measurement data in the at least two pieces of measurement data is less than or equal to the preset threshold. In an implementation, for the foregoing valid association hypothesis, the range value may be determined as the metric value corresponding to the association hypothesis.

For another example, a likelihood function value or a log-likelihood function value may be determined based on the velocity estimate corresponding to the association hypothesis and the at least one piece of velocity measurement data in the at least two pieces of measurement data. If the likelihood function value or the log-likelihood function value is less than or equal to a preset threshold, the association hypothesis is a valid association hypothesis. Otherwise, the association hypothesis is an invalid association hypothesis. In other words, that the association hypothesis is valid means: the likelihood function value or the log-likelihood function value that is determined based on the velocity estimate corresponding to the association hypothesis and the at least one piece of velocity measurement data in the at least two pieces of measurement data is less than or equal to the preset threshold. In an implementation, for the foregoing valid association hypothesis, the likelihood function value or the log-likelihood function value may be used as the metric value corresponding to the association hypothesis.

Alternatively, whether the association hypothesis is a valid association hypothesis may be further determined in another manner. This is not limited in this embodiment of this application. For a valid association hypothesis, the step of determining a metric value corresponding to the association hypothesis may continue to be performed.

The plurality of pieces of obtained measurement data may come from the two moments $t_{k-1}$ and $t_k$. For a specific implementation of determining a valid association hypothesis, refer to the description corresponding to FIG. 6 below. The plurality of pieces of obtained measurement data may come from the three moments $t_{k-1}$, $t_k$, and $t_{k+1}$. For a specific implementation of determining a valid association hypothesis, refer to the description corresponding to FIG. 7 below.

504. Determine an association relationship of the plurality of pieces of measurement data based on a metric value corresponding to at least one association hypothesis of the plurality of pieces of measurement data. Each of the at least one association hypothesis of the plurality of pieces of measurement data corresponds to at least two of the plurality of pieces of measurement data.

That measurement data has an association relationship means: the measurement data comes from a same target. For example, if there is an association relationship between the $i_1$<sup>th</sup> piece of measurement data at the moment $t_{k-1}$ and the $i_2$<sup>th</sup> piece of measurement data at the moment $t_k$, it indicates that the $i_1$<sup>th</sup> piece of measurement data at the moment $t_{k-1}$ and the $i_2$<sup>th</sup> piece of measurement data at the moment $t_k$ come from a same target.

In an optional implementation, a specific implementation of the determining an association relationship of the plurality of pieces of measurement data based on a metric value corresponding to at least one association hypothesis of the plurality of pieces of measurement data may be: determining a maximum-likelihood association hypothesis or a global nearest-neighbor association hypothesis based on the metric value corresponding to the at least one association hypothesis of the plurality of pieces of measurement data; and determining the association relationship of the plurality of pieces of measurement data based on the maximum-likelihood association hypothesis or the global nearest-neighbor association hypothesis. The maximum-likelihood association hypothesis is an association hypothesis that corresponds to the plurality of pieces of measurement data and that has a maximum likelihood function value. The global nearest-neighbor association hypothesis is an association hypothesis that corresponds to the plurality of pieces of measurement data and that has a minimum global range. The global range may be defined based on a Mahalanobis distance, a Euclidean distance, or the like. This is not limited herein. Optionally, the global range corresponding to the plurality of pieces of measurement data may be a sum of ranges of a plurality of association hypotheses corresponding to the plurality of pieces of measurement data. Each of the association hypotheses corresponds to at least two pieces of measurement data included in the plurality of pieces of measurement data. Optionally, the maximum-likelihood association hypothesis may be obtained based on a maximum weight matching problem and a generalized assignment problem. The global nearest-neighbor association hypothesis may be obtained based on a generalized assignment problem. The association relationship of the plurality of pieces of measurement data may be accurately determined based on the maximum-likelihood association hypothesis or the global nearest-neighbor association hypothesis. The maximum weight matching problem and the generalized assignment problem are classical problems in existing theories and algorithms for combinatorial optimization or optimization, and may have different forms. A specific form herein is described below.

In an optional implementation, a specific implementation of the determining an association relationship of the plurality of pieces of measurement data based on a metric value corresponding to at least one association hypothesis of the plurality of pieces of measurement data may be: determining the association relationship of the plurality of pieces of measurement data based on the metric value corresponding to the at least one association hypothesis of the plurality of pieces of measurement data and according to a first constraint rule. Optionally, the first constraint rule is that one piece of measurement data comes from one target, and the one target generates one or more pieces of measurement data. Optionally, the first constraint rule may be specifically that one piece of measurement data comes from one true target or one false target. The false target may be a false alarm, a clutter, or the like generated by a sensor. Each true target may generate one or more pieces of measurement data, or may encounter missing detection. The association relationship of the plurality of pieces of measurement data may be more accurately determined according to the first constraint rule.

The plurality of pieces of obtained measurement data may come from the two moments $t_{k-1}$ and $t_k$. For details about how to determine the association relationship of the plurality of pieces of measurement data based on the metric value corresponding to the at least one association hypothesis, refer to the description corresponding to FIG. 6 below. The plurality of pieces of obtained measurement data come from the three moments $t_{k-1}$, $t_k$, and $t_{k+1}$. For details about how to determine the association relationship of the plurality of pieces of measurement data based on the metric value corresponding to the at least one association hypothesis, refer to the description corresponding to FIG. 7 below.

It can be learned that, by implementing the method described in FIG. 5, the metric value corresponding to the at least one association hypothesis can be determined by using the plurality of pieces of measurement data measured by the sensor, and further the association relationship of the plurality of pieces of measurement data can be determined based on the metric value corresponding to the at least one association hypothesis. This avoids using a prior velocity value with an excessively large error to determine the association relationship of the plurality of pieces of measurement data, thereby improving accuracy of determining the association relationship of the plurality of pieces of measurement data.

FIG. 6 is a schematic flowchart of a data association method according to an embodiment of this application. The method may be performed by a sensor system, a fusion perception system, or a planning/control system integrated with the foregoing systems, such as an assisted driving or autonomous driving system. Alternatively, the method may be performed by software or hardware (for example, a data association apparatus). Different execution steps may be implemented in a centralized manner or in a distributed manner. The method may alternatively be performed by a chip system. The chip system includes at least one processor and a communication interface or a memory. The memory is configured to store a program or instructions. The communication interface is configured to provide an information or data input/output function for the processor. As shown in FIG. 6, the data association method includes the following step 601 to step 604.

601. Obtain a plurality of pieces of measurement data.

The plurality of pieces of measurement data include measurement data at two moments.

602. Determine, based on position measurement data included in two of the plurality of pieces of measurement data, a velocity estimate corresponding to an association hypothesis of the two pieces of measurement data.

603. Determine, based on the velocity estimate corresponding to the association hypothesis and velocity measurement data in the two pieces of measurement data, a metric value corresponding to the association hypothesis.

Herein, it should be noted that, steps 602 and 603 may alternatively be combined into one step. To be specific, the metric value corresponding to the association hypothesis is determined based on the position measurement data and the velocity measurement data that are included in the two of the plurality of pieces of measurement data. The division of steps 602 and 603 in this application is for ease of description, and whether actual implementation is performed in two steps or performed based on a single step is not specifically limited.

One or more association hypotheses may be determined from the plurality of pieces of obtained measurement data. Each association hypothesis corresponds to two pieces of measurement data. The two pieces of measurement data come from two moments. That is, measurement data corresponding to each association hypothesis comes from two moments.

For example, the plurality of pieces of measurement data in step 601 include $N_{k-1}$ pieces of measurement data obtained by a sensor through measurement at a moment $t_{k-1}$ and $N_k$ pieces of measurement data obtained by the sensor through measurement at a moment $t_k$. An index set of the $N_{k-1}$ pieces of measurement data at the moment $t_{k-1}$ may be $M_1 = \{1, 2, ..., N_{k-1}\}$, and an index set of the $N_k$ pieces of measurement data at the moment $t_k$ may be $M_2 = \{1, 2, ..., N_k\}$. An association hypothesis set is A, and A may be a set of all possible association hypotheses of the measurement data. That is, $A = M_1 \times M_2 = \{(i_1, i_2) | i_1 \in M_1, i_2 \in M_2\}$. The association hypothesis set A may alternatively be a subset of $M_1 \times M_2$, where $M_1 \times M_2$ represents a direct product of the sets $M_1$ and $M_2$. $i_1$ is an index or a reference sign of the measurement data at the moment $t_{k-1}$, and $i_2$ is an index or a reference sign of the measurement data at the moment $t_k$. That the association hypothesis set is a set A is used as an example. A velocity estimate corresponding to each association hypothesis in the set A may be determined. Metric values corresponding to the all or some of the association hypotheses are determined based on the determined velocity estimates, and then associated measurement data is determined from the set A based on the metric values corresponding to the all or some of the association hypotheses.

Optionally, the position measurement data included in the two pieces of measurement data corresponding to the association hypothesis may be polar coordinate position measurement data, spherical coordinate position measurement data, or rectangular coordinate position measurement data. Optionally, the polar coordinate position measurement data or the spherical coordinate position measurement data may be converted into the rectangular coordinate position measurement data. The velocity estimate corresponding to the association hypothesis can be determined based on the rectangular coordinate position measurement data. A rectangular coordinate position and a rectangular coordinate velocity may be two-dimensional, three-dimensional, or higher-dimensional vectors.

1. The rectangular coordinate position measurement data is a two-dimensional vector.

For example, the association hypothesis is an association hypothesis $(i_1, i_2)$. A rectangular coordinate position vector $(x_{m,i1,k-1}, y_{m,i1,k-1})$ may be obtained based on the $i_1$ th piece of polar coordinate position measurement data at the moment $t_{k-1}$. A rectangular coordinate position vector $(x_{m,i2,k}, y_{m,i2,k})$ may be obtained based on the $i_2$ th piece of polar coordinate position measurement data at the moment $t_k$. $x_{m,i1,k-1}$ and $x_{m,i2,k}$ are both position components on an X axis. $y_{m,i1,k-1}$ and $y_{m,i2,k}$ are both position components on a Y axis.

For example, position measurement data of a polar coordinate position that is measured by a radar, sonar, or ultrasonic sensor includes a range $r_m$ of a target relative to the sensor and an azimuth $\theta_m$ of the target relative to the sensor. Details are as follows:

$$r_m = r + \tilde{r} \tag{1}$$

$$\theta_m = \theta + \tilde{\theta} \tag{2}$$

$\tilde{r}$ and $\tilde{\theta}$ are respectively measurement errors of the range and the azimuth of the target relative to the sensor, and r and θ are respectively true values of the range and the azimuth of the target relative to the sensor.

The rectangular coordinate position measurement data may be obtained from the polar coordinate position measurement data based on the following formulas:

$$x_m = r_m \cdot \cos\theta_m \tag{3}$$

$$y_m = r_m \cdot \sin\theta_m \tag{4}$$

$(x_m, y_m)$ is a rectangular coordinate position vector.

Alternatively, the rectangular coordinate position measurement data may be obtained from the polar coordinate position measurement data based on the following formulas:

$$x_m = \left(\lambda_\theta^{-1} - \lambda_\theta\right) \cdot r_m \cdot \cos\theta_m \tag{5}$$

$$y_m = \left(\lambda_\theta^{-1} - \lambda_\theta\right) \cdot r_m \cdot \sin\theta_m \tag{6}$$

$\lambda_\theta = e^{-\sigma_\theta^2}$, and $\sigma_\theta^2$ is a variance of the measurement error of the azimuth of the target relative to the sensor.

Based on the rectangular coordinate position vector $(x_{m,i1,k-1}, y_{m,i1,k-1})$ at the moment $t_{k-1}$ and the rectangular coordinate position vector $(x_{m,i2,k}, y_{m,i2,k})$ at the moment $t_k$, the velocity estimate corresponding to the association hypothesis may be obtained by using a least squares method or a two-point difference method. The velocity estimate corresponding to the association hypothesis includes a smoothed velocity estimate ( $\hat{\dot{x}}_{i_1,i_2,k-1|k}$, $\hat{\dot{y}}_{i_1,i_2,k-1|k}$ ) and/or a filtered velocity estimate ( $\hat{\dot{x}}_{i_1,i_2,k|k}$, $\hat{\dot{y}}_{i_1,i_2,k|k}$ ). The smoothed velocity estimate is a velocity estimate at the moment $t_{k-1}$ that is obtained based on the measurement data at the moment $t_{k-1}$ and the measurement data at the moment $t_k$. The filtered velocity estimate is a velocity estimate at the moment $t_k$ that is obtained based on the measurement data at the moment $t_{k-1}$ and the measurement data at the moment $t_k$. For example, details may be as follows:

$$\hat{\dot{x}}_{i_1,i_2,k-1|k} = \frac{x_{m,i_2,k} - x_{m,i_1,k-1}}{T}, \quad \hat{\dot{y}}_{i_1,i_2,k-1|k} = \frac{y_{m,i_2,k} - y_{m,i_1,k-1}}{T}$$

$$\hat{\dot{x}}_{i_1,i_2,k|k} = \frac{x_{m,i_2,k} - x_{m,i_1,k-1}}{T}, \quad \hat{\dot{y}}_{i_1,i_2,k|k} = \frac{y_{m,i_2,k} - y_{m,i_1,k-1}}{T}$$

$T = t_k - t_{k-1}$ is a time interval between the two frames. $\hat{\dot{x}}_{i_1,i_2,k-1|k}$ and $\hat{\dot{x}}_{i_1,i_2,k|k}$ are velocity components on the X axis, and $\hat{\dot{y}}_{i_1,i_2,k-1|k}$ and $\hat{\dot{y}}_{i_1,i_2,k|k}$ are velocity components on the Y axis.

An estimate of a projected velocity component may be obtained based on the velocity estimate corresponding to the association hypothesis. The estimate of the projected velocity component includes a smoothed estimate and/or a filtered estimate. The projected velocity component may be a radial velocity, a lateral velocity, a longitudinal velocity, and/or the like. The metric value corresponding to the association hypothesis is determined based on the estimate of the projected velocity component and the velocity measurement data. The velocity measurement data is a measured value of the projected velocity component. Alternatively, the estimate of the projected velocity component may be determined in another manner instead of using the foregoing velocity estimate.

Alternatively, an estimate of a velocity function may be obtained based on the velocity estimate corresponding to the foregoing association hypothesis. The estimate of the velocity function includes a smoothed estimate and/or a filtered estimate. Then, the metric value corresponding to the association hypothesis is determined based on the estimate of the velocity function and the velocity measurement data. Alternatively, the metric value corresponding to the association hypothesis is directly determined based on the velocity estimate corresponding to the association hypothesis and velocity measured values on the X axis and the Y axis.

The following describes in detail how to determine the estimate of the projected velocity component based on the foregoing velocity estimate, and how to determine, based on the estimate of the projected velocity component, the metric value corresponding to the association hypothesis.

(1) The estimate of the projected velocity component is a smoothed estimate of the radial velocity.

Specifically, the smoothed estimate of the radial velocity is obtained based on the velocity estimate corresponding to the association hypothesis, and the metric value of the association hypothesis is obtained based on the smoothed estimate of the radial velocity and a radial velocity measured value.

A smoothed estimate $\hat{\dot{r}}_{k-1|k}$ of the radial velocity may be obtained based on the smoothed velocity estimate ( $\hat{\dot{x}}_{i_1,i_2,k-1|k}$, $\hat{\dot{y}}_{i_1,i_2,k-1|k}$ ) corresponding to the association hypothesis. In an implementation, the smoothed estimate of the radial velocity may be obtained from the smoothed velocity estimate based on a relationship between the radial velocity and a state vector. For example:

$$\hat{\dot{r}}_{k-1|k} = h\big(\hat{X}_{k-1|k}\big) = \frac{x_{m,i_1,k-1}\cdot\hat{\dot{x}}_{i_1,i_2,k-1|k}+y_{m,i_1,k-1}\cdot\hat{\dot{y}}_{i_1,i_2,k-1|k}}{\hat{r}_{k-1|k}} \tag{7}$$

$\hat{X}_{k-1|k}$ is a smoothed estimate of the state vector. $\hat{X}_{k-1|k}$ includes at least the smoothed velocity estimate ( $\hat{\dot{x}}_{i_1,i_2,k-1|k}$, $\hat{\dot{y}}_{i_1,i_2,k-1|k}$ ). $\hat{X}_{k-1|k}$ may further include the rectangular coordinate position components ($x_{m,i1,k-1}$, $y_{m,i1,k-1}$) determined based on the position measurement data obtained at the moment $t_{k-1}$. $\hat{r}_{k-1|k} = \left(x^2_{m,i_1,k-1}+y^2_{m,i_1,k-1}\right)^{\frac{1}{2}}$ .

The metric value corresponding to the association hypothesis may be determined based on the foregoing smoothed estimate $\hat{\dot{r}}_{k-1|k}$ of the radial velocity and a radial velocity measured value $\dot{r}_{m,i1,k-1}$ at the moment $t_{k-1}$ that corresponds to the association hypothesis. The metric value may be a likelihood function value, a log-likelihood function value, or a range value. The range value may be a Mahalanobis distance or a Euclidean distance.

In an optional implementation, the metric value is a likelihood function value or a log-likelihood function value. The likelihood function value or the log-likelihood function value corresponding to the association hypothesis may be obtained based on a probability density function of the smoothed estimate of the radial velocity and the radial velocity measured value. The probability density function may be a probability density function of Gaussian distribution, a density function of uniform distribution, a density function of exponential distribution, a density function of Poisson distribution, or the like.

For example, a radial velocity measured value in the $i_1$th piece of measurement data at the moment $t_{k-1}$ is $\dot{r}_{m,i1,k-1}$, and a probability density function of the radial velocity measured value $\dot{r}_{m,i1,k-1}$ is a probability density function of Gaussian distribution. In this case, a likelihood function corresponding to the association hypothesis may be as follows:

$$\Lambda\big(\dot{r}_{m,i_1,k-1}\big|\hat{\dot{r}}_{k-1|k}\big) = N\big(\dot{r}_{m,i_1,k-1} - \hat{\dot{r}}_{k-1|k}; 0, S_{\dot{r},i_1,k-1|k}\big) \tag{8}$$

$\dot{r}_{m,i1,k-1}$ and $\hat{\dot{r}}_{k-1|k}$ are as described above. $N\big(\dot{r}_{m,i_1,k-1} - \hat{\dot{r}}_{k-1|k}; 0, S_{\dot{r},i_1,k-1|k}\big)$ is the probability density function of Gaussian distribution, where a mean value is 0, and $S_{\dot{r},i1,k-1|k}$ is a covariance of a difference between $\dot{r}_{m,i1,k-1}$ and $\hat{\dot{r}}_{k-1|k}$ .

$$N\big(\tilde{\dot{r}}_{m,i_1,k-1}; 0, S_{\dot{r},i_1,k-1|k}\big) = \big|2\pi S_{\dot{r},i_1,k-1|k}\big|^{-\frac{1}{2}}exp\left\{-\frac{1}{2}\big(\tilde{\dot{r}}_{m,i_1,k-1}\big)^T S^{-1}_{\dot{r},i,k-1}\big(\tilde{\dot{r}}_{m,i_1,k-1}\big)\right\} \tag{9}$$

$\tilde{\dot{r}}_{m,i_1,k-1}$ is a difference between the radial velocity measured value $\dot{r}_{m,i1,k-1}$ and the smoothed estimate $\hat{\dot{r}}_{k-1|k}$ of the radial velocity.

$$\tilde{\dot{r}}_{m,i_1,k-1} = \dot{r}_{m,i_1,k-1} - \hat{\dot{r}}_{k-1|k} \tag{10}$$

The covariance $S_{\dot{r},i1,k-1|k}$ may be determined based on different methods. For example, the covariance may be obtained based on extended Kalman filtering (EKF), a first-order or multi-order Taylor (Taylor) expansion, particle (Particle) filtering, unscented Kalman filtering (UKF), or another method. For example, the covariance may be expanded based on the extended Kalman filtering (EKF) or the first-order or multi-order Taylor, and the covariance matrix $S_{\dot{r},i1,k-1|k}$ is as follows:

$$S_{\dot{r},i_1,k-1|k} = HP_{k-1|k}H^T + R_{\dot{r},i_1} \tag{11}$$

$P_{k-1|k}$ is a covariance matrix of the smoothed estimate of the state vector, and $R_{\dot{r},i1}$ is a variance of the $i_1{}^{th}$ radial velocity measured value. H is a Jacobi (Jacobi) matrix, and H may be obtained based on the relationship between the radial velocity and the state vector.

For example, a first-order Taylor expansion of the relationship $\dot{r} = h(X)$ between the radial velocity and the state vector around a state vector $X_0$ is as follows:

$$\dot{r} = h(X) = h(X_0) + H \cdot (X - X_0) + o(X - X_0) \tag{12}$$

$o(X - X_0)$ represents a higher-order term of $X - X_0$. H is a Jacobi (Jacobi) matrix corresponding to the function $h(X)$, and H is a function of $X_0$. Specifically, $X_0$ may be the smoothed estimate $\hat{X}_{k-1|k}$ of the state vector at the moment $t_{k-1}$.

$\hat{X}_{k-1|k} = \begin{bmatrix} x_{m,i_1,k-1} & y_{m,i_1,k-1} & \hat{x}_{i_1,i_2,k-1|k} & \hat{y}_{i_1,i_2,k-1|k} S_{n-4} \end{bmatrix}^T$. $S_{n-4}$ represents an (n-4)-dimensional vector, including a state variable other than a position and a velocity, and $n \geq 4$. When $n = 4$, the state vector includes only a position vector and a velocity vector. H may be represented as follows:

$$H = \begin{bmatrix} h_1 & h_2 & h_3 & h_4 & 0_{n-4} \end{bmatrix} \tag{13}$$

$h_1 = \frac{\partial h(X)}{\partial x}$, $h_2 = \frac{\partial h(X)}{\partial y}$, $h_3 = \frac{\partial h(X)}{\partial \dot{x}}$, $h_4 = \frac{\partial h(X)}{\partial \dot{y}}$, and $0_{n-4}$ represents an (n-4)-dimensional vector formed by elements of 0s. In an example in which $X_0$ is the smoothed estimate $\hat{X}_{k-1|k}$ of the state vector at the moment $t_{k-1}$:

$$h_1 = \frac{\hat{y}_{k-1|k}^2 \cdot \hat{x}_{k-1|k}}{\hat{r}_{k-1|k}^3}, \quad h_2 = \frac{\hat{x}_{k-1|k}^2 \cdot \hat{y}_{k-1|k}}{\hat{r}_{k-1|k}^3}, \quad h_3 = \frac{\hat{x}_{k-1|k}}{\hat{r}_{k-1|k}}, \text{ and } h_4 = \frac{\hat{y}_{k-1|k}}{\hat{r}_{k-1|k}}$$

$$\hat{r}_{k-1|k} = \left( x_{m,i_1,k-1}^2 + y_{m,i_1,k-1}^2 \right)^{\frac{1}{2}}.$$

The covariance matrix $P_{k-1|k}$ may have the following form:

$$P_{k-1|k} = \begin{bmatrix} p_{xx} & p_{xy} & p_{x\dot{x}} & p_{x\dot{y}} & P_{(x,y)\cdot(n-4)} \\ p_{yx} & p_{yy} & p_{y\dot{x}} & p_{y\dot{y}} & \\ p_{\dot{x}x} & p_{\dot{x}y} & p_{\dot{x}\dot{x}} & p_{\dot{x}\dot{y}} & P_{(\dot{x},\dot{y})\cdot(n-4)} \\ p_{\dot{y}x} & p_{\dot{y}y} & p_{\dot{y}\dot{x}} & p_{\dot{y}\dot{y}} & \\ P_{(n-4)\cdot(x,y)} & P_{(n-4)\cdot(\dot{x},\dot{y})} & P_{(n-4)\cdot(n-4)} \end{bmatrix} \tag{14}$$

Each element in $P_{k-1|k}$ is a covariance between elements corresponding to the state vector. H includes only 0s except in the first 4 columns. Therefore, $S_{\dot{r},i1,k-1|k}$ can be obtained by calculating only elements in the first 4 rows and the first 4 columns. In an example of the $i_1{}^{th}$ piece of measurement data in the (k-1)$^{th}$ frame and the $i_2{}^{th}$ piece of measurement data in the k$^{th}$ frame (the two pieces of measurement data are associated in the association hypothesis), the foregoing elements may be respectively as follows:

$$p_{xx} = R_{m,i_1,k-1}^{11}, p_{x\dot{x}} = p_{\dot{x}x} = -p_{xx}/T, \quad p_{\dot{x}\dot{x}} = \left( R_{m,i_2,k}^{11} + R_{m,i_1,k-1}^{11} \right)/T^2$$

$$p_{yy} = R_{m,i_1,k-1}^{22}, p_{y\dot{y}} = p_{\dot{y}y} = -p_{yy}/T, \quad p_{\dot{y}\dot{y}} = \left( R_{m,i_2,k}^{22} + R_{m,i_1,k-1}^{22} \right)/T^2$$

$$p_{xy} = p_{yx} = R_{m,i_1,k-1}^{12}, p_{x\dot{y}} = p_{\dot{x}y} = p_{y\dot{x}} = p_{\dot{y}x} = -p_{xy}/T$$

$$p_{\dot{x}\dot{y}} = p_{\dot{y}\dot{x}} = \left( R_{m,i_2,k}^{12} + R_{m,i_1,k-1}^{12} \right)/T^2$$

$R^{11}_{m,i_1,k-1}$, $R^{12}_{m,i_1,k-1}$, and $R^{22}_{m,i_1,k-1}$ are respectively a variance of an error of the position component $x_{m,i1,k-1}$, a covariance between the error of the position component $x_{m,i1,k-1}$ and an error of the position component $y_{m,i1,k-1}$, and a variance of the error of the position component $y_{m,i1,k-1}$. $R^{11}_{m,i_2,k}$, $R^{12}_{m,i_2,k}$, and $R^{22}_{m,i_2,k}$ are respectively a variance of an error of the position component $x_{m,i2,k}$, a covariance between the error of the position component $x_{m,i2,k}$ and an error of the position component $y_{m,i2,k}$, and a variance of the error of the position component $y_{m,i2,k}$. Obtaining a covariance between errors of rectangular coordinate position components based on polar coordinate measurement errors falls within a conventional technology, and details are not described herein.

In an optional implementation, the metric value corresponding to the association hypothesis may be a Mahalanobis distance, and the Mahalanobis distance corresponding to the association hypothesis may be obtained based on the smoothed estimate of the radial velocity and the radial velocity measured value. For example, the Mahalanobis distance corresponding to the association hypothesis may be as follows:

$$d_M\left(\dot{r}_{m,i_1,k-1}\big|\hat{\dot{r}}_{k-1|k}\right) = \frac{|\dot{r}_{m,i_1,k-1}-\hat{\dot{r}}_{k-1|k}|^2}{S_{\dot{r},i_1,k-1|k}} \tag{15}$$

$d_M\left(\dot{r}_{m,i_1,k-1}\big|\hat{\dot{r}}_{k-1|k}\right)$ is the Mahalanobis distance. $\dot{r}_{m,i1,k-1}$, $\hat{\dot{r}}_{k-1|k}$, and $S_{\dot{r},i1,k-1|k}$ are as described above.

In an optional implementation, the metric value corresponding to the association hypothesis may be a Euclidean distance, and the Euclidean distance corresponding to the association hypothesis may be obtained based on the smoothed estimate of the radial velocity and the radial velocity measured value. For example, the Euclidean distance corresponding to the association hypothesis may be as follows:

$$d_E\left(\dot{r}_{m,i_1,k-1}\big|\hat{\dot{r}}_{k-1|k}\right) = |\dot{r}_{m,i_1,k-1} - \hat{\dot{r}}_{k-1|k}| \tag{16}$$

$d_E\left(\dot{r}_{m,i_1,k-1}\big|\hat{\dot{r}}_{k-1|k}\right)$ is the Euclidean distance. $\dot{r}_{m,i1,k-1}$ and $\hat{\dot{r}}_{k-1|k}$ are as described above.

In an optional implementation, a specific implementation in which the metric value corresponding to the association hypothesis is determined based on the smoothed estimate of the radial velocity and the radial velocity measured value at the moment $t_{k-1}$ that corresponds to the association hypothesis is as follows: whether the association hypothesis is a valid association hypothesis is determined based on the smoothed estimate of the radial velocity and the radial velocity measured value at the moment $t_{k-1}$ that corresponds to the association hypothesis. For a valid association hypothesis, the metric value corresponding to the association hypothesis is determined.

In an optional implementation, if a range value between the smoothed estimate of the radial velocity that corresponds to the association hypothesis and a radial velocity measured value at the moment $t_k$ that corresponds to the association hypothesis is less than or equal to a preset threshold, the association hypothesis is a valid association hypothesis.

For example, the valid association hypothesis may be an association hypothesis that meets the following inequality (17):

$$d_M\left(\dot{r}_{m,i_1,k-1}\big|\hat{\dot{r}}_{k-1|k}\right) = \frac{|\dot{r}_{m,i_1,k-1}-\hat{\dot{r}}_{k-1|k}|^2}{S_{\dot{r},i_1,k-1|k}} \leq d_{M,Threshold} \tag{17}$$

$d_M\left(\dot{r}_{m,i_1,k-1}\big|\hat{\dot{r}}_{k-1|k}\right)$ is a Mahalanobis distance, and $d_{M,Threshold}$ is the preset threshold, which is a non-negative limit value. For example, $d_{M,Threshold}$ is equal to 1.5,3, or 16. $d_M\left(\dot{r}_{m,i_1,k-1}\big|\hat{\dot{r}}_{k-1|k}\right)$, $\dot{r}_{m,i1,k-1}$, $\hat{\dot{r}}_{k-1|k}$, and $S_{\dot{r},i1,k-1|k}$ are as described above.

In an optional implementation, for a valid association hypothesis, the Mahalanobis distance may be determined as the metric value corresponding to the association hypothesis; or another range, a likelihood function, a log-likelihood function, or an equivalent form thereof may be used as the metric value corresponding to the association hypothesis.

For another example, the valid association hypothesis may be an association hypothesis that meets the following inequality (18):

$$d_E\left(\dot{r}_{m,i_1,k-1}\big|\hat{\dot{r}}_{k-1|k}\right) = |\dot{r}_{m,i_1,k-1} - \hat{\dot{r}}_{k-1|k}| \leq d_{E,Threshold} \tag{18}$$

$d_E\left(\dot{r}_{m,i_1,k-1}\big|\hat{\dot{r}}_{k-1|k}\right)$ is a Euclidean distance, and $d_{E,\,Threshold}$ is the preset threshold, which is a non-negative limit value.

For example, $d_{E,\,Threshold}$ is equal to 1.5, 2, or 3. $d_E\left(\dot{r}_{m,i_1,k-1}\big|\hat{\dot{r}}_{k-1|k}\right)$, $\dot{r}_{m,i1,k-1}$, and $\hat{\dot{r}}_{k-1|k}$ are as described above.

In an optional implementation, for a valid association hypothesis, the Euclidean distance may be determined as the metric value corresponding to the association hypothesis; or another range, a likelihood function, a log-likelihood function, or an equivalent form thereof may be used as the metric value corresponding to the association hypothesis.

For another example, the likelihood function value or the log-likelihood function value may be further determined based on the smoothed estimate of the radial velocity and the radial velocity measured value at the moment $t_{k-1}$ that corresponds to the association hypothesis. If the likelihood function value or the log-likelihood function value is less than or equal to the preset value, it is determined that the association hypothesis is valid.

In an optional implementation, for a valid association hypothesis, the likelihood function value or the log-likelihood function value may be determined as the metric value corresponding to the association hypothesis. Alternatively, another range may be used as the metric value corresponding to the association hypothesis.

(2) The estimate of the projected velocity component is a filtered estimate of the radial velocity.

Specifically, the filtered estimate of the radial velocity is obtained based on the velocity estimate corresponding to the association hypothesis, and the metric value of the association hypothesis is obtained based on the filtered estimate of the radial velocity and a radial velocity measured value.

A filtered estimate $\hat{\dot{r}}_{k|k}$ of the radial velocity may be obtained based on the filtered velocity estimate ( $\hat{\dot{x}}_{i_1,i_2,k|k}$, $\hat{\dot{y}}_{i_1,i_2,k|k}$ ) corresponding to the association hypothesis. In an implementation, the filtered estimate of the radial velocity may be obtained from the filtered velocity estimate based on a relationship between the radial velocity and a state vector. For example:

$$\hat{\dot{r}}_{k|k} = h\left(\hat{X}_{k|k}\right) = \frac{x_{m,i_2,k}\cdot\hat{\dot{x}}_{i_1,i_2,k|k} + y_{m,i_2,k}\cdot\hat{\dot{y}}_{i_1,i_2,k|k}}{\hat{r}_{k|k}} \tag{19}$$

$\hat{X}_{k|k}$ is a filtered estimate of the state vector. $\hat{X}_{k|k}$ includes at least the filtered velocity components ( $\hat{\dot{x}}_{i_1,i_2,k|k}$, $\hat{\dot{y}}_{i_1,i_2,k|k}$ ). $\hat{X}_{k|k}$ may further include rectangular coordinate position components ($x_{m,i2,k}$, $y_{m,i2,k}$) determined based on the position measurement data obtained at the moment $t_k$. $\hat{r}_{k|k} = \left(x_{m,i_2,k}^2 + y_{m,i_2,k}^2\right)^{\frac{1}{2}}$.

The metric value corresponding to the association hypothesis may be determined based on the foregoing filtered estimate $\hat{\dot{r}}_{k|k}$ of the radial velocity and a radial velocity measured value at the moment $t_k$ that corresponds to the association hypothesis. The metric value may be a likelihood function value, a log-likelihood function value, or a range value. The range value may be a Mahalanobis distance or a Euclidean distance.

In an optional implementation, the metric value is a likelihood function value or a log-likelihood function value. The likelihood function value or the log-likelihood function value corresponding to the association hypothesis may be obtained based on a probability density function of the filtered estimate of the radial velocity and the radial velocity measured value. The probability density function may be a probability density function of Gaussian distribution, a density function of uniform distribution, a density function of exponential distribution, a density function of Poisson distribution, or the like.

For example, a radial velocity measured value in the $i_2$th piece of measurement data measured by a sensor at the moment $t_k$ is $\dot{r}_{m,i2,k}$, and a probability density function of the radial velocity measured value $\dot{r}_{m,i2,k}$ is a probability density function of Gaussian distribution. In this case, a likelihood function corresponding to the association hypothesis may be as follows:

$$\Lambda\left(\dot{r}_{m,i_2,k}\big|\hat{\dot{r}}_{k|k}\right) = N\left(\dot{r}_{m,i_2,k} - \hat{\dot{r}}_{k|k}; 0, S_{\dot{r},i_2,k|k}\right) \tag{20}$$

$N\left(\dot{r}_{m,i_2,k} - \hat{\dot{r}}_{k|k}; 0, S_{\dot{r},i_2,k|k}\right)$ is the probability density function of Gaussian distribution, where a mean value is 0, and $S_{\dot{r},i2,k|k}$ is a covariance of a difference between $\dot{r}_{m,i2,k}$ and $\hat{\dot{r}}_{k|k}$.

$$N\left(\tilde{\dot{r}}_{m,i_2,k}; 0, S_{\dot{r},i_2,k|k}\right) = \left|2\pi S_{\dot{r},i_2,k|k}\right|^{-\frac{1}{2}} exp\left\{-\frac{1}{2}\left(\tilde{\dot{r}}_{m,i_2,k}\right)^T S_{\dot{r},i_2,k}^{-1}\left(\tilde{\dot{r}}_{m,i_2,k}\right)\right\} \tag{21}$$

$\tilde{\dot{r}}_{m,i_2,k}$ is a *difference* between the radial velocity measured value $\dot{r}_{m,i2,k}$ and the filtered estimate $\hat{\dot{r}}_{k|k}$ of the radial

velocity.

$$\tilde{\dot{r}}_{m,i_2,k} = \dot{r}_{m,i_2,k} - \hat{\dot{r}}_{k|k} \tag{22}$$

The covariance $S_{\dot{r},i2,k|k}$ may be determined based on different methods. For example, the covariance may be obtained based on extended Kalman filtering (EKF), a first-order or multi-order Taylor (Taylor) expansion, particle (Particle) filtering, unscented Kalman filtering (UKF), or another method. For example, the covariance may be expanded based on the extended Kalman filtering (EKF) or the first-order or multi-order Taylor, and the covariance matrix $S_{\dot{r},i2,k|k}$ is as follows:

$$S_{\dot{r},j,k|k} = H P_{k|k} H^T + R_{\dot{r},i_2} \tag{23}$$

$P_{k|k}$ is a covariance matrix of the filtered estimate of the state vector, and $R_{\dot{r},i2}$ is a variance of the $i_2{}^{th}$ radial velocity measured value. H is a Jacobi (Jacobi) matrix, and H may be obtained based on the relationship between the radial velocity and the state vector.

For example, a first-order Taylor expansion of the relationship $\dot{r} = h(X)$ between the radial velocity and the state vector around a state vector $X_0$ is as follows:

$$\dot{r} = h(X) = h(X_0) + H \cdot (X - X_0) + o(X - X_0) \tag{24}$$

$o(X - X_0)$ represents a higher-order term of $X - X_0$. H is a Jacobi (Jacobi) matrix corresponding to the function $h(X)$, and H is a function of $X_0$. Specifically, $X_0$ may include the filtered estimate $\hat{x}_{k|k}$ of the state vector at the moment $t_k$ that is obtained based on measurement data obtained until the moment $t_k$.
$\hat{X}_{k|k} = \begin{bmatrix} x_{m,i_2,k} & y_{m,i_2,k} & \hat{\dot{x}}_{i_1,i_2,k|k} & \hat{\dot{y}}_{i_1,i_2,k|k} s_{n-4} \end{bmatrix}^T$ . $S_{n-4}$ represents an (n-4)-dimensional vector, including a state variable other than a position and a velocity, and $n \geq 4$. When n = 4, the state vector includes only a position vector and a velocity vector. H may be represented as follows:

$$H = \begin{bmatrix} h_1 & h_2 & h_3 & h_4 & 0_{n-4} \end{bmatrix} \tag{25}$$

$h_1 = \frac{\partial h(X)}{\partial x}$, $h_2 = \frac{\partial h(X)}{\partial y}$, $h_3 = \frac{\partial h(X)}{\partial \dot{x}}$, $h_2 = \frac{\partial h(X)}{\partial \dot{y}}$ , and $0_{n-4}$ represents an (n-4)-dimensional vector formed by elements of 0s. For example, $X_0$ is the filtered estimate $\hat{X}_{k|k}$ of the state vector at the moment $t_k$ that is obtained based on the measurement data obtained until the moment $t_k$.

$$h_1 = \frac{\hat{y}_{k|k}^2 \cdot \hat{\dot{x}}_{k|k}}{\hat{r}_{k|k}^3}, \quad h_2 = \frac{\hat{x}_{k|k}^2 \cdot \hat{\dot{y}}_{k|k}}{\hat{r}_{k|k}^3}, \quad h_3 = \frac{\hat{x}_{k|k}}{\hat{r}_{k|k}}, \text{ and } h_4 = \frac{\hat{y}_{k|k}}{\hat{r}_{k|k}}$$

$$\hat{r}_{k|k} = \left( x_{m,i_2,k}^2 + y_{m,i_2,k}^2 \right)^{\frac{1}{2}}.$$

The covariance matrix $P_{k|k}$ may have the following form:

$$P_{k|k} = \begin{bmatrix} p_{xx} & p_{xy} & p_{x\dot{x}} & p_{x\dot{y}} & P_{(x,y)\cdot(n-4)} \\ p_{yx} & p_{yy} & p_{y\dot{x}} & p_{y\dot{y}} & \\ p_{\dot{x}x} & p_{\dot{x}y} & p_{\dot{x}\dot{x}} & p_{\dot{x}\dot{y}} & P_{(\dot{x},\dot{y})\cdot(n-4)} \\ p_{\dot{y}x} & p_{\dot{y}y} & p_{\dot{y}\dot{x}} & p_{\dot{y}\dot{y}} & \\ P_{(n-4)\cdot(x,y)} & P_{(n-4)\cdot(\dot{x},\dot{y})} & P_{(n-4)\cdot(n-4)} \end{bmatrix} \tag{26}$$

Each element in $P_{k|k}$ is a covariance between elements corresponding to the state vector. H includes only 0s except in the first 4 columns. Therefore, $S_{\dot{r},i2,k|k}$ can be obtained by calculating only elements in the first 4 rows and the first 4 columns. In an example of the $i_1{}^{th}$ piece of measurement data measured at the moment $t_{k-1}$ and the $i_2{}^{th}$ piece of measurement data measured at the moment $t_k$ (the two pieces of measurement data are associated in the association hypothesis), the foregoing elements may be respectively as follows:

$$p_{xx} = R^{11}_{m,i_2,k}, p_{x\dot{x}} = p_{\dot{x}x} = p_{xx}/T, \ p_{\dot{x}\dot{x}} = \left(R^{11}_{m,i_2,k} + R^{11}_{m,i_1,k-1}\right)/T^2$$

$$p_{yy} = R^{22}_{m,i_2,k}, p_{y\dot{y}} = p_{\dot{y}y} = p_{yy}/T, \ p_{\dot{y}\dot{y}} = \left(R^{22}_{m,i_2,k} + R^{22}_{m,i_1,k-1}\right)/T^2$$

$$p_{xy} = p_{yx} = R^{12}_{m,i_2,k}, p_{x\dot{y}} = p_{\dot{x}y} = p_{y\dot{x}} = p_{\dot{y}x} = p_{xy}/T$$

$$p_{\dot{x}\dot{y}} = p_{\dot{y}\dot{x}} = \left(R^{12}_{m,i_2,k} + R^{12}_{m,i_1,k-1}\right)/T^2$$

$R^{11}_{m,i_2,k}$ , $R^{12}_{m,i_2,k}$ , and $R^{22}_{m,i_2,k}$ are respectively a variance of an error of the position component $x_{m,i,k}$, a covariance between the error of the position component $x_{m,i_2,k}$ and an error of the position component $y_{m,i2,k2}$, and a variance of the error of the position component $y_{m,i2,k}$ $R^{11}_{m,i_2,k}$ , $R^{12}_{m,i_2,k}$ , and $R^{22}_{m,i_2,k}$ are respectively a variance of an error of the position component $x_{m,i2,k}$, a covariance between the error of the position component $x_{m,i2,k}$ and an error of the position component $y_{m,i2,k}$, and a variance of the error of the position component $y_{m,i2,k}$. Obtaining a covariance between errors of rectangular coordinate position components based on polar coordinate measurement errors falls within a conventional technology, and details are not described herein.

In an optional implementation, the metric value corresponding to the association hypothesis may be a Mahalanobis distance, and the Mahalanobis distance corresponding to the association hypothesis may be obtained based on the filtered estimate $\hat{\dot{r}}_{k|k}$ of the radial velocity and the radial velocity measured value $\dot{r}_{m,i2,k}$ at the moment $t_k$ that corresponds to the association hypothesis. Specifically, the Mahalanobis distance may be as follows:

$$d_M\left(\dot{r}_{m,i_2,k}\middle|\hat{\dot{r}}_{k|k}\right) = \frac{\left|\dot{r}_{m,i_2,k} - \hat{\dot{r}}_{k|k}\right|^2}{s_{\dot{r},i_2,k|k}} \tag{27}$$

$d_M\left(\dot{r}_{m,i_2,k}\middle|\hat{\dot{r}}_{k|k}\right)$ is the Mahalanobis distance.

In an optional implementation, the metric value corresponding to the association hypothesis may be a Euclidean distance, and the Euclidean distance corresponding to the association hypothesis may be obtained based on the filtered estimate $\hat{\dot{r}}_{k|k}$ of the radial velocity and the radial velocity measured value $\dot{r}_{m,i2,k}$ at the moment $t_k$ that corresponds to the association hypothesis. Specifically, the Euclidean distance of the association hypothesis may be as follows:

$$d_E\left(\dot{r}_{m,i_2,k}\middle|\hat{\dot{r}}_{k|k}\right) = \left|\dot{r}_{m,i_2,k} - \hat{\dot{r}}_{k|k}\right| \tag{28}$$

$d_E\left(\dot{r}_{m,i_2,k}\middle|\hat{\dot{r}}_{k|k}\right)$ is the Euclidean distance.

In an optional implementation, before the metric value corresponding to the association hypothesis is determined based on the filtered estimate of the radial velocity and the radial velocity measured value at the moment $t_{k-1}$ that corresponds to the association hypothesis, a valid association hypothesis may be determined based on the filtered estimate of the radial velocity and the radial velocity measured value at the moment $t_{k-1}$ that corresponds to the association hypothesis; and for a valid association hypothesis, the corresponding metric value is determined.

In an optional implementation, if a range value between the filtered estimate of the radial velocity that corresponds to the association hypothesis and the radial velocity measured value at the moment $t_k$ that corresponds to the association hypothesis is less than or equal to a preset threshold, it may be determined that the association hypothesis is a valid association hypothesis. Alternatively, whether the association hypothesis is a valid association hypothesis may be further determined in another manner. This is not limited in this embodiment of this application.

For example, the valid association hypothesis may be an association hypothesis that meets the following inequality (29):

$$d_M\left(\dot{r}_{m,i_2,k}\middle|\hat{\dot{r}}_{k|k}\right) = \frac{\left|\dot{r}_{m,i_2,k} - \hat{\dot{r}}_{k|k}\right|^2}{s_{\dot{r},i_2,k|k}} \leq d_{M,Threshold} \tag{29}$$

$d_{M,Threshold}$ is the preset threshold, which is a non-negative limit value. For example, $d_{M,Threshold}$ is equal to 1.5, 3, or 16. $d_M\left(\dot{r}_{m,i_2,k}\middle|\hat{\dot{r}}_{k|k}\right)$ is a Mahalanobis distance. $d_M\left(\dot{r}_{m,i_2,k}\middle|\hat{\dot{r}}_{k|k}\right)$, $\dot{r}_{m,i2,k}$, $\hat{\dot{r}}_{k|k}$, and $S_{\dot{r},i2,k|k}$ are as described above.

In an optional implementation, for a valid association hypothesis, the Mahalanobis distance may be determined as the metric value corresponding to the association hypothesis; or another range, a likelihood function, a log-likelihood function, or an equivalent form thereof may be used as the metric value corresponding to the association hypothesis.

For another example, the valid association hypothesis may be an association hypothesis that meets the following inequality (30):

$$d_E\left(\dot{r}_{m,i_2,k}\middle|\hat{\dot{r}}_{k|k}\right) = \left|\dot{r}_{m,i_2,k} - \hat{\dot{r}}_{k|k}\right| \leq d_{E,Threshold} \tag{30}$$

$d_{E,Threshold}$ is the preset threshold, which is a non-negative limit value. For example, $d_{E,Threshold}$ is equal to 1.5, 2, or 3. $d_E\left(\dot{r}_{m,i_2,k}\middle|\hat{\dot{r}}_{k|k}\right)$ is a Euclidean distance. $\dot{r}_{m,i2,k}$ and $\hat{\dot{r}}_{k|k}$ are as described above.

In an optional implementation, for a valid association hypothesis, the Euclidean distance may be determined as the metric value corresponding to the association hypothesis; or another range, a likelihood function, a log-likelihood function, or an equivalent form thereof may be used as the metric value corresponding to the association hypothesis.

For another example, the likelihood function value or the log-likelihood function value may be further determined based on the filtered estimate of the radial velocity and the radial velocity measured value at the moment $t_k$ that corresponds to the association hypothesis. If the likelihood function value or the log-likelihood function value is less than or equal to the preset value, it is determined that the association hypothesis is valid.

In an optional implementation, for a valid association hypothesis, the likelihood function value or the log-likelihood function value may be determined as the metric value corresponding to the association hypothesis. Alternatively, another range may be used as the metric value corresponding to the association hypothesis.

(3) The estimate of the projected velocity component is a smoothed estimate of the lateral velocity, a smoothed estimate of the longitudinal velocity, or a smoothed estimate of a projected component of a velocity vector in a specific direction.

A smoothed estimate $\hat{v}_{k-1|k}$ of the projected velocity component may be obtained based on the smoothed velocity estimate ($\hat{\dot{x}}_{i_1,i_2,k-1|k}$, $\hat{\dot{y}}_{i_1,i_2,k-1|k}$) corresponding to the association hypothesis. In an implementation, the smoothed estimate of the projected velocity component may be obtained from the smoothed velocity estimate based on a relationship between the projected velocity component and a state vector.

For example, the projected velocity component may be the longitudinal velocity, and the smoothed estimate of the longitudinal velocity is as follows:

$$\hat{v}_{k-1|k} = \hat{\dot{x}}_{i_1,i_2,k-1|k}$$

For another example, the projected velocity component may be the lateral velocity, and the smoothed estimate of the lateral velocity is as follows:

$$\hat{v}_{k-1|k} = \hat{\dot{y}}_{i_1,i_2,k-1|k}$$

For another example, the projected velocity component may be the projected component of the velocity vector in the specific direction, and the smoothed estimate of the projected velocity component in the specific direction is as follows:

$$\hat{v}_{k-1|k} = \hat{\dot{x}}_{i_1,i_2,k-1|k} \cdot cos\theta + \hat{\dot{y}}_{i_1,i_2,k-1|k} \cdot sin\theta \tag{31}$$

$\theta$ is an included angle between the specific direction and the velocity vector.

The metric value corresponding to the association hypothesis may be determined based on the foregoing smoothed estimate $\hat{v}_{k-1|k}$ of the projected velocity component and a measured value $v_{m,i1,k-1}$ of the projected velocity component at the moment $t_{k-1}$ that corresponds to the association hypothesis. The metric value may be a likelihood function value, a log-likelihood function value, or a range value. The range value may be a Mahalanobis distance or a Euclidean distance.

In an optional implementation, the metric value is a likelihood function value or a log-likelihood function value. The likelihood function value or the log-likelihood function value corresponding to the association hypothesis may be obtained based on a probability density function of the smoothed estimate of the radial velocity and a radial velocity measured value. The probability density function may be a probability density function of Gaussian distribution, a density function of uniform distribution, a density function of exponential distribution, a density function of Poisson distribution, or the like.

For example, a measured value of the projected velocity component in the $i_1$th piece of measurement data at the moment $t_{k-1}$ is $v_{m,i1,k-1}$, a probability density function of the measured value $v_{m,i1,k-1}$ of the projected velocity component is a probability density function of Gaussian distribution, and a likelihood function corresponding to the association hypothesis may be as follows:

$$\Lambda\left(v_{m,i_1,k-1}\middle|\hat{v}_{k-1|k}\right) = N\left(v_{m,i_1,k-1} - \hat{v}_{k-1|k}; 0, S_{v,i_1,k-1|k}\right) \tag{32}$$

$v_{m,i1,k-1}$ is the measured value of the projected velocity component in the $i_1$th piece of measurement data at the moment $t_{k-1}$, $\hat{v}_{k-1|k}$ is a smoothed estimate, of the projected velocity component, that is determined based on the $i_1$th piece of measurement data at the moment $t_{k-1}$ and the $i_2$th piece of measurement data at the moment $t_k$, $N(v_{m,i1,k-1} - \hat{v}_{k-1|k}; 0, S_{v,i1,k-1|k})$ is the probability density function of Gaussian distribution, where a mean value is 0, and $S_{v,i1,k-1|k}$ is a covariance of a difference between $v_{m,i1,k-1}$ and $\hat{v}_{k-1|k}$.

$$N\left(v_{m,i_1,k-1} - \hat{v}_{k-1|k}; 0, S_{v,i_1,k-1|k}\right) = \left|2\pi S_{v,i_1,k-1|k}\right|^{-\frac{1}{2}} exp\left\{-\frac{1}{2}\left(\tilde{v}_{m,i_1,k-1}\right)^T S_{v,i_1,k-1}^{-1}\left(\tilde{v}_{m,i_1,k-1}\right)\right\} \tag{33}$$

$\tilde{v}_{m,i1,k-1}$ is a difference between the measured value $v_{m,i1,k-1}$ of the projected velocity component and the smoothed estimate $\hat{v}_{k-1|k}$ of the projected velocity component. To be specific:

$$\tilde{v}_{m,i_1,k-1} = v_{m,i_1,k-1} - \hat{v}_{k-1|k} \tag{34}$$

The covariance $S_{v,i1,k-1|k}$ may be determined based on different methods. For example, the covariance may be obtained based on Kalman filtering (KF), extended Kalman filtering (EKF), a first-order or multi-order Taylor (Taylor) expansion, particle (Particle) filtering, unscented Kalman filtering (UKF), or another method. For example, the covariance matrix $S_{v,i1,k-1|k}$ is as follows:

$$S_{v,i_1,k-1|k} = HP_{k-1|k}H^T + R_{v,i_1} \tag{35}$$

$P_{k-1|k}$ is a covariance matrix of a smoothed estimate of the state vector, and $R_{v,i1}$ is a variance of the $i_1$th measured value of the projected velocity component. H may be obtained based on the relationship between the projected velocity component and the state vector.

For example, a smoothed estimate of the state vector at the moment $t_{k-1}$ is $\hat{X}_{k-1|k}$, which may be represented as follows:

$$\hat{X}_{k-1|k} = \begin{bmatrix} x_{m,i_1,k-1} & y_{m,i_1,k-1} & \hat{\tilde{x}}_{i_1,i_2,k-1|k} & \hat{\tilde{y}}_{i_1,i_2,k-1|k} S_{n-4} \end{bmatrix}^T$$

$S_{n-4}$ represents an (n-4)-dimensional vector, including a state variable other than a position and a velocity, and $n \geq 4$. When n = 4, the state vector includes only a position vector and a velocity vector.

The projected velocity component may be a longitudinal velocity component, and H may be represented as follows:

$$H = \begin{bmatrix} 0 & 0 & 1 & 0 & 0_{n-4} \end{bmatrix} \tag{36}$$

The projected velocity component may be a lateral velocity component, and H may be represented as follows:

$$H = \begin{bmatrix} 0 & 0 & 0 & 1 & 0_{n-4} \end{bmatrix} \tag{37}$$

The projected velocity component may be a projected velocity component in a specific direction, and H may be represented as follows:

$$H = \begin{bmatrix} 0 & 0 & cos\theta & sin\theta & 0_{n-4} \end{bmatrix} \tag{38}$$

The covariance matrix $P_{k-1|k}$ is as described above.

In an optional implementation, the metric value corresponding to the association hypothesis may be a Mahalanobis distance, and the Mahalanobis distance corresponding to the association hypothesis may be obtained based on the smoothed estimate of the projected velocity component and the measured value of the projected velocity component. For example, the Mahalanobis distance corresponding to the association hypothesis may be as follows:

$$d_M\left(v_{m,i_1,k-1}\middle|\hat{v}_{k-1|k}\right) = \frac{\left|v_{m,i_1,k-1}-\hat{v}_{k-1|k}\right|^2}{S_{v,i_1,k-1|k}} \tag{39}$$

$d_M(v_{m,i1,k-1}|\hat{v}_{k-1|k})$ is the Mahalanobis distance. $v_{m,i1,k-1}$, $\hat{v}_{k-1|k}$, and $S_{v,i1,k-1|k}$ are as described above.

In an optional implementation, the metric value corresponding to the association hypothesis may be a Euclidean distance, and the Euclidean distance corresponding to the association hypothesis may be obtained based on the smoothed estimate of the projected velocity component and the measured value of the projected velocity component. For example, the Euclidean distance corresponding to the association hypothesis may be as follows:

$$d_E\left(v_{m,i_1,k-1}\middle|\hat{v}_{k-1|k}\right) = \left|v_{m,i_1,k-1} - \hat{v}_{k-1|k}\right| \tag{40}$$

$d_E(v_{m,i1,k-1}|\hat{v}_{k-1|k})$ is the Euclidean distance. $v_{m,i1,k-1}$ and $\hat{v}_{k-1|k}$ are as described above.

In an optional implementation, a specific implementation in which the metric value corresponding to the association hypothesis is determined based on the smoothed estimate of the projected velocity component and the measured value of the projected velocity component at the moment $t_{k-1}$ that corresponds to the association hypothesis is as follows: whether the association hypothesis is a valid association hypothesis is determined based on the smoothed estimate of the projected velocity component and the measured value of the projected velocity component at the moment $t_{k-1}$ that corresponds to the association hypothesis. For a valid association hypothesis, the metric value corresponding to the association hypothesis is determined.

In an optional implementation, if a range value between the smoothed estimate of the projected velocity component that corresponds to the association hypothesis and a measured value of the projected velocity component at the moment $t_k$ that corresponds to the association hypothesis is less than or equal to a preset threshold, the association hypothesis is a valid association hypothesis.

For example, the valid association hypothesis may be an association hypothesis that meets the following inequality (41):

$$d_M\left(v_{m,i_1,k-1}\middle|\hat{v}_{k-1|k}\right) = \frac{\left|v_{m,i_1,k-1}-\hat{v}_{k-1|k}\right|^2}{S_{v,i_1,k-1|k}} \leq d_{M,Threshold} \tag{41}$$

$d_M(v_{m,i1,k-1}|\hat{v}_{k-1|k})$ is a Mahalanobis distance, and $d_{M,Threshold}$ is the preset threshold, which is a non-negative limit value. For example, $d_{M,Threshold}$ is equal to 1.5, 3, or 16. $d_M(v_{m,i1,k-1}|\hat{v}_{k-1|k})$, $v_{m,i1,k-1}$, and $\hat{v}_{k-1|k}$ are as described above.

In an optional implementation, for a valid association hypothesis, the Mahalanobis distance may be determined as the metric value corresponding to the association hypothesis; or another range, a likelihood function, a log-likelihood function, or an equivalent form thereof may be used as the metric value corresponding to the association hypothesis.

For another example, the valid association hypothesis may be an association hypothesis that meets the following inequality (42):

$$d_E\left(v_{m,i_1,k-1}\middle|\hat{v}_{k-1|k}\right) = \left|v_{m,i_1,k-1} - \hat{v}_{k-1|k}\right| \leq d_{E,Threshold} \tag{42}$$

$d_E(v_{m,i1,k-1}|\hat{v}_{k-1|k})$ is a Euclidean distance, and $d_{E,Threshold}$ is the preset threshold, which is a non-negative limit value. For example, $d_{E,Threshold}$ is equal to 1.5, 2, or 3. $d_E(v_{m,i1,k-1}|\hat{v}_{k-1|k})$, $v_{m,i1,k-1}$, and $\hat{v}_{k-1|k}$ are as described above.

In an optional implementation, for a valid association hypothesis, the Euclidean distance may be determined as the metric value corresponding to the association hypothesis; or another range, a likelihood function, a log-likelihood function, or an equivalent form thereof may be used as the metric value corresponding to the association hypothesis.

For another example, the likelihood function value or the log-likelihood function value may be further determined based on the smoothed estimate of the projected velocity component and the measured value of the projected velocity component at the moment $t_{k-1}$ that corresponds to the association hypothesis. If the likelihood function value or the log-likelihood function value is less than or equal to the preset value, it is determined that the association hypothesis is valid.

In an optional implementation, for a valid association hypothesis, the likelihood function value or the log-likelihood function value may be determined as the metric value corresponding to the association hypothesis. Alternatively, another range may be used as the metric value corresponding to the association hypothesis.

(4) The estimate of the projected velocity component is a filtered estimate of the lateral velocity, a filtered estimate of the longitudinal velocity, or a filtered estimate of a projected component of a velocity vector in a specific direction.

A filtered estimate $\hat{v}_{k|k}$ of the projected velocity component may be obtained based on the filtered velocity estimate ( $\hat{\hat{x}}_{i_1,i_2,k|k}$, $\hat{\hat{y}}_{i_1,i_2,k|k}$ ) corresponding to the association hypothesis. In an implementation, the filtered estimate of the projected velocity component may be obtained from the filtered velocity estimate based on a relationship between the projected velocity component and a state vector.

For example, the projected velocity component may be the longitudinal velocity, and the filtered estimate of the longitudinal velocity is as follows:

$$\hat{v}_{k|k} = \hat{\hat{x}}_{i_1,i_2,k|k}$$

For another example, the projected velocity component may be the lateral velocity, and the filtered estimate of the lateral velocity is as follows:

$$\hat{v}_{k|k} = \hat{\hat{y}}_{i_1,i_2,k|k}$$

For another example, the projected velocity component may be the projected component of the velocity vector in the specific direction, and the filtered estimate of the projected velocity component in the specific direction is as follows:

$$\hat{v}_{k|k} = \hat{\hat{x}}_{i_1,i_2,k|k} \cdot cos\theta + \hat{\hat{y}}_{i_1,i_2,k|k} \cdot sin\theta \tag{43}$$

( $\hat{\hat{x}}_{i_1,i_2,k|k}$, $\hat{\hat{y}}_{i_1,i_2,k|k}$ ) is the filtered velocity estimate, and $\theta$ is an included angle between the specific direction and the velocity vector.

The metric value corresponding to the association hypothesis may be determined based on the foregoing filtered estimate $\hat{v}_{k|k}$ of the projected velocity component and a measured value $v_{m,i2,k}$ of the projected velocity component at the moment $t_k$ that corresponds to the association hypothesis. The metric value may be a likelihood function value, a log-likelihood function value, or a range value. The range value may be a Mahalanobis distance or a Euclidean distance.

In an optional implementation, the metric value is a likelihood function value or a log-likelihood function value. The likelihood function value or the log-likelihood function value corresponding to the association hypothesis may be obtained based on a probability density function of the smoothed estimate of the radial velocity and a radial velocity measured value. The probability density function may be a probability density function of Gaussian distribution, a density function of uniform distribution, a density function of exponential distribution, a density function of Poisson distribution, or the like.

For example, a measured value of the projected velocity component in the $i_2$th piece of measurement data at the moment $t_k$ is $v_{m,i2,k}$, a probability density function of the measured value $v_{m,i2,k}$ of the projected velocity component is a probability density function of Gaussian distribution, and a likelihood function corresponding to the association hypothesis may be as follows:

$$\Lambda\big(v_{m,i_2,k}\big|\hat{v}_{k|k}\big) = N\big(v_{m,i_2,k} - \hat{v}_{k|k}; 0, S_{v,i_2,k|k}\big) \tag{44}$$

$v_{m,i2,k}$ is the measured value of the projected velocity component in the $i_2$th piece of measurement data measured by a sensor at the moment $t_k$, $\hat{v}_{k|k}$ is a filtered estimate, of the projected velocity component, that is determined based on the $i_1$th piece of measurement data at the moment $t_{k-1}$ and the $i_2$th piece of measurement data at the moment $t_k$, N($v_{m,i2,k}$ - $\hat{v}_{k|k}$; 0, $S_{v,i2,k|k}$) is the probability density function of Gaussian distribution, where a mean value is 0, and $S_{v,i2,k|k}$ is a covariance of a difference between $v_{m,i2,k}$ and $\hat{v}_{k|k}$.

$$N\big(v_{m,i_2,k} - \hat{v}_{k|k}; 0, S_{v,i_2,k|k}\big) = \big|2\pi S_{v,i_2,k|k}\big|^{-\frac{1}{2}} exp\left\{-\frac{1}{2}\big(\tilde{v}_{m,i_2,k}\big)^T S_{v,i_2,k}^{-1}\big(\tilde{v}_{m,i_2,k}\big)\right\} \tag{45}$$

$\tilde{v}_{m,i2,k}$ is a difference between the measured value $v_{m,i2,k}$ of the projected velocity component and the filtered estimate $\hat{v}_{k|k}$ of the projected velocity component. To be specific:

$$\tilde{v}_{m,i_2,k} = v_{m,i_2,k} - \hat{v}_{k|k} \tag{46}$$

The covariance $S_{v,i2,k|k}$ may be determined based on different methods. For example, the covariance may be obtained based on Kalman filtering (KF), extended Kalman filtering (EKF), a first-order or multi-order Taylor (Taylor) expansion, particle (Particle) filtering, unscented Kalman filtering (UKF), or another method. For example, the covariance matrix $S_{v,i2,k1|k}$ is as follows:

$$S_{v,i_2,k|k} = HP_{k|k}H^T + R_{v,i_2} \tag{47}$$

$P_{k|k}$ is a covariance matrix of a filtered estimate of the state vector, and $R_{v,i2}$ is a variance of the $i_2$th measured value of the projected velocity component. H may be obtained based on the relationship between the projected velocity component and the state vector.

For example, a filtered estimate $\hat{X}_{k|k}$ of the state vector at the moment $t_k$ may be represented as follows:

$$\hat{X}_{k|k} = \begin{bmatrix} x_{m,i_2,k} & y_{m,i_2,k} & \hat{\dot{x}}_{i_1,i_2,k|k} & \hat{\dot{y}}_{i_1,i_2,k|k} s_{n-4} \end{bmatrix}^T$$

$S_{n-4}$ represents an (n-4)-dimensional vector, including a state variable other than a position and a velocity, and $n \geq 4$. When n = 4, the state vector includes only a position vector and a velocity vector.

The projected velocity component may be a longitudinal velocity component, and H may be represented as follows:

$$H = \begin{bmatrix} 0 & 0 & 1 & 0 & 0_{n-4} \end{bmatrix} \tag{48}$$

The projected velocity component may be a lateral velocity component, and H may be represented as follows:

$$H = \begin{bmatrix} 0 & 0 & 0 & 1 & 0_{n-4} \end{bmatrix} \tag{49}$$

The projected velocity component may be a projected velocity component in a specific direction, and H may be represented as follows:

$$H = \begin{bmatrix} 0 & 0 & cos\theta & sin\theta & 0_{n-4} \end{bmatrix} \tag{50}$$

The covariance matrix $P_{k|k}$ is as described above.

In an optional implementation, the metric value corresponding to the association hypothesis may be a Mahalanobis distance, and the Mahalanobis distance corresponding to the association hypothesis may be obtained based on the filtered estimate of the projected velocity component and the measured value of the projected velocity component. For example, the Mahalanobis distance corresponding to the association hypothesis may be as follows:

$$d_M\left(v_{m,i_2,k}\big|\hat{v}_{k|k}\right) = \frac{\left|v_{m,i_2,k}-\hat{v}_{k|k}\right|^2}{S_{v,i_2,k|k}} \tag{51}$$

$d_M(v_{m,i2,k}|\hat{v}_{k|k})$ is the Mahalanobis distance. $v_{m,i2,k}$, $\hat{v}_{k|k}$, and $S_{v,i2,k|k}$ are as described above.

In an optional implementation, the metric value corresponding to the association hypothesis may be a Euclidean distance, and the Euclidean distance corresponding to the association hypothesis may be obtained based on the filtered estimate of the projected velocity component and the measured value of the projected velocity component. For example, the Euclidean distance corresponding to the association hypothesis may be as follows:

$$d_E\left(v_{m,i_2,k}\big|\hat{v}_{k|k}\right) = \left|v_{m,i_2,k} - \hat{v}_{k|k}\right| \tag{52}$$

$d_E(v_{m,i2,k}|\hat{v}_{k|k})$ is the Euclidean distance. $v_{m,i2,k}$ and $\hat{v}_{k|k}$ are as described above.

In an optional implementation, a specific implementation in which the metric value corresponding to the association hypothesis is determined based on the filtered estimate of the projected velocity component and the measured value of the projected velocity component at the moment $t_k$ that corresponds to the association hypothesis is as follows: whether the association hypothesis is a valid association hypothesis is determined based on the filtered estimate of the projected velocity component and the measured value of the projected velocity component at the moment $t_k$ that corresponds to the association hypothesis. For a valid association hypothesis, the metric value corresponding to the association hypothesis is determined.

In an optional implementation, if a range value between the filtered estimate of the projected velocity component that corresponds to the association hypothesis and the measured value of the projected velocity component at the moment $t_k$ that corresponds to the association hypothesis is less than or equal to a preset threshold, the association hypothesis is a valid association hypothesis.

Specifically, the valid association hypothesis may be an association hypothesis that meets the following inequality (53):

$$d_M\left(v_{m,i_2,k}\big|\hat{v}_{k|k}\right) = \frac{\left|v_{m,i_2,k}-\hat{v}_{k|k}\right|^2}{S_{v,i_2,k|k}} \leq d_{M,Threshold} \tag{53}$$

$d_M(v_{m,i2,k}|\hat{v}_{k|k})$ is a Mahalanobis distance, and $d_{M,Threshold}$ is the preset threshold, which is a non-negative limit value. For example, $d_{M,Threshold}$ is equal to 1.5, 3, or 16. $d_M(v_{m,i2,k}|\hat{v}_{k|k})$, $v_{m,i2,k}$, and $\hat{v}_{k|k}$ are as described above.

In an optional implementation, for a valid association hypothesis, the Mahalanobis distance may be determined as the metric value corresponding to the association hypothesis; or another range, a likelihood function, a log-likelihood function, or an equivalent form thereof may be used as the metric value corresponding to the association hypothesis.

For another example, the valid association hypothesis may be an association hypothesis that meets the following inequality (54):

$$d_E\left(v_{m,i_2,k}\big|\hat{v}_{k|k}\right) = \left|v_{m,i_2,k} - \hat{v}_{k|k}\right| \leq d_{E,Threshold} \tag{54}$$

$d_E(v_{m,i2,k}|\hat{v}_{k|k})$ is a Euclidean distance, and $d_{E,Threshold}$ is the preset threshold, which is a non-negative limit value. For example, $d_{E,Threshold}$ is equal to 1.5, 2, or 3.

In an optional implementation, for a valid association hypothesis, the Euclidean distance may be determined as the metric value corresponding to the association hypothesis; or another range, a likelihood function, a log-likelihood function, or an equivalent form thereof may be used as the metric value corresponding to the association hypothesis.

For another example, the likelihood function value or the log-likelihood function value may be further determined based on the filtered estimate of the projected velocity component and the measured value of the projected velocity component at the moment $t_k$ that corresponds to the association hypothesis. If the likelihood function value or the log-likelihood function value is less than or equal to the preset value, it is determined that the association hypothesis is valid.

In an optional implementation, for a valid association hypothesis, the likelihood function value or the log-likelihood function value may be determined as the metric value corresponding to the association hypothesis. Alternatively, another range may be used as the metric value corresponding to the association hypothesis.

(5) The estimate of the projected velocity component includes at least two of a smoothed estimate of the radial velocity, a filtered estimate of the radial velocity, a smoothed estimate of the lateral velocity, a filtered estimate of the lateral velocity, a smoothed estimate of a projected component of a velocity vector in a specific direction, and a filtered estimate of the projected component of the velocity vector in the specific direction.

At least two of the smoothed estimate of the radial velocity, the filtered estimate of the radial velocity, the smoothed estimate of the lateral velocity, the filtered estimate of the lateral velocity, the smoothed estimate of the projected component of the velocity vector in the specific direction, and the filtered estimate of the projected component of the velocity vector in the specific direction are obtained based on the velocity estimate corresponding to the association hypothesis. The metric value of the association hypothesis is obtained based on the at least two estimates and corresponding measured values.

It is assumed that the estimate of the projected velocity component corresponding to the association hypothesis includes A and B. A is any one of the smoothed estimate of the radial velocity, the filtered estimate of the radial velocity, the smoothed estimate of the lateral velocity, the filtered estimate of the lateral velocity, the smoothed estimate of the projected component of the velocity vector in the specific direction, and the filtered estimate of the projected component of the velocity vector in the specific direction. B is any one of the smoothed estimate of the radial velocity, the filtered estimate of the radial velocity, the smoothed estimate of the lateral velocity, the filtered estimate of the lateral velocity, the smoothed estimate of the projected component of the velocity vector in the specific direction, and the filtered estimate of the projected component of the velocity vector in the specific direction other than A. A first metric value is determined based on A. A second metric value is determined based on B. A manner of determining a metric value based on a velocity estimate may be described in the foregoing manners (1) to (4), and details are not described herein. If the first metric value and the second metric value are likelihood function values or log-likelihood function values, the metric value corresponding to the association hypothesis is a product of the first metric value and the second metric value. If the first metric value and the second metric value are range values, the metric value corresponding to the association hypothesis is a sum of the first metric value and the second metric value.

For example, the estimate of the projected velocity component corresponding to the association hypothesis includes the smoothed estimate of the radial velocity and the filtered estimate of the radial velocity. After the smoothed estimate of the radial velocity and the filtered estimate of the radial velocity that correspond to the association hypothesis are determined, the metric value corresponding to the association hypothesis is determined based on the smoothed estimate of the radial velocity, a radial velocity measured value that is obtained at the moment $t_{k-1}$ and that corresponds to the association hypothesis, the filtered estimate of the radial velocity, and a radial velocity measured value that is obtained at the moment $t_k$ and that corresponds to the association hypothesis. The metric value may be a likelihood function value, a log-likelihood function value, or a range value. The range value may be a Mahalanobis distance or a Euclidean distance.

For example, the metric value corresponding to the association hypothesis may be a likelihood function value, and the likelihood function value corresponding to the association hypothesis may be as follows:

$$\Lambda\left(\dot{r}_{m,i_1,k-1}, \dot{r}_{m,i_2,k}\right) = N\left(\dot{r}_{m,i_1,k-1} - \hat{\dot{r}}_{k-1|k}; 0, S_{\dot{r},i_1,k-1|k}\right) \cdot N\left(\dot{r}_{m,i_2,k} - \hat{\dot{r}}_{k|k}; 0, S_{\dot{r},i_2,k|k}\right) \tag{55}$$

$\Lambda(\dot{r}_{m,i1,k-1}, \dot{r}_{m,i2,k})$ is the likelihood function value corresponding to the association hypothesis, and $N\left(\dot{r}_{m,i_1,k-1} - \hat{\dot{r}}_{k-1|k}; 0, S_{\dot{r},i_1,k-1|k}\right)$ and $N\left(\dot{r}_{m,i_2,k} - \hat{\dot{r}}_{k|k}; 0, S_{\dot{r},i_2,k|k}\right)$ are as described above.

For another example, the metric value corresponding to the association hypothesis may be a Mahalanobis distance, and the Mahalanobis distance corresponding to the association hypothesis may be as follows:

$$d_M\left(\dot{r}_{m,i_1,k-1}, \dot{r}_{m,i_2,k}\right) = d_M\left(\dot{r}_{m,i_1,k-1} \big| \hat{\dot{r}}_{k-1|k}\right) + d_M\left(\dot{r}_{m,i_2,k} \big| \hat{\dot{r}}_{k|k}\right) \tag{56}$$

$d_M(\dot{r}_{m,i1,k-1}, \dot{r}_{m,i2,k})$ is the Mahalanobis distance corresponding to the association hypothesis. $d_M\left(\dot{r}_{m,i_1,k-1} \big| \hat{\dot{r}}_{k-1|k}\right)$ and $d_M\left(\dot{r}_{m,i_2,k} \big| \hat{\dot{r}}_{k|k}\right)$ are as described above.

For another example, the metric value corresponding to the association hypothesis may be a Euclidean distance, and the Euclidean distance corresponding to the association hypothesis may be as follows:

$$d_E\left(\dot{r}_{m,i_1,k-1}, \dot{r}_{m,i_2,k}\right) = d_E\left(\dot{r}_{m,i_1,k-1} \big| \hat{\dot{r}}_{k-1|k}\right) + d_E\left(\dot{r}_{m,i_2,k} \big| \hat{\dot{r}}_{k|k}\right) \tag{57}$$

$d_E(\dot{r}_{m,i1,k-1}, \dot{r}_{m,i2,k})$ is the Euclidean distance corresponding to the association hypothesis. $d_E\left(\dot{r}_{m,i_1,k-1} \big| \hat{\dot{r}}_{k-1|k}\right)$ and $d_E\left(\dot{r}_{m,i_2,k} \big| \hat{\dot{r}}_{k|k}\right)$ are as described above.

Optionally, the range value may be determined based on the smoothed estimate of the radial velocity, the radial velocity measured value that is obtained at the moment $t_{k-1}$ and that corresponds to the association hypothesis, the filtered estimate of the radial velocity, and the radial velocity measured value that is obtained at the moment $t_k$ and that corresponds to the association hypothesis. The range value may be a Mahalanobis distance or a Euclidean distance. If the range value is less than or equal to a preset threshold, the association hypothesis is a valid association hypothesis. For a valid association hypothesis, the metric value corresponding to the association hypothesis is determined.

For example, the valid association hypothesis may be an association hypothesis that meets the following inequalities (58) and (59):

$$d_M\left(\dot{r}_{m,i_1,k-1} \big| \hat{\dot{r}}_{k-1|k}\right) = \frac{\left|\dot{r}_{m,i_1,k-1} - \hat{\dot{r}}_{k-1|k}\right|^2}{S_{\dot{r},i_1,k-1|k}} \leq d_{M,Threshold}^1 \tag{58}$$

$$d_M\left(\dot{r}_{m,i_2,k} \big| \hat{\dot{r}}_{k|k}\right) = \frac{\left|\dot{r}_{m,i_2,k} - \hat{\dot{r}}_{k|k}\right|^2}{S_{\dot{r},i_2,k|k}} \leq d_{M,Threshold}^2 \tag{59}$$

$$d_M\left(\dot{r}_{m,i_1,k-1} \big| \hat{\dot{r}}_{k-1|k}\right) \text{ and } d_M\left(\dot{r}_{m,i_2,k} \big| \hat{\dot{r}}_{k|k}\right)$$

are as described above.

Alternatively, the valid association hypothesis may be an association hypothesis that meets the following inequality (60):

$$d_M\left(\dot{r}_{m,i_1,k-1} \big| \hat{\dot{r}}_{k-1|k}\right) + d_M\left(\dot{r}_{m,i_2,k} \big| \hat{\dot{r}}_{k|k}\right) \leq d_{M,Threshold}^3 \tag{60}$$

$d_{M,Threshold}^i$ (i= 1, 2, or 3) is a non-negative limit value. For example, $d_{M,Threshold}^i$ is equal to 1.5, 3, or 16.

Alternatively, the valid association hypothesis may be an association hypothesis that meets the following inequalities (61) and (62):

$$d_E\left(\dot{r}_{m,i_1,k-1}\middle|\hat{\dot{r}}_{k-1|k}\right) = \left|\dot{r}_{m,i_1,k-1} - \hat{\dot{r}}_{k-1|k}\right| \le d^1_{E,Threshold} \tag{61}$$

$$d_E\left(\dot{r}_{m,i_2,k}\middle|\hat{\dot{r}}_{k|k}\right) = \left|\dot{r}_{m,i_2,k} - \hat{\dot{r}}_{k|k}\right| \le d^2_{E,Threshold} \tag{62}$$

$d_E\left(\dot{r}_{m,i_1,k-1}\middle|\hat{\dot{r}}_{k-1|k}\right)$ and $d_E\left(\dot{r}_{m,i_2,k}\middle|\hat{\dot{r}}_{k|k}\right)$ are as described above.

Alternatively, the valid association hypothesis may be an association hypothesis that meets the following inequality (63):

$$d_E\left(\dot{r}_{m,i_1,k-1}\middle|\hat{\dot{r}}_{k-1|k}\right) + d_E\left(\dot{r}_{m,i_2,k}\middle|\hat{\dot{r}}_{k|k}\right) \le d^3_{E,Threshold} \tag{63}$$

$d^i_{E,Threshold}$ (i = 1, 2, or 3) is a non-negative limit value. For example, $d^i_{E,Threshold}$ is equal to 1.5, 2, 3, or 16.

It is assumed that the velocity estimate corresponding to the association hypothesis include A, B, and C. A is any one of the smoothed estimate of the radial velocity, the filtered estimate of the radial velocity, the smoothed estimate of the lateral velocity, the filtered estimate of the lateral velocity, the smoothed estimate of the projected component of the velocity vector in the specific direction, and the filtered estimate of the projected component of the velocity vector in the specific direction. B is any one of the smoothed estimate of the radial velocity, the filtered estimate of the radial velocity, the smoothed estimate of the lateral velocity, the filtered estimate of the lateral velocity, the smoothed estimate of the projected component of the velocity vector in the specific direction, and the filtered estimate of the projected component of the velocity vector in the specific direction other than A. C is any one of the smoothed estimate of the radial velocity, the filtered estimate of the radial velocity, the smoothed estimate of the lateral velocity, the filtered estimate of the lateral velocity, the smoothed estimate of the projected component of the velocity vector in the specific direction, and the filtered estimate of the projected component of the velocity vector in the specific direction other than A and B. A first metric value is determined based on A. A second metric value is determined based on B. A third metric value is determined based on C. A manner of determining a metric value based on a velocity estimate may be described in the foregoing manners (1) to (4), and details are not described herein. If the first metric value, the second metric value, and the third metric value are likelihood function values or log-likelihood function values, the metric value corresponding to the association hypothesis is a product of the first metric value, the second metric value, and the third metric value. If the first metric value, the second metric value, and the third metric value are range values, the metric value corresponding to the association hypothesis is a sum of the first metric value, the second metric value, and the third metric value. A specific principle is the same as the principle of determining the metric value corresponding to the association hypothesis when the velocity estimate corresponding to the association hypothesis includes A and B, and details are not described herein.

Practice is the same when the velocity estimate corresponding to the association hypothesis includes three or more of the smoothed estimate of the radial velocity, the filtered estimate of the radial velocity, the smoothed estimate of the lateral velocity, the filtered estimate of the lateral velocity, the smoothed estimate of the projected component of the velocity vector in the specific direction, and the filtered estimate of the projected component of the velocity vector in the specific direction. Details are not described herein.

2. The rectangular coordinate position vector is a three-dimensional vector.

For example, the association hypothesis is an association hypothesis $(i_1, i_2)$. The $i_1^{th}$ piece of spherical coordinate position measurement data at the moment $t_{k-1}$ may be converted into rectangular coordinate position components $(x_{m,i1,k-1}, y_{m,i1,k-1}, z_{m,i1,k-1})$, and the $i_2^{th}$ piece of spherical coordinate position measurement data at the moment $t_k$ may be converted into rectangular coordinate position components $(x_{m,i2,k}, y_{m,i2,k}, z_{m,i2,k})$. $x_{m,i1,k-1}$ and $x_{m,i2,k}$ are both position components on an X axis. $y_{m,i1,k-1}$ and $y_{m,i2,k}$ are both position components on a Y axis. $z_{m,i1,k-1}$ and $z_{m,i2,k}$ are both position components on a Z axis.

For example, position measurement data of a spherical coordinate position that is measured by a radar, sonar, or ultrasonic sensor includes a range $r_m$ of a target relative to the sensor, an azimuth $\theta_m$ of the target relative to the sensor, and a pitch angle $\varphi_m$ of the target relative to the sensor. Details are as follows:

$$r_m = r + \tilde{r} \tag{64}$$

$$\theta_m = \theta + \tilde{\theta} \tag{65}$$

$$\varphi_m = \varphi + \tilde{\varphi} \quad (66)$$

$\tilde{r}, \tilde{\theta}$, and $\tilde{\varphi}$ are respectively a measurement error of the range of the target relative to the sensor, a measurement error of the azimuth of the target relative to the sensor, and a measurement error of the pitch angle of the target relative to the sensor. r, 0, and $\varphi$ are respectively a true value of the range of the target relative to the sensor, a true value of the azimuth of the target relative to the sensor, and a true value of the pitch angle of the target relative to the sensor.

The spherical coordinate position measurement data may be converted into the rectangular coordinate position components as follows:

$$x_m = r_m \cdot \cos \varphi_m \cdot \cos \theta_m \quad (67)$$

$$y_m = r_m \cdot \cos \varphi_m \cdot \sin \theta_m \quad (68)$$

$$z_m = r_m \cdot \sin \varphi_m \quad (69)$$

$(x_m, y_m, z_m)$ are rectangular coordinate position components.

Alternatively, the spherical coordinate position measurement data may be converted into the rectangular coordinate position components as follows:

$$x_m = \lambda_\theta^{-1} \cdot \lambda_\varphi^{-1} \cdot r_m \cdot \cos \varphi_m \cdot \cos \theta_m \quad (70)$$

$$y_m = \lambda_\theta^{-1} \cdot \lambda_\varphi^{-1} \cdot r_m \cdot \cos \varphi_m \cdot \sin \theta_m \quad (71)$$

$$z_m = \lambda_\varphi^{-1} \cdot r_m \cdot \sin \varphi_m \quad (72)$$

$\lambda_\theta = e^{-\sigma_\theta^2}$, and $\lambda_\varphi = e^{-\sigma_\varphi^2}$. $\sigma_\theta^2$, and $\sigma_\varphi^2$ are respectively a variance of the measurement error of the azimuth of the target relative to the sensor and a variance of the measurement error of the pitch angle of the target relative to the sensor.

Based on the rectangular coordinate position components $(x_{m,i1,k-1}, y_{m,i1,k-1}, z_{m,i1,k-1})$ at the moment $t_{k-1}$ and the rectangular coordinate position components $(x_{m,i2,k}, y_{m,i2,k}, z_{m,i2,k})$ at the moment $t_k$, the velocity estimate corresponding to the association hypothesis may be obtained by using a least squares method or a two-point difference method. The velocity estimate corresponding to the association hypothesis includes a smoothed velocity estimate ( $\hat{\dot{x}}_{i_1,i_2,k-1|k}$, $\hat{\dot{y}}_{i_1,i_2,k-1|k}$, $\hat{\dot{z}}_{i_1,i_2,k-1|k}$ ) and/or a filtered velocity estimate ( $\hat{\dot{x}}_{i_1,i_2,k|k}$, $\hat{\dot{y}}_{i_1,i_2,k|k}$, $\hat{\dot{z}}_{i_1,i_2,k|k}$ ). Herein, the smoothed velocity component is a velocity component at the moment $t_{k-1}$ that is obtained based on the measurement data at the moment $t_{k-1}$ and the measurement data at the moment $t_k$. The filtered velocity component is a velocity component at the moment $t_k$ that is obtained based on the measurement data at the moment $t_{k-1}$ and the measurement data at the moment $t_k$. To be specific:

$$\hat{\dot{x}}_{i_1,i_2,k-1|k} = \frac{x_{m,i_2,k} - x_{m,i_1,k-1}}{T}, \quad \hat{\dot{y}}_{i_1,i_2,k-1|k} = \frac{y_{m,i_2,k} - y_{m,i_1,k-1}}{T}, \quad \hat{\dot{z}}_{i_1,i_2,k-1|k} = \frac{z_{m,i_2,k} - z_{m,i_1,k-1}}{T}$$

$$\hat{\dot{x}}_{i_1,i_2,k|k} = \frac{x_{m,i_2,k} - x_{m,i_1,k-1}}{T}, \quad \hat{\dot{y}}_{i_1,i_2,k|k} = \frac{y_{m,i_2,k} - y_{m,i_1,k-1}}{T}, \quad \hat{\dot{z}}_{i_1,i_2,k|k} = \frac{z_{m,i_2,k} - z_{m,i_1,k-1}}{T}$$

The estimate of the projected velocity component may be obtained based on the velocity estimate corresponding to the association hypothesis. The estimate of the projected velocity component includes a smoothed estimate and/or a filtered estimate. The projected velocity component may be a radial velocity, a lateral velocity, a longitudinal velocity, and/or the like. The metric value corresponding to the association hypothesis may be determined based on the estimate of the projected velocity component and the velocity measurement data. The velocity measurement data is a measured value of the projected velocity component. Alternatively, the estimate of the projected velocity component may be determined in another manner instead of using the foregoing velocity estimate.

Alternatively, an estimate of a velocity function may be obtained based on the velocity estimate corresponding to the association hypothesis. The estimate of the velocity function includes a smoothed estimate and/or a filtered estimate. Then, the metric value corresponding to the association hypothesis is determined based on the estimate of the velocity function and the velocity measurement data. Alternatively, the metric value corresponding to the association hypothesis is directly determined based on the velocity estimate corresponding to the association hypothesis and velocity measured values on the X axis and the Y axis.

The following describes in detail how to determine the estimate of the projected velocity component based on the foregoing velocity estimate, and how to determine, based on the estimate of the projected velocity component, the metric value corresponding to the association hypothesis.

(1) The estimate of the projected velocity component is a smoothed estimate of the radial velocity.

A smoothed estimate $\hat{\dot{r}}_{k-1|k}$ of the radial velocity may be obtained based on the smoothed velocity estimate ( $\hat{\dot{x}}_{i_1,i_2,k-1|k}$, $\hat{\dot{y}}_{i_1,i_2,k-1|k}$, $\hat{\dot{z}}_{i_1,i_2,k-1|k}$ ) and a relationship between the smoothed estimate of the radial velocity and a smoothed velocity estimate of a state vector. For example:

$$\hat{\dot{r}}_{k-1|k} = h\big(\hat{X}_{k-1|k}\big) = \frac{x_{m,i_1,k-1}\cdot\hat{\dot{x}}_{i_1,i_2,k-1|k}+y_{m,i_1,k-1}\cdot\hat{\dot{y}}_{i_1,i_2,k-1|k}+z_{m,i_1,k-1}\cdot\hat{\dot{z}}_{i_1,i_2,k-1|k}}{\hat{r}_{k-1|k}} \tag{73}$$

$\hat{X}_{k-1|k}$ is a smoothed estimate of the state vector. $\hat{X}_{k-1|k}$ includes at least the smoothed velocity estimate ( $\hat{\dot{x}}_{i_1,i_2,k-1|k}$, $\hat{\dot{y}}_{i_1,i_2,k-1|k}$, $\hat{\dot{z}}_{i_1,i_2,k-1|k}$ ). $\hat{X}_{k-1|k}$ may further include rectangular coordinate position components ($x_{m,i1,k-1}$, $y_{m,i1,k-1}$, $z_{m,i1,k-1}$) determined based on position measurement data obtained at the moment $t_{k-1}$. $\hat{r}_{k-1|k} = \left(x_{m,i_1,k-1}^2 + y_{m,i_1,k-1}^2 + z_{m,i_1,k-1}^2\right)^{\frac{1}{2}}$ .

The metric value corresponding to the association hypothesis may be determined based on the foregoing smoothed estimate $\hat{\dot{r}}_{k-1|k}$ of the radial velocity and a radial velocity measured value $\dot{r}_{m,i1,k-1}$ at the moment $t_{k-1}$ that corresponds to the association hypothesis. The metric value may be a likelihood function value, a log-likelihood function value, or a range value. The range value may be a Mahalanobis distance or a Euclidean distance. An implementation principle of determining the metric value corresponding to the association hypothesis based on the smoothed estimate $\hat{\dot{r}}_{k-1|k}$ of the radial velocity and the radial velocity measured value $\dot{r}_{m,i1,k-1}$ that is obtained at the moment $t_{k-1}$ and that corresponds to the association hypothesis is the same as the principle applied when the rectangular coordinate position components are two-dimensional, and details are not described herein again.

(2) The estimate of the projected velocity component is a filtered estimate of the radial velocity.

Optionally, the filtered estimate $\hat{\dot{r}}_{k|k}$ of the radial velocity that corresponds to the association hypothesis may be obtained based on the filtered velocity estimate ( $\hat{\dot{x}}_{i_1,i_2,k|k}$, $\hat{\dot{y}}_{i_1,i_2,k|k}$, $\hat{\dot{z}}_{i_1,i_2,k|k}$ ) and a relationship between the filtered estimate of the radial velocity and a filtered estimate of a state vector. For example:

$$\hat{\dot{r}}_{k|k} = h\big(\hat{X}_{k|k}\big) = \frac{x_{m,i_2,k}\cdot\hat{\dot{x}}_{i_1,i_2,k|k}+y_{m,i_2,k}\cdot\hat{\dot{y}}_{i_1,i_2,k|k}+z_{m,i_2,k}\cdot\hat{\dot{z}}_{i_1,i_2,k|k}}{\hat{r}_{k|k}} \tag{74}$$

$\hat{X}_{k|k}$ is the filtered estimate of the state vector. $\hat{X}_{k|k}$ includes at least the filtered velocity estimate ( $\hat{\dot{x}}_{i_1,i_2,k|k}$, $\hat{\dot{y}}_{i_1,i_2,k|k}$, $\hat{\dot{z}}_{i_1,i_2,k|k}$ ). $\hat{X}_{k|k}$ may further include rectangular coordinate position components ($x_{m,i2,k}$, $y_{m,i2,k}$, $z_{m,i2,k}$) determined based on position measurement data obtained at the moment $t_k$. $\hat{r}_{k|k} = \left(x_{m,i_2,k}^2 + y_{m,i_2,k}^2 + z_{m,i_2,k}^2\right)^{\frac{1}{2}}$ .

The metric value corresponding to the association hypothesis may be determined based on the foregoing filtered estimate $\hat{\dot{r}}_{k|k}$ of the radial velocity and a radial velocity measured value $\dot{r}_{m,i2,k}$ at the moment $t_k$ that corresponds to the association hypothesis. The metric value may be a likelihood function value, a log-likelihood function value, or a range value. The range value may be a Mahalanobis distance or a Euclidean distance. An implementation principle of determining the metric value corresponding to the association hypothesis based on the filtered estimate $\hat{r}_{k|k}$ of the radial velocity and the radial velocity measured value $\acute{r}_{m,i2,k}$ that is obtained at the moment $t_k$ and that corresponds to the association hypothesis is the same as the principle applied when the rectangular coordinate position components are two-dimensional.

(3) The estimate of the projected velocity component is a smoothed estimate of the lateral velocity, a smoothed estimate of the longitudinal velocity, or a smoothed estimate of a projected component of a velocity vector in a specific direction.

A smoothed estimate $\hat{v}_{k-1|k}$ of the projected velocity component may be obtained based on the smoothed velocity estimate ( $\hat{\dot{x}}_{i_1,i_2,k-1|k}$, $\hat{\dot{y}}_{i_1,i_2,k-1|k}$, $\hat{\dot{z}}_{i_1,i_2,k-1|k}$ ). In an implementation, the smoothed estimate of the projected velocity component may be obtained from the smoothed velocity estimate based on a relationship between the projected velocity component and a state vector.

For example, the projected velocity component may be the longitudinal velocity, and the smoothed estimate of the longitudinal velocity is as follows:

$$\hat{v}_{k-1|k} = \hat{\dot{x}}_{i_1,i_2,k-1|k}$$

For another example, the projected velocity component may be the lateral velocity, and the smoothed estimate of the lateral velocity is as follows:

$$\hat{v}_{k-1|k} = \hat{\dot{y}}_{i_1,i_2,k-1|k}$$

For another example, the projected velocity component may be the projected component of the velocity vector in the specific direction, and the smoothed estimate of the projected velocity component in the specific direction is as follows:

$$\hat{v}_{k-1|k} = \hat{\dot{x}}_{i_1,i_2,k-1|k} \cdot cos\varphi \cdot cos\theta + \hat{\dot{y}}_{i_1,i_2,k-1|k} \cdot cos\varphi \cdot sin\theta + \hat{\dot{z}}_{i_1,i_2,k-1|k} \cdot sin\varphi$$

( $\hat{\dot{x}}_{i_1,i_2,k-1|k}$, $\hat{\dot{y}}_{i_1,i_2,k-1|k}$, $\hat{\dot{z}}_{i_1,i_2,k-1|k}$ ) is the smoothed velocity estimate, and $\varphi$ and $\theta$ each are an included angle between the specific direction and the velocity vector.

The metric value corresponding to the association hypothesis may be determined based on the smoothed estimate $\hat{v}_{k-1|k}$ of the projected velocity component and a measured value $v_{m,i1,k-1}$ of the projected velocity component at the moment $t_{k-1}$ that corresponds to the association hypothesis. The metric value may be a likelihood function value, a log-likelihood function value, or a range value. The range value may be a Mahalanobis distance or a Euclidean distance. An implementation principle of determining the metric value corresponding to the association hypothesis based on the smoothed estimate $\hat{v}_{k-1|k}$ of the projected velocity component and the measured value $v_{m,i1,k-1}$ of the projected velocity component that is obtained at the moment $t_k$ and that corresponds to the association hypothesis is the same as the principle applied when the rectangular coordinate position components are two-dimensional.

(4) The estimate of the projected velocity component is a filtered estimate of the lateral velocity, a filtered estimate of the longitudinal velocity, or a filtered estimate of a projected component of a velocity vector in a specific direction.

A filtered estimate $\hat{v}_{k|k}$ of the projected velocity component may be obtained based on the filtered velocity estimate ( $\hat{\dot{x}}_{i_1,i_2,k|k}$, $\hat{\dot{y}}_{i_1,i_2,k|k}$, $\hat{\dot{z}}_{i_1,i_2,k|k}$ ) corresponding to the association hypothesis. In an implementation, the filtered estimate of the projected velocity component may be obtained from the filtered velocity estimate based on a relationship between the projected velocity component and a state vector.

For example, the projected velocity component may be the longitudinal velocity, and the filtered estimate of the longitudinal velocity is as follows:

$$\hat{v}_{k|k} = \hat{\dot{x}}_{i_1,i_2,k|k}$$

For another example, the projected velocity component may be the lateral velocity, and the filtered estimate of the lateral velocity is as follows:

$$\hat{v}_{k|k} = \hat{\dot{y}}_{i_1,i_2,k|k}$$

For another example, the projected velocity component may be the projected component of the velocity vector in the specific direction, and the filtered estimate of the projected velocity component in the specific direction is as follows:

$$\hat{v}_{k|k} = \hat{\dot{x}}_{i_1,i_2,k|k} \cdot cos\varphi \cdot cos\theta + \hat{\dot{y}}_{i_1,i_2,k|k} \cdot cos\varphi \cdot sin\theta + \hat{\dot{z}}_{i_1,i_2,k|k} \cdot sin\varphi \quad (75)$$

$\left(\hat{\dot{x}}_{i_1,i_2,k|k}, \hat{\dot{y}}_{i_1,i_2,k|k}, \hat{\dot{z}}_{i_1,i_2,k|k}\right)$ is the filtered velocity estimate, and $\varphi$ and $\theta$ each are an included angle between the specific direction and the velocity vector.

The metric value corresponding to the association hypothesis may be determined based on the filtered estimate $\hat{v}_{k|k}$ of the projected velocity component and a measured value $v_{m,i2,k}$ of the projected velocity component that is obtained at the moment $t_k$ and that corresponds to the association hypothesis. The metric value may be a likelihood function value, a log-likelihood function value, or a range value. The range value may be a Mahalanobis distance or a Euclidean distance. An implementation principle of determining the metric value corresponding to the association hypothesis based on the smoothed estimate $\hat{v}_{k|k}$ of the projected velocity component and the measured value $v_{m,i2,k}$ of the projected velocity component that is obtained at the moment $t_k$ and that corresponds to the association hypothesis is the same as the principle applied when the rectangular coordinate position components are two-dimensional.

(5) The estimate of the projected velocity component includes at least two of a smoothed estimate of the radial velocity, a filtered estimate of the radial velocity, a smoothed estimate of the lateral velocity, a filtered estimate of the lateral velocity, a smoothed estimate of a projected component of a velocity vector in a specific direction, and a filtered estimate of the projected component of the velocity vector in the specific direction.

An implementation principle of manner 5 is the same as the principle applied when the rectangular coordinate position components are two-dimensional, and details are not described herein again.

604. Determine an association relationship of the plurality of pieces of measurement data based on a metric value corresponding to at least one association hypothesis of the plurality of pieces of measurement data. Each of the at least one association hypothesis of the plurality of pieces of measurement data corresponds to two of the plurality of pieces of measurement data.

In an optional implementation, determining a data association based on the metric value of the association hypothesis may be determining the data association based on the metric value of the association hypothesis and according to a first constraint rule of measurement data. The first constraint rule may be that one piece of measurement data comes from one target, and the one target generates one or more pieces of measurement data. Optionally, the first constraint rule may be specifically that one piece of measurement data comes from one true target or one false target. The false target may be a false alarm, a clutter, or the like generated by a sensor. Each true target may generate one or more pieces of measurement data, or may encounter missing detection (missing detection). The association relationship of the plurality of pieces of measurement data may be more accurately determined according to the first constraint rule.

In the following, a process of determining a data association is described by using an example in which a sensor obtains $n_1$ and $n_2$ pieces of measurement data respectively at the moments $t_{k-1}$ and $t_k$, each piece of measurement data comes from one true target at most, each true target generates one piece of measurement data at most at each moment, and the metric value corresponding to the association hypothesis is a likelihood function value, a likelihood function logarithm value, or a range value.

The data association apparatus obtains the $n_1$ pieces of measurement data obtained through measurement by the sensor at the moment $t_{k-1}$ and the $n_2$ pieces of measurement data obtained through measurement by the sensor at the moment $t_k$. An index set of the $n_1$ pieces of measurement data is $M_1 = \{1, 2, ...., n_1\}$, and an index set of the $n_2$ pieces of measurement data is $M_2 = \{1, 2, ...., n_2\}$. The association hypothesis set is A, and A includes all possible associations of the measurement data, that is, $A = M_1 \times M_2 = \{(i_1,i_2)|i_1 \in M_1, i_2 \in M_2\}$. Alternatively, A includes a valid association hypothesis $(i_1, i_2)$. For the valid association hypothesis, refer to the foregoing corresponding description. Details are not described herein. When A includes the valid association hypothesis $(i_1, i_2)$, A is a subset of $M_1 \times M_2$ in this case.

The data association apparatus selects an association hypothesis ( $i_1^{(1)}$, $i_2^{(1)}$ ) with a largest likelihood function value (or log-likelihood function value) (or with a smallest range value) from the set A as the first true association. That is, the $i_1^{(1)}$ th piece of measurement data at the moment $t_{k-1}$ and the $i_2^{(1)}$ th piece of measurement data at the moment $t_k$ are associated with each other. In this case, it is considered that the two pieces of measurement data come from a same true target. Deleting all $(i_1^{(1)}, i_2)$ and $(i_1, i_2^{(1)})$ from A is equivalent to making A satisfy

$$A = A - \left\{(i_1^{(1)},i_2)\middle|(i_1^{(1)},i_2) \in A\right\} - \left\{(i_1,i_2^{(1)})\middle|(i_1,i_2^{(1)}) \in A\right\}$$ . Deleting $i_1^{(1)}$ from $M_1$ is equivalent to making $M_1$ satisfy

$$M_1 = M_1 - \left\{ i_1^{(1)} \right\}.$$ Deleting $i_2^{(1)}$ from $M_2$ is equivalent to making $M_2$ satisfy $M_2 = M_2 - \left\{ i_2^{(1)} \right\}.$

Without losing generality, the foregoing similar process is repeated as follows: An association ( $i_1^{(l)}$, $i_2^{(l)}$ ) with a largest likelihood function value (or log-likelihood function value) (or with a smallest range value) may be selected from A as the $l$th true association. That is, the $i_1^{(l)}$ th piece of measurement data at the moment $t_{k-1}$ and the $i_2^{(l)}$ th piece of measurement data at the moment $t_k$ are associated with each other. In this case, it is considered that the two pieces of measurement data come from a same true target. A is made to satisfy

$$A = A - \left\{ (i_1^{(l)}, i_2) \middle| (i_1^{(l)}, i_2) \in A \right\} - \left\{ (i_1, i_2^{(l)}) \middle| (i_1, i_2^{(l)}) \in A \right\}$$ Deleting $i_1^{(l)}$ from $M_1$ is equivalent to making $M_1$ satisfy

$$M_1 = M_1 - \left\{ i_1^{(l)} \right\}.$$ Deleting $i_2^{(l)}$ from $M_2$ is equivalent to making $M_2$ satisfy $M_2 = M_2 - \left\{ i_2^{(l)} \right\}. l \leq \min\{n_1, n_2\}.$ The foregoing process is repeated until $A, M_1,$ or $M_2$ is an empty set.

The association ( $i_1^{(l)}$, $i_2^{(l)}$ ) obtained in the foregoing process is a true data association. Finally, if $M_1$ or $M_2$ is not an empty set, it is determined that remaining measurement data therein is a false alarm, a clutter, or a new target.

In an optional implementation, a specific implementation of the determining an association relationship of the plurality of pieces of measurement data based on a metric value corresponding to at least one association hypothesis of the plurality of pieces of measurement data is: determining a maximum-likelihood association hypothesis based on the metric value corresponding to the at least one association hypothesis of the plurality of pieces of measurement data; and determining the association relationship of the plurality of pieces of measurement data based on the maximum-likelihood association hypothesis.

For example, $x_{i1,i2} = 1$ is used to indicate that the $i_1$th piece of measurement data at the moment $t_{k-1}$ and the $i_2$th piece of measurement data at the moment $t_k$ are associated with each other, that is, the two pieces of measurement data come from one true target; and $x_{i1,i2} = 0$ is used to indicate that the $i_1$th piece of measurement data at the moment $t_{k-1}$ and the $i_2$th piece of measurement data at the moment $t_k$ are not associated with each other, that is, the two pieces of measurement data do not come from one true target. $w_{i1,i2}$ is used to represent a log-likelihood function value of the association hypothesis between the $i_1$th piece of measurement data at the moment $t_{k-1}$ and the $i_2$th piece of measurement data at the moment $t_k$. In this case, the maximum-likelihood association hypothesis can be obtained by solving the following formula (76) by using a maximum weight matching problem.

$$\max_X f_2(X) = \sum_{(i_1, i_2) \in A} w_{i_1, i_2} \cdot x_{i_1, i_2} \tag{76}$$

$$\sum_{i_2=1}^{n_2} x_{i_1, i_2} \leq 1, i_1 = 1, 2, ..., n_1 \tag{77}$$

$$\sum_{i_1=1}^{n_1} x_{i_1, i_2} \leq 1, i_2 = 1, 2, ..., n_2 \tag{78}$$

$$x_{i_1, i_2} \geq 0$$

$$f_2(X) = \sum_{(i_1, i_2) \in A} w_{i_1, i_2} \cdot x_{i_1, i_2}$$ is a target function of the maximum matching problem, and formulas (77) and (78) are respectively constraint conditions that measurement data comes from one target at most or a true target generates one piece of measurement data at most. Maximizing a likelihood function of the association hypothesis is equivalent to maximizing the foregoing function $f_2(X)$.

An optimal solution X * of the maximum weight matching problem may be obtained based on a Hungarian (Hungarian) algorithm or a shortest augmentation path algorithm. If an element $x_{i_1, i_2}^*$ in $X^*$ is not a zero, the $i_1$th piece of measurement data at the moment $t_{k-1}$ and the $i_2$th piece of measurement data at the moment $t_k$ are associated with each other. That is, the two pieces of measurement data come from a same true target. The Hungarian (Hungarian) algorithm or the shortest augmentation path algorithm is a conventional technology, or may be obtained from a conventional technology, and details are not described herein.

In an optional implementation, a specific implementation of the determining an association relationship of the plurality of pieces of measurement data based on a metric value corresponding to at least one association hypothesis of the plurality of pieces of measurement data is: determining a maximum-likelihood association hypothesis or a global nearest-neighbor association hypothesis based on the metric value corresponding to the at least one association hypothesis of the plurality of pieces of measurement data; and determining the association relationship of the plurality of pieces of measurement data based on the maximum-likelihood association hypothesis or the global nearest-neighbor association hypothesis.

For example, $c_{i1,i2}$ is used to represent a log-likelihood function value or a range value of the association hypothesis between the $i_1$th piece of measurement data at the moment $t_{k-1}$ and the $i_2$th piece of measurement data at the moment $t_k$. The maximum-likelihood association hypothesis or the global nearest-neighbor association hypothesis can be obtained by solving the following by using a generalized assignment problem.

$$\min_{X} g_2(X) = \sum_{(i_1,i_2)\in A} c_{i_1,i_2} \cdot x_{i_1,i_2} \tag{79}$$

$$\sum_{i_2=1}^{n_2} x_{i_1,i_2} \leq 1, i_1 = 1, 2, ..., n_1 \tag{80}$$

$$\sum_{i_1=1}^{n_1} x_{i_1,i_2} \leq 1, i_2 = 1, 2, ..., n_2 \tag{81}$$

$$x_{i_1,i_2} \geq 0$$

$g_2(X) = \sum_{(i_1,i_2)\in A} w_{i_1,i_2} \cdot x_{i_1,i_2}$ is a target function of the generalized assignment problem, and formulas (80) and (81) are respectively constraint conditions that measurement data comes from one target at most or a true target generates one piece of measurement data at most. Minimizing the maximum-likelihood association hypothesis or the global nearest-neighbor association hypothesis is equivalent to minimizing the foregoing function $g_2(X)$.

An optimal solution X * of the foregoing generalized assignment problem may be obtained based on a Hungarian (Hungarian) algorithm or a shortest augmentation path algorithm. If an element $x^{*}_{i_1,i_2}$ in X * is not a zero, the $i_2$th piece of measurement data at the moment $t_{k-1}$ and the $i_2$th piece of measurement data at the moment $t_k$ are associated with each other. That is, the two pieces of measurement data come from a same true target. The Hungarian (Hungarian) algorithm or the shortest augmentation path algorithm is a conventional technology, or may be obtained from a conventional technology, and details are not described herein.

In an optional implementation, for example, the metric value of the association hypothesis is a likelihood function value (or an equivalent form thereof, such as a log-likelihood function value) or a range value. m optimal data associations can be determined, and m is a positive integer.

Specifically, the first optimal data association may be obtained by using the optimal solution of the maximum weight matching problem or the generalized assignment problem. Based on the optimal solution thereof, the foregoing problem may be divided into a plurality of sub-problems, and optimal solutions of the sub-problems may be obtained. The optimal solutions of the foregoing problems may be sorted based on target function values, to obtain the second optimal solution. In addition, based on the second optimal solution, the corresponding problem may be divided into a plurality of sub-problems, and optimal solutions of the sub problems may be obtained. The optimal solutions of the foregoing problems may be sorted based on target function values. By analogy, m optimal solutions are obtained. The m optimal solutions correspond to the m optimal data associations. The division based on the optimal solution of the maximum weight matching problem or the generalized assignment problem and the acquisition of the optimal solutions of the plurality of sub-problems may be implemented by using existing mathematical programming or an optimization algorithm. Details are not further described herein.

It can be learned that, by implementing the method described in FIG. 6, the metric value corresponding to the at least one association hypothesis can be determined by using the two frames of measurement data measured by the sensor, and further the association relationship of the two frames of measurement data can be determined based on the metric value corresponding to the at least one association hypothesis. This avoids using a prior velocity value with an excessively large error to determine the association relationship of the two frames of measurement data, thereby improving accuracy of determining the association relationship of the two frames of measurement data.

FIG. 7 is a schematic flowchart of a data association method according to an embodiment of this application. The method may be performed by a sensor system, a fusion perception system, or a planning/control system integrated with the foregoing systems, such as an assisted driving or autonomous driving system. Alternatively, the method may be performed by software or hardware (for example, a data association apparatus). Different execution steps may be implemented in a centralized manner or in a distributed manner. The method may alternatively be performed by a chip system. The chip system includes at least one processor and a communication interface or a memory. The memory is configured to store a program or instructions. The communication interface is configured to provide an information or data input/output function for the processor. As shown in FIG. 7, the data association method includes the following step 701 to step 704. The following provides a description by using step 701 to step 704 as an example.

701. Obtain a plurality of pieces of measurement data.

The plurality of pieces of measurement data include measurement data at three moments.

702. Determine, based on position measurement data included in three of the plurality of pieces of measurement data, a velocity estimate corresponding to an association hypothesis of the three pieces of measurement data.

703. Determine, based on the velocity estimate corresponding to the association hypothesis and velocity measurement data in the three pieces of measurement data, a metric value corresponding to the association hypothesis.

One or more association hypotheses may be determined from the plurality of pieces of obtained measurement data. Each association hypothesis corresponds to three pieces of measurement data. The three pieces of measurement data come from three moments. That is, measurement data corresponding to each association hypothesis comes from three moments.

The plurality of pieces of measurement data in step 701 include $N_{k-1}$ pieces of measurement data at a moment $t_{k-1}$, $N_k$ pieces of measurement data at a moment $t_k$, and $N_{k+1}$ pieces of measurement data at a moment $t_{k+1}$. Specifically, an index set of the $N_{k-1}$ pieces of measurement data at the moment $t_{k-1}$ may be $M_1 = \{1, 2, ..., N_{k-1}\}$, an index set of the $N_k$ pieces of measurement data at the moment $t_k$ may be $M_2 = \{1, 2, ..., N_k\}$, and an index set of the $N_{k+1}$ pieces of measurement data at the moment $t_{k+1}$ may be $M_3 = \{1, 2, ..., N_{k+1}\}$. An association hypothesis set is $A$, and A may be a set of all possible association hypotheses of the measurement data, that is, $A = M_1 \times M_2 \times M_3 = \{(i_1, i_2, i_3)|i_1 \in M_1, i_2 \in M_2, i_3 \in M_3\}$. $i_1$ is an index or a reference sign of the measurement data measured at the moment $t_{k-1}$, $i_2$ is an index or a reference sign of the measurement data measured at the moment $t_k$, and $i_3$ is an index or a reference sign of the measurement data measured at the moment $t_{k+1}$. Velocity estimates corresponding to all or some of the association hypotheses in the association hypothesis set A are determined. Metric values corresponding to the all or some of the association hypotheses are further determined based on the determined velocity estimates, and then associated measurement data is determined from the set $A$.

Optionally, the position measurement data included in the three pieces of measurement data corresponding to the association hypothesis may be polar coordinate position measurement data, spherical coordinate position measurement data, or rectangular coordinate position measurement data. Optionally, the polar coordinate position measurement data or the spherical coordinate position measurement data may be converted into the rectangular coordinate position measurement data. The velocity estimate corresponding to the association hypothesis can be determined based on the rectangular coordinate position measurement data. A rectangular coordinate position and a rectangular coordinate velocity may be two-dimensional, three-dimensional, or higher-dimensional vectors.

1. Rectangular coordinate position components are two-dimensional components.

For example, the association hypothesis is an association hypothesis $(i_1, i_2, i_3)$. The $i_1{}^{th}$ piece of polar coordinate position measurement data measured at the moment $t_{k-1}$ may be converted into rectangular coordinate position components $(x_{m,i1,k-1}, y_{m,i1,k-1})$. The $i_2{}^{th}$ piece of polar coordinate position measurement data measured at the moment $t_k$ is converted into rectangular coordinate position components $(x_{m,i2,k}, y_{m,i2,k})$. The $i_3{}^{th}$ piece of polar coordinate position measurement data measured at the moment $t_{k+1}$ is converted into rectangular coordinate position components $(x_{m,i3,k+1}, y_{m,i3,k+1})$. $x_{m,i1,k-1}$, $x_{m,i2,k}$, and $x_{m,i3,k+1}$ are all position components on an X axis. $y_{m,i1,k-1}$, $y_{m,i1,k-1}$, and $y_{m,i3,k+1}$ are all position components on a Y axis.

For an implementation principle about how to convert polar coordinate position measurement data into two-dimensional rectangular coordinate position components, refer to the implementation principle of converting polar coordinate position measurement data into two-dimensional rectangular coordinate position components in the embodiment corresponding to FIG. 5. Details are not described herein.

Based on the rectangular coordinate position components $(x_{m,i1,k-1}, y_{m,i1,k-1})$ at the moment $t_{k-1}$, the rectangular coordinate position components $(x_{m,i2,k}, y_{m,i2,k})$ at the moment $t_k$, and the rectangular coordinate position components $(x_{m,i32,k+1}, y_{m,i3,k+1})$ at the moment $t_{k+1}$, the velocity estimate corresponding to the association hypothesis may be obtained by using a least squares method or a two-point difference method. The velocity estimate corresponding to the association hypothesis includes a smoothed velocity estimate ( $\hat{\dot{x}}_{i_1,i_2,k-1|k}$, $\hat{\dot{y}}_{i_1,i_2,k-1|k}$ ) or a smoothed velocity estimate ( $\hat{\dot{x}}_{i_1,i_3,k-1|k+1}$, $\hat{\dot{y}}_{i_1,i_3,k-1|k+1}$ ), and/or a filtered velocity estimate ( $\hat{\dot{x}}_{i_1,i_2,k|k}$, $\hat{\dot{y}}_{i_1,i_2,k|k}$ ), and/or a predicted velocity estimate ( $\hat{\dot{x}}_{i_3,k+1|k}$, $\hat{\dot{y}}_{i_3,k+1|k}$ ). The smoothed velocity estimate herein is a velocity estimate at the moment $t_{k-1}$ that is obtained based on the measurement data at the moment $t_{k-1}$ and the measurement data at the moment $t_k$. The filtered velocity estimate herein is a velocity estimate at the moment $t_k$ that is obtained based on the measurement data at the moment $t_{k-1}$ and the measurement data at the moment $t_k$. Herein, the predicted velocity estimate is a velocity estimate at the moment $t_{k+1}$ that is obtained based on the measurement data at the moment $t_{k-1}$ and the measurement data at the moment $t_k$. For example:

$$\hat{\dot{x}}_{i_1,i_2,k-1|k} = \frac{x_{m,i_2,k}-x_{m,i_1,k-1}}{T}, \quad \hat{\dot{y}}_{i_1,i_2,k-1|k} = \frac{y_{m,i_2,k}-y_{m,i_1,k-1}}{T}$$

$$\hat{\dot{x}}_{i_1,i_3,k-1|k+1} = \frac{x_{m,i_3,k+1}-x_{m,i_1,k-1}}{2T}, \quad \hat{\dot{y}}_{i_1,i_3,k-1|k+1} = \frac{y_{m,i_3,k+1}-y_{m,i_1,k-1}}{2T}$$

$$\hat{\dot{x}}_{i_1,i_2,k|k} = \frac{x_{m,i_2,k}-x_{m,i_1,k-1}}{T}, \quad \hat{\dot{y}}_{i_1,i_2,k|k} = \frac{y_{m,i_2,k}-y_{m,i_1,k-1}}{T}$$

$$\hat{\dot{x}}_{i_3,k+1|k} = \frac{x_{m,i_2,k}-x_{m,i_1,k-1}}{T}, \quad \hat{\dot{y}}_{i_3,k+1|k} = \frac{y_{m,i_2,k}-y_{m,i_1,k-1}}{T}$$

$\hat{\dot{x}}_{i_1,i_2,k-1|k}$ , $\hat{\dot{x}}_{i_1,i_3,k-1|k+1}$ , $\hat{\dot{x}}_{i_1,i_2,k|k}$ , and $\hat{\dot{x}}_{i_3,k+1|k}$ are velocity components on the X axis, and $\hat{\dot{y}}_{i_1,i_2,k-1|k}$ , $\hat{\dot{y}}_{i_1,i_3,k-1|k+1}$ , $\hat{\dot{y}}_{i_1,i_2,k|k}$ , and $\hat{\dot{y}}_{i_3,k+1|k}$ are velocity components on the Y axis. $T = t_k - t_{k-1}$ is a time interval between the two frames.

An estimate of a projected velocity component may be obtained based on the velocity estimate corresponding to the association hypothesis. The estimate of the projected velocity component includes a smoothed estimate, a filtered estimate, and/or a predicted estimate. The projected velocity component may be a radial velocity, a lateral velocity, a longitudinal velocity, and/or the like. Then, the metric value corresponding to the association hypothesis is determined based on the estimate of the projected velocity component and the velocity measurement data. The velocity measurement data is a measured value of the projected velocity component. Alternatively, the estimate of the projected velocity component may be determined in another manner instead of using the foregoing velocity estimate.

A principle of determining a predicted estimate of the projected velocity component is the same as the principle of determining the smoothed estimate and the filtered estimate of the projected velocity component, and details are not described herein. For details about determining the metric value corresponding to the association hypothesis based on the estimate of the projected velocity component and the velocity measurement data, refer to the description of the embodiment corresponding to FIG. 6. Details are not described herein.

2. Rectangular coordinate position components are three-dimensional components.

For example, the association hypothesis is an association hypothesis ($i_1$, $i_2$, $i_3$). The $i_1$th piece of spherical coordinate position measurement data at the moment $t_{k-1}$ may be converted into rectangular coordinate position components ($x_{m,i1,k-1}$, $y_{m,i1,k-1}$, $z_{m,i1,k-1}$). The $i_2$th piece of spherical coordinate position measurement data at the moment $t_k$ is converted into rectangular coordinate position components ($x_{m,i2,k}$, $y_{m,i2,k}$, $z_{m,i2,k}$). The $i_3$th piece of spherical coordinate position measurement data at the moment $t_{k+1}$ is converted into rectangular coordinate position components ($x_{m,i32,k+1}$, $y_{m,i3,k+1}$, $z_{m,i3,k+1}$). $x_{m,i1,k-1}$, $x_{m,i2,k}$, and $x_{m,i32,k+1}$ are all position components on an X axis. $y_{m,i1,k-1}$, $y_{m,i1}$,k-1 , and $y_{m,i3,k+1}$ are all position components on a Y axis. $z_{m,i1,k-1}$, $z_{m,i2,k}$, and $z_{m,i3,k+1}$ are all position components on a Z axis.

For an implementation principle about how to convert spherical coordinate position measurement data into three-dimensional rectangular coordinate position components, refer to the implementation principle of converting spherical coordinate position measurement data into three-dimensional rectangular coordinate position components in the embodiment corresponding to FIG. 6. Details are not described herein.

Based on the rectangular coordinate position components ($x_{m,i1,k-1}$, $y_{m,i1,k-1}$, $z_{m,i1,k-1}$) at the moment $t_{k-1}$, the rectangular coordinate position components ($x_{m,i2,k}$, $y_{m,i2,k}$, $z_{m,i2,k}$) at the moment $t_k$, and the rectangular coordinate position components ($x_{m,i32,k+1}$, $y_{m,i3,k+1}$, $z_{m,i3,k+1}$) at the moment $t_{k+1}$, the velocity estimate corresponding to the association hypothesis may be obtained by using a least squares method or a two-point difference method. The velocity estimate corresponding to the association hypothesis includes a smoothed velocity estimate (

$\hat{x}_{i_1,i_2,k-1|k}$, $\hat{y}_{i_1,i_2,k-1|k}$, $\hat{z}_{i_1,i_2,k-1|k}$ ) or a smoothed velocity estimate ( $\hat{x}_{i_1,i_3,k-1|k+1}$, $\hat{y}_{i_1,i_3,k-1|k+1}$, $\hat{z}_{i_1,i_3,k-1|k+1}$ ),

and/or a filtered velocity estimate ( $\hat{x}_{i_1,i_2,k|k}$, $\hat{y}_{i_1,i_2,k|k}$ ), and/or a predicted velocity estimate ( $\hat{x}_{i_3,k+1|k}$,

$\hat{y}_{i_3,k+1|k}$, $\hat{z}_{i_3,k+1|k}$ ). The smoothed velocity estimate herein is a velocity estimate at the moment $t_{k-1}$ that is obtained based on the measurement data at the moment $t_{k-1}$ and the measurement data at the moment $t_k$. The filtered velocity estimate is a velocity estimate at the moment $t_k$ that is obtained based on the measurement data at the moment $t_{k-1}$ and the measurement data at the moment $t_k$. The predicted velocity estimate is a velocity estimate at the moment $t_{k+1}$ that is obtained based on the measurement data at the moment $t_{k-1}$ and the measurement data at the moment $t_k$. For example:

$$\hat{x}_{i_1,i_2,k-1|k} = \frac{x_{m,i_2,k}-x_{m,i_1,k-1}}{T}, \quad \hat{y}_{i_1,i_2,k-1|k} = \frac{y_{m,i_2,k}-y_{m,i_1,k-1}}{T}, \quad \hat{z}_{i_1,i_2,k-1|k} = \frac{z_{m,i_2,k}-z_{m,i_1,k-1}}{T}$$

$$\hat{x}_{i_1,i_3,k-1|k+1} = \frac{x_{m,i_3,k+1}-x_{m,i_1,k-1}}{2T}, \quad \hat{y}_{i_1,i_3,k-1|k+1} = \frac{y_{m,i_3,k+1}-y_{m,i_1,k-1}}{2T}, \quad \hat{z}_{i_1,i_3,k-1|k+1} = \frac{z_{m,i_3,k+1}-z_{m,i_1,k-1}}{2T}$$

$$\hat{x}_{i_1,i_2,k|k} = \frac{x_{m,i_2,k}-x_{m,i_1,k-1}}{T}, \quad \hat{y}_{i_1,i_2,k|k} = \frac{y_{m,i_2,k}-y_{m,i_1,k-1}}{T}, \quad \hat{z}_{i_1,i_2,k|k} = \frac{z_{m,i_2,k}-z_{m,i_1,k-1}}{T}$$

$$\hat{x}_{i_3,k+1|k} = \frac{x_{m,i_2,k}-x_{m,i_1,k-1}}{T}, \quad \hat{y}_{i_3,k+1|k} = \frac{y_{m,i_2,k}-y_{m,i_1,k-1}}{T}, \quad \hat{z}_{i_3,k+1|k} = \frac{z_{m,i_2,k}-z_{m,i_1,k-1}}{T}$$

$T = t_k - t_{k-1}$ is a time interval between the two frames.

An estimate of a projected velocity component may be obtained based on the velocity estimate corresponding to the association hypothesis. The estimate of the projected velocity component includes a smoothed estimate, a filtered estimate, and/or a predicted estimate. The projected velocity component may be a radial velocity, a lateral velocity, a longitudinal velocity, and/or the like. The metric value corresponding to the association hypothesis may be determined based on the estimate of the projected velocity component and the velocity measurement data. The velocity measurement data is a measured value of the projected velocity component. Alternatively, the estimate of the projected velocity component may be determined in another manner instead of using the foregoing velocity estimate.

A principle of determining a predicted estimate of the projected velocity component is the same as the principle of determining the smoothed estimate and the filtered estimate of the projected velocity component, and details are not described herein. For details about determining the metric value corresponding to the association hypothesis based on the estimate of the projected velocity component and the velocity measurement data, refer to the description of the embodiment corresponding to FIG. 6. Details are not described herein.

704. Determine an association relationship of the plurality of pieces of measurement data based on a metric value corresponding to at least one association hypothesis of the plurality of pieces of measurement data. Each of the at least one association hypothesis of the plurality of pieces of measurement data corresponds to three of the plurality of pieces of measurement data.

In an optional implementation, determining a data association based on the metric value of the association hypothesis may be determining the data association based on the metric value of the association hypothesis and according to a first constraint rule of measurement data. The first constraint rule may be that one piece of measurement data comes from one target, and the one target generates one or more pieces of measurement data. Optionally, the first constraint rule may be specifically that one piece of measurement data comes from one true target or one false target. The false target may be a false alarm, a clutter, or the like generated by a sensor. Each true target may generate one or more pieces of measurement data, or may encounter missing detection. The association relationship of the plurality of pieces of measurement data may be more accurately determined according to the first constraint rule.

In the following, a process of determining a data association is described by using an example in which $n_1, n_2$, and $n_3$ pieces of measurement data are obtained respectively at the moments $t_{k-1}, t_k$, and $t_{k+1}$, each piece of measurement data comes from one true target at most, each true target generates one piece of measurement data at most at each moment, and the metric value corresponding to the association hypothesis is a likelihood function value, a log-likelihood function value, or a range value.

The $n_1$ pieces of measurement data at the moment $t_{k-1}$, the $n_2$ pieces of measurement data at the moment $t_k$, and the $n_3$ pieces of measurement data at the moment $t_{k+1}$ are obtained. An index set of the $n_1$ pieces of measurement data is $M_1 = \{0,1,2, ...., n_1\}$, an index set of the $n_2$ pieces of measurement data is $M_2 = \{0,1,2,...., n_2\}$, and an index set of the $n_3$ pieces of measurement data is $M_3 = \{0,1,2,...., n_3\}$. An index 0 indicates virtual measurement data, that is, a case in which no measurement data is available because a target encounters missing detection. An association hypothesis set is A, and A includes all possible associations of the measurement data, that is, $A = M_1 \times M_2 \times M_3 = \{(i_1,i_2,i_3)|i_1 \in M_1, i_2 \in M_2, i_3 \in M_3\}$. Alternatively, A includes a valid association hypothesis $(i_1, i_2, i_3)$. When A includes the valid association hypothesis $(i_1, i_2, i_3)$, $A$ is a subset of $M_1 \times M_2 \times M_3$ in this case. Optionally, at least two of three indexes $i_1$, $i_2$, and $i_3$ of the association hypothesis $(i_1, i_2, i_3)$ in A are not zeros, that is, an all-zero case or a case with two of the indexes being zeros does not exist.

An association hypothesis ( $i_1^{(1)}$ , $i_2^{(1)}$ , $i_3^{(1)}$ ) with a largest likelihood function value (or log-likelihood function value) (or with a smallest range value) is selected from the set A as the first true association. That is, the $i_1^{(1)}$ th piece of measurement data at the moment $t_{k-1}$, the $i_2^{(1)}$ th piece of measurement data at the moment $t_k$, and the $i_3^{(1)}$ th piece of measurement data at the moment $t_{k+1}$ are associated with one another. In this case, it is considered that the three pieces of measurement data come from a same true target. If $i_1^{(1)} \neq 0$ , all $(i_1^{(1)}, i_2, i_3)$ ) are deleted from A. If $i_2^{(1)} \neq 0$ , all $(i_1, i_2^{(1)}, i_3)$ are deleted from A. If $i_3^{(1)} \neq 0$ , all $(i_1, i_2, i_3^{(1)})$ are deleted from A. That is, $A$ is made to satisfy the following:

$$A = A - \left\{ (i_1^{(1)}, i_2, i_3) \middle| i_1^{(1)} \neq 0, (i_1^{(1)}, i_2, i_3) \in A \right\} - \left\{ (i_1, i_2^{(1)}, i_3) \middle| i_2^{(1)} \neq 0, (i_1, i_2^{(1)}, i_3) \in A \right\}$$
$$- \left\{ (i_1, i_2, i_3^{(1)}) \middle| i_3^{(1)} \neq 0, (i_1, i_2, i_3^{(1)}) \in A \right\} \tag{82}$$

If $i_1^{(1)} \neq 0$, $i_1^{(1)}$ is deleted from $M_1$. That is, $M_1$ is made to satisfy $M_1 = M_1 - \left\{ i_1^{(1)}, i_1^{(1)} \neq 0 \right\}$ . If $i_2^{(1)} \neq 0$, $i_2^{(1)}$ is deleted from $M_2$. That is, $M_2$ is made to satisfy $M_2 = M_2 - \left\{ i_2^{(1)}, i_2^{(1)} \neq 0 \right\}$ . If $i_3^{(1)} \neq 0$, $i_3^{(1)}$ is deleted from $M_3$. That is, $M_3$ is made to satisfy $M_3 = M_3 - \left\{ i_3^{(1)}, i_3^{(1)} \neq 0 \right\}$ .

Without losing generality, the foregoing similar process is repeated as follows: An association ( $i_1^{(l)}$ , $i_2^{(l)}$ , $i_3^{(l)}$ ) with a largest likelihood function value (or log-likelihood function value) (or with a smallest range value) may be selected from A as the $l$th true association. That is, the $i_1^{(l)}$ th piece of measurement data at the moment $t_{k-1}$, the $i_2^{(l)}$ th piece of measurement data at the moment $t_k$, and the $i_3^{(l)}$ th piece of measurement data at the moment $t_{k+1}$ are associated with one another. In this case, it is considered that the three pieces of measurement data come from a same true target. That is, A is made to satisfy the following:

$$A = A - \left\{ (i_1^{(l)}, i_2, i_3) \middle| i_1^{(l)} \neq 0, (i_1^{(l)}, i_2, i_3) \in A \right\} - \left\{ (i_1, i_2^{(l)}, i_3) \middle| i_2^{(l)} \neq 0, (i_1, i_2^{(l)}, i_3) \in A \right\}$$
$$- \left\{ (i_1, i_2, i_3^{(l)}) \middle| i_3^{(l)} \neq 0, (i_1, i_2, i_3^{(l)}) \in A \right\} \tag{83}$$

If $i_1^{(l)} \neq 0$, $i_1^{(l)}$ is deleted from $M_1$. That is, $M_1$ is made to satisfy $M_1 = M_1 - \left\{ i_1^{(l)}, i_1^{(l)} \neq 0 \right\}$ . If $i_2^{(l)} \neq 0$, $i_2^{(l)}$ is deleted from $M_2$. That is, $M_2$ is made to satisfy $M_2 = M_2 - \left\{ i_2^{(l)}, i_2^{(l)} \neq 0 \right\}$ . If $i_3^{(l)} \neq 0$, $i_3^{(l)}$ is deleted from $M_3$. That is, $M_3$ is made to satisfy $M_3 = M_3 - \left\{ i_3^{(l)}, i_3^{(l)} \neq 0 \right\}$ . $l \leq \min\{n_1, n_2, n_3\}$. The foregoing process is repeated until $A$, $M_1$, $M_2$, or $M_3$ is an empty set.

Finally, if $M_1$, $M_2$, or $M_3$ includes measurement data with a non-zero index, it is determined that the measurement data with the non-zero index therein is a false alarm, a clutter, or a new target.

In an optional implementation, a specific implementation of the determining an association relationship of the plurality of pieces of measurement data based on a metric value corresponding to at least one association hypothesis of the plurality of pieces of measurement data is: determining a maximum-likelihood association hypothesis based on the metric value corresponding to the at least one association hypothesis of the plurality of pieces of measurement data; and determining the association relationship of the plurality of pieces of measurement data based on the maximum-likelihood association hypothesis. The maximum-likelihood association hypothesis is an association hypothesis that corresponds to the plurality of pieces of measurement data and that has a maximum likelihood function value. The metric value is a likelihood function value, a log-likelihood function value, or an equivalent form.

For example, the metric value of the association hypothesis is a likelihood function value. $x_{i1,,i2,i3} = 1$ is used to indicate that the $i_1{}^{th}$ piece of measurement data at the moment $t_{k-1}$, the $i_2{}^{th}$ piece of measurement data at the moment $t_k$, and the $i_3{}^{th}$ piece of measurement data at the moment $t_{k+1}$ are associated with one another, that is, the three pieces of measurement data come from one true target; and $x_{i1,i2,i3} = 0$ is used to indicate that the three pieces of measurement data are not associated with one another, that is, the three pieces of measurement data do not come from one true target. $w_{i1,i2,i3}$ is used to represent a log-likelihood function value of the association hypothesis among the $i_1{}^{th}$ piece of measurement data at the moment $t_{k-1}$, the $i_2{}^{th}$ piece of measurement data at the moment $t_k$, and the $i_3{}^{th}$ piece of measurement data at the moment $t_{k+1}$. In this case, the maximum-likelihood association hypothesis can be obtained by solving the following formula (84) by using a maximum weight matching problem.

$$\max_X f_3(X) = \sum_{(i_1,i_2,i_3) \in A} w_{i_1,i_2,i_3} \cdot x_{i_1,i_2,i_3} \tag{84}$$

$$\sum_{i_2=0}^{n_2} \sum_{i_3=0}^{n_3} x_{i_1,i_2,i_3} = 1, i_1 = 1, 2, ..., n_1 \tag{85}$$

$$\sum_{i_1=0}^{n_1} \sum_{i_3=0}^{n_3} x_{i_1,i_2,i_3} = 1, i_2 = 1, 2, ..., n_2 \tag{86}$$

$$\sum_{i_1=0}^{n_1} \sum_{i_2=0}^{n_2} x_{i_1,i_2,i_3} = 1, i_3 = 1, 2, ..., n_3 \tag{87}$$

$$x_{i_1,i_2,i_3} \in \{0,1\}$$

$f_3(X) = \sum_{(i1,i2,i3) \in A} w_{i1,i2,i3} \cdot x_{i1,i2,i3}$ is a target function of the maximum matching problem, and formulas (85), (86), and (87) are respectively constraint conditions that measurement data comes from one target at most or a true target generates one piece of measurement data at most. Maximizing a likelihood function of the association hypothesis is equivalent to maximizing the foregoing function $f_3(X)$.

An optimal solution $X^*$ of the maximum weight matching problem may be obtained based on a branch and bound algorithm or a relaxation algorithm. If an element $x^*_{i_1,i_2,i_3}$ in X* is not a zero, the $i_1{}^{th}$ piece of measurement data at the moment $t_{k-1}$, the $i_2{}^{th}$ piece of measurement data at the moment $t_k$, the $i_3{}^{th}$ piece of measurement data at the moment $t_{k+1}$ are associated with one another. That is, the three pieces of measurement data come from a same true target (if one piece of measurement data has an index of 0, it indicates that no data exists at a corresponding moment). The branch and bound algorithm or the relaxation algorithm is a conventional technology, or may be obtained from a conventional technology, and details are not described herein.

In an optional implementation, a specific implementation of the determining an association relationship of the plurality of pieces of measurement data based on a metric value corresponding to at least one association hypothesis of the plurality of pieces of measurement data is: determining a maximum-likelihood association hypothesis or a global nearest-neighbor association hypothesis based on the metric value corresponding to the at least one association hypothesis of the plurality of pieces of measurement data; and determining the association relationship of the plurality of pieces of measurement data based on the maximum-likelihood association hypothesis or the global nearest-neighbor association hypothesis. The global nearest-neighbor association hypothesis is an association hypothesis that corresponds to the plurality of pieces of measurement data and that has a minimum global range. The global range may be defined based on a Mahalanobis distance, a Euclidean distance, or the like. This is not limited herein.

For example, C $_{i1,i2,i3}$ is used to represent a negative value of a log-likelihood function value of or represent a range value of the association hypothesis among the $i_1{}^{th}$ piece of measurement data at the moment $t_{k-1}$, the $i_2{}^{th}$ piece of measurement data at the moment $t_k$, and the $i_3{}^{th}$ piece of measurement data at the moment $t_{k+1}$. The maximum-likelihood association hypothesis or the global nearest-neighbor association hypothesis can be obtained by solving the following formula (88) by using a generalized assignment problem.

$$\max_{X} g_3(X) = \sum_{(i_1,i_2,i_3)\in A} c_{i_1,i_2,i_3} \cdot x_{i_1,i_2,i_3} \tag{88}$$

$$\sum_{i_2=0}^{n_2} \sum_{i_3=0}^{n_3} x_{i_1,i_2,i_3} = 1, i_1 = 1, 2, ..., n_1 \tag{89}$$

$$\sum_{i_1=0}^{n_1} \sum_{i_3=0}^{n_3} x_{i_1,i_2,i_3} = 1, i_2 = 1, 2, ..., n_2 \tag{90}$$

$$\sum_{i_1=0}^{n_1} \sum_{i_2=0}^{n_2} x_{i_1,i_2,i_3} = 1, i_3 = 1, 2, ..., n_3 \tag{91}$$

$$x_{i_1,i_2,i_3} \in \{0,1\}$$

$g_3(X) = \sum_{(i_1,i_2,i_3)\in A} c_{i_1,i_2,i_3} \cdot x_{i_1,i_2,i_3}$ is a target function of the maximum matching problem, and formulas (89), (90), and (91) are respectively constraint conditions that measurement data comes from one target at most or a true target generates one piece of measurement data at most. Minimizing the maximum-likelihood association hypothesis or the global nearest-neighbor association hypothesis is equivalent to minimizing the foregoing function $g_3(X)$.

An optimal solution X * of the generalized assignment problem may be obtained based on a Hungarian (Hungarian) algorithm or a shortest augmentation path (Shortest Augmentation Path) algorithm. If an element $x^*_{i_1,i_2,i_3}$ in X * is not a zero, the $i_1$<sup>th</sup> piece of measurement data at the moment $t_{k-1}$, the $i_2$<sup>th</sup> piece of measurement data at the moment $t_k$, the $i_3$<sup>th</sup> piece of measurement data at the moment $t_{k+1}$ are associated with one another. That is, the three pieces of measurement data come from a same true target (if one piece of measurement data has an index of 0, it indicates that no data exists at a corresponding moment). The Hungarian (Hungarian) algorithm or the shortest augmentation path algorithm is a conventional technology, or may be obtained from a conventional technology, and details are not described herein.

In an optional implementation, for example, the metric value of the association hypothesis is a likelihood function value (or an equivalent form thereof, such as a log-likelihood function value) or a range value. m optimal data associations can be determined, and m is a positive integer.

Specifically, the first optimal data association may be obtained by using the optimal solution of the maximum weight matching problem or the generalized assignment problem. Based on the optimal solution thereof, the foregoing problem may be divided into a plurality of sub-problems, and optimal solutions of the sub-problems may be obtained. The optimal solutions of the foregoing problems may be sorted based on target function values, to obtain the second optimal solution. In addition, based on the second optimal solution, the corresponding problem may be divided into a plurality of sub-problems, and optimal solutions of the sub problems may be obtained. The optimal solutions of the foregoing problems may be sorted based on target function values. By analogy, m optimal solutions are obtained. The m optimal solutions correspond to the m optimal data associations. The division based on the optimal solution of the maximum weight matching problem or the generalized assignment problem and the acquisition of the optimal solutions of the plurality of sub-problems may be implemented by using existing mathematical programming or an optimization algorithm. Details are not further described herein.

It can be learned that, by implementing the method described in FIG. 7, the metric value corresponding to the at least one association hypothesis can be determined by using the three frames of measurement data measured by the sensor, and further the association relationship of the three frames of measurement data can be determined based on the metric value corresponding to the at least one association hypothesis. This avoids using a prior velocity value with an excessively large error to determine the association relationship of the three frames of measurement data, thereby improving accuracy of determining the association relationship of the three frames of measurement data.

In embodiments of the present invention, function units of the apparatus may be obtained through division based on the foregoing method examples. For example, each function unit may be obtained through division based on a corresponding function, or two or more functions may be integrated into one module. The integrated module may be implemented in a form of hardware, or may be implemented in a form of a software function unit. It should be noted that, in embodiments of the present invention, division into the units is an example, and is merely a logical function division. During actual implementation, another division manner may be used.

FIG. 8 is a schematic diagram of a structure of a data association apparatus according to an embodiment of this application. The data association apparatus shown in FIG 8 may be configured to perform some or all functions of the data association apparatus in the method embodiment described in FIG. 3 or FIG. 7. The data association apparatus shown in FIG 8 may include an obtaining unit 801 and a determining unit 802.

The obtaining unit 801 is configured to obtain a plurality of pieces of measurement data, where each of the plurality of pieces of measurement data includes position measurement data and velocity measurement data. The determining unit 802 is configured to determine, based on position measurement data included in at least two of the plurality of pieces of measurement data, a velocity estimate corresponding to an association hypothesis of the at least two pieces of measurement data. The determining unit 802 is further configured to determine, based on the velocity estimate corresponding to the association hypothesis and velocity measurement data in the at least two pieces of measurement data, a metric value corresponding to the association hypothesis. The determining unit 802 is further configured to determine an association relationship of the plurality of pieces of measurement data based on a metric value corresponding to at least one association hypothesis of the plurality of pieces of measurement data. Each of the at least one association hypothesis of the plurality of pieces of measurement data corresponds to at least two of the plurality of pieces of measurement data.

In an optional implementation, the at least two pieces of measurement data come from at least two moments; or the at least two pieces of measurement data come from at least two sensors.

In an optional implementation, the velocity estimate includes one or more of a smoothed velocity estimate, a filtered velocity estimate, and a predicted velocity estimate.

In an optional implementation, a specific implementation in which the determining unit 802 determines, based on the velocity estimate corresponding to the association hypothesis and the velocity measurement data in the at least two pieces of measurement data, the metric value corresponding to the association hypothesis is: determining, based on an estimate of a projected velocity component corresponding to the association hypothesis and the velocity measurement data in the at least two pieces of measurement data, the metric value corresponding to the association hypothesis, where the estimate of the projected velocity component includes a radial velocity estimate and/or a lateral velocity estimate and/or a longitudinal velocity estimate, the radial velocity estimate is obtained based on the velocity estimate, the lateral velocity estimate is obtained based on the velocity estimate, and the longitudinal velocity estimate is obtained based on the velocity estimate.

In an optional implementation, the determining unit 802 is specifically configured to determine, based on the velocity estimate corresponding to the association hypothesis and the velocity measurement data in the at least two pieces of measurement data, whether the association hypothesis is a valid association hypothesis; and for a valid association hypothesis, determine the metric value corresponding to the association hypothesis.

In an optional implementation, that the association hypothesis is valid means: a range value determined based on the velocity estimate corresponding to the association hypothesis and velocity measurement data in the at least two pieces of measurement data is less than or equal to a preset threshold.

In an optional implementation, the metric value corresponding to the association hypothesis is a likelihood function value or a log-likelihood function value or a range value that is obtained based on the velocity measurement data and the velocity estimate.

In an optional implementation, the determining unit 802 is specifically configured to determine a maximum-likelihood association hypothesis or a global nearest-neighbor association hypothesis based on the metric value corresponding to the at least one association hypothesis of the plurality of pieces of measurement data; and determine the association relationship of the plurality of pieces of measurement data based on the maximum-likelihood association hypothesis or the global nearest-neighbor association hypothesis.

In an optional implementation, the determining unit 802 is specifically configured to determine the association relationship of the plurality of pieces of measurement data based on the metric value corresponding to the at least one association hypothesis of the plurality of pieces of measurement data and according to a first constraint rule, where the first constraint rule is that one piece of measurement data comes from one target, and the one target generates one or more pieces of measurement data.

Based on a same inventive concept, a problem resolving principle of the data association apparatus provided in this embodiment of this application is similar to the principle of the method embodiment of this application. Therefore, for the problem resolving principle of the data association apparatus, refer to the method embodiment. For brief description, details are not described herein again.

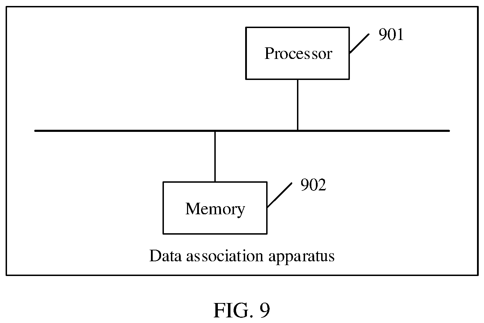

FIG. 9 is a schematic diagram of a structure of a data association apparatus disclosed in an embodiment of this application. As shown in FIG. 9, the data association apparatus includes a processor 901 and a memory 902. The processor 901 is connected to the memory 902.

The processor 901 may be a central processing unit (central processing unit, CPU), a general-purpose processor, a co-processor, a digital signal processor (digital signal processor, DSP), an application-specific integrated circuit (application-specific integrated circuit, ASIC), a field programmable gate array (field programmable gate array, FPGA) or another programmable logical device, a transistor logic device, a hardware component, or any combination thereof. Alternatively, the processor 901 may be a combination of processors implementing a computing function, for example, a combination of one or more microprocessors, or a combination of the DSP and a microprocessor.

The processor 901 invokes program code stored in the memory 902, to perform the steps in the foregoing method embodiments. The memory 902 is further configured to store cache data in a process of performing the foregoing method. The memory 902 and the processor 901 are coupled to each other. Optionally, the memory 902 and the processor 901 may be integrated together. The obtaining unit and the determining unit described above may be implemented by using the processor 901.

Based on a same inventive concept, a problem resolving principle of the data association apparatus provided in this embodiment of this application is similar to the principle of the method embodiment of this application. Therefore, for the problem resolving principle of the data association apparatus, refer to the method embodiment. For brief description, details are not described herein again.

An embodiment of this application further provides a chip system. The chip system includes a processor, configured to support a data association apparatus in implementing the functions in the foregoing embodiments, for example, generating or processing data and/or information in the foregoing methods. Optionally, the chip system further includes an interface circuit, and the processor obtains information or outputs information through the interface circuit. It should be noted herein that the chip system may be an integrated circuit. Further, the integrated circuit includes at least one transistor and/or at least one logic gate.

Further, optionally, the chip system may further include a memory. The memory is configured to store necessary program instructions and data. The processor may invoke and execute the program instructions, to implement the method provided in this application. The chip system may include a chip, or may include a chip and another discrete component.

An embodiment of the present invention further provides a computer-readable storage medium. The computer-readable storage medium stores instructions. When the instructions are run on a processor, method procedures in the foregoing method embodiments are implemented.

An embodiment of the present invention further provides a computer program product. When the computer program product runs on a processor, method procedures in the foregoing method embodiments are implemented.

An embodiment of the present invention further provides a system. The system includes at least one sensor and a data association apparatus. The data association apparatus is configured to implement the method procedures described in FIG. 5 to FIG. 7.

An embodiment of the present invention further provides a sensor platform. The sensor platform includes at least one sensor and a data association apparatus. The data association apparatus is configured to implement the method procedures described in FIG. 5 to FIG. 7. The sensor platform may be a mobile device. For example, the sensor platform may be an in-vehicle platform, such as a car, a motorcycle, or a bicycle. Alternatively, the sensor platform may be a ship-borne platform, such as a ship, a steamer, or a motorboat. Alternatively, the sensor platform may be an airborne platform, such as an unmanned aerial vehicle, a helicopter, a jet aircraft, or a balloon. Alternatively, the sensor platform may be a satellite-borne platform, for example, a satellite.

In the foregoing embodiments, descriptions of the embodiments have respective focuses. For a part that is not described in detail in an embodiment, refer to related descriptions in other embodiments

When the apparatus provided in this application is implemented by using software, all or a part of the apparatus may be implemented in a form of a computer program product. The computer program product includes one or more computer instructions. When the computer program instructions are loaded and executed on a computer, the procedures or functions described in the embodiments of this application are all or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments without departing from the scope of the technical solutions of the embodiments of this application. The scope of the invention is defined in the appended claims.

**Claims**

1. A data association method, performed by a data association apparatus, wherein the method comprises:

   obtaining (501) a plurality of pieces of measurement data, wherein each of the plurality of pieces of measurement data comprises position measurement data and velocity measurement data;
   determining (502), based on position measurement data comprised in at least two of the plurality of pieces of measurement data, a velocity estimate corresponding to an association hypothesis of the at least two pieces of measurement data; wherein the association hypothesis refers to a hypothetical data association, and wherein it is assumed the at least two pieces of measurement data corresponding to the association hypothesis are in an association relationship;
   determining (503), based on the velocity estimate corresponding to the association hypothesis and velocity measurement data in the at least two pieces of measurement data, a metric value corresponding to the association hypothesis; and
   determining (504) an association relationship of the plurality of pieces of measurement data based on a metric value corresponding to at least one association hypothesis of the plurality of pieces of measurement data;
   wherein each of the at least one association hypothesis of the plurality of pieces of measurement data corresponds to at least two of the plurality of pieces of measurement data.

2. The method according to claim 1, wherein the at least two pieces of measurement data come from at least two moments; or the at least two pieces of measurement data come from at least two sensors.

3. The method according to claim 1 or 2, wherein the velocity estimate comprises one or more of a smoothed velocity estimate, a filtered velocity estimate, and a predicted velocity estimate.

4. The method according to claim 3, wherein the determining, based on the velocity estimate corresponding to the association hypothesis and velocity measurement data in the at least two pieces of measurement data, a metric value corresponding to the association hypothesis comprises:
   determining, based on an estimate of a projected velocity component corresponding to the association hypothesis and the velocity measurement data in the at least two pieces of measurement data, the metric value corresponding to the association hypothesis, wherein the estimate of the projected velocity component comprises a radial velocity estimate and/or a lateral velocity estimate and/or a longitudinal velocity estimate, the radial velocity estimate is obtained based on the velocity estimate, the lateral velocity estimate is obtained based on the velocity estimate, and the longitudinal velocity estimate is obtained based on the velocity estimate.

5. The method according to any one of claims 1 to 3, wherein the determining, based on the velocity estimate corresponding to the association hypothesis and velocity measurement data in the at least two pieces of measurement data, a metric value corresponding to the association hypothesis comprises:

   determining, based on the velocity estimate corresponding to the association hypothesis and the velocity measurement data in the at least two pieces of measurement data, whether the association hypothesis is a valid association hypothesis; and
   for a valid association hypothesis, determining the metric value corresponding to the association hypothesis.

6. The method according to claim 5, wherein that the association hypothesis is valid means: a range value determined based on the velocity estimate corresponding to the association hypothesis and the velocity measurement data in the at least two pieces of measurement data is less than or equal to a preset threshold.

7. The method according to any one of claims 1 to 6, wherein the metric value corresponding to the association hypothesis is a likelihood function value or a log-likelihood function value or a range value that is obtained based on the velocity measurement data and the velocity estimate.

8. The method according to any one of claims 1 to 7, wherein the determining an association relationship of the plurality of pieces of measurement data based on a metric value corresponding to at least one association hypothesis of the plurality of pieces of measurement data comprises:

   determining a maximum-likelihood association hypothesis or a global nearest-neighbor association hypothesis based on the metric value corresponding to the at least one association hypothesis of the plurality of pieces of measurement data; and

determining the association relationship of the plurality of pieces of measurement data based on the maximum-likelihood association hypothesis or the global nearest-neighbor association hypothesis.

9.  The method according to any one of claims 1 to 7, wherein the determining an association relationship of the plurality of pieces of measurement data based on a metric value corresponding to at least one association hypothesis of the plurality of pieces of measurement data comprises:
determining the association relationship of the plurality of pieces of measurement data based on the metric value corresponding to the at least one association hypothesis of the plurality of pieces of measurement data and according to a first constraint rule, wherein the first constraint rule is that one piece of measurement data comes from one target, and the one target generates one or more pieces of measurement data.

10. A data association apparatus, wherein the data association apparatus comprises:

an obtaining unit (801), configured to obtain a plurality of pieces of measurement data, wherein each of the plurality of pieces of measurement data comprises position measurement data and velocity measurement data; and
a determining unit (802), configured to determine, based on position measurement data comprised in at least two of the plurality of pieces of measurement data, a velocity estimate corresponding to an association hypothesis of the at least two pieces of measurement data; wherein the association hypothesis refers to a hypothetical data association, and wherein the at least two pieces of measurement data corresponding to the association hypothesis are assumed to be in an association relationship;
wherein
the determining unit is further configured to determine, based on the velocity estimate corresponding to the association hypothesis and velocity measurement data in the at least two pieces of measurement data, a metric value corresponding to the association hypothesis; and
the determining unit is further configured to determine an association relationship of the plurality of pieces of measurement data based on a metric value corresponding to at least one association hypothesis of the plurality of pieces of measurement data;
wherein each of the at least one association hypothesis of the plurality of pieces of measurement data corresponds to at least two of the plurality of pieces of measurement data.

11. The apparatus according to claim 10, wherein the at least two pieces of measurement data come from at least two moments; or the at least two pieces of measurement data come from at least two sensors.

12. The apparatus according to claim 10 or 11, wherein the velocity estimate comprises one or more of a smoothed velocity estimate, a filtered velocity estimate, and a predicted velocity estimate.

13. The apparatus according to claim 12, wherein the determining unit is specifically configured to determine, based on an estimate of a projected velocity component corresponding to the association hypothesis and the velocity measurement data in the at least two pieces of measurement data, the metric value corresponding to the association hypothesis, wherein the estimate of the projected velocity component comprises a radial velocity estimate and/or a lateral velocity estimate and/or a longitudinal velocity estimate, the radial velocity estimate is obtained based on the velocity estimate, the lateral velocity estimate is obtained based on the velocity estimate, and the longitudinal velocity estimate is obtained based on the velocity estimate.

14. The apparatus according to any one of claims 10 to 12, wherein the determining unit is specifically configured to determine, based on the velocity estimate corresponding to the association hypothesis and the velocity measurement data in the at least two pieces of measurement data, whether the association hypothesis is a valid association hypothesis; and
for a valid association hypothesis, determine the metric value corresponding to the association hypothesis.

15. A data association apparatus, wherein the apparatus comprises a processor and a memory, wherein

the memory is configured to store computer-executable instructions; and
the processor is configured to execute the computer-executable instructions stored in the memory, so that the data association apparatus performs the method according to any one of claims 1 to 9.

**Patentansprüche**

1. Datenzuordnungsverfahren, das von einer Datenzuordnungsvorrichtung durchgeführt wird, wobei das Verfahren Folgendes umfasst:

   Erhalten (501) einer Vielzahl von Messdatensätzen, wobei jeder der Vielzahl von Messdatensätzen Positionsmessdaten und Geschwindigkeitsmessdaten umfasst;
   Bestimmen (502), auf der Grundlage von Positionsmessdaten, die in mindestens zwei der Vielzahl von Messdatensätzen enthalten sind, einer Geschwindigkeitsschätzung, die einer Zuordnungshypothese der mindestens zwei Messdatensätze entspricht;
   wobei sich die Zuordnungshypothese auf eine hypothetische Datenzuordnung bezieht, und wobei angenommen wird, dass die mindestens zwei Messdatensätze, die der Zuordnungshypothese entsprechen, in einer Zuordnungsbeziehung stehen;
   Bestimmen (503), auf der Grundlage der Geschwindigkeitsschätzung, die der Zuordnungshypothese entspricht, und der Geschwindigkeitsmessdaten in den mindestens zwei Messdatensätzen, eines metrischen Wertes, der der Zuordnungshypothese entspricht; und
   Bestimmen (504) einer Zuordnungsbeziehung der Vielzahl von Messdatensätzen auf der Grundlage eines metrischen Wertes, der mindestens einer Zuordnungshypothese der Vielzahl von Messdatensätzen entspricht;
   wobei jede der mindestens einen Zuordnungshypothese der Vielzahl von Messdatensätzen mindestens zwei der Vielzahl von Messdatensätzen entspricht.

2. Verfahren nach Anspruch 1,
   wobei die mindestens zwei Messdatensätze von mindestens zwei Momenten stammen; oder die mindestens zwei Messdatensätze von mindestens zwei Sensoren stammen.

3. Verfahren nach Anspruch 1 oder 2,
   wobei die Geschwindigkeitsschätzung eine oder mehrere von einer geglätteten Geschwindigkeitsschätzung, einer gefilterten Geschwindigkeitsschätzung und einer vorhergesagten Geschwindigkeitsschätzung umfasst.

4. Verfahren nach Anspruch 3,
   wobei das Bestimmen, auf der Grundlage der Geschwindigkeitsschätzung, die der Zuordnungshypothese entspricht, und der Geschwindigkeitsmessdaten in den mindestens zwei Messdatensätzen, eines metrischen Wertes, der der Zuordnungshypothese entspricht, Folgendes umfasst:

   Bestimmen, auf der Grundlage einer Schätzung einer projizierten Geschwindigkeitskomponente, die der Zuordnungshypothese entspricht, und der Geschwindigkeitsmessdaten in den mindestens zwei Messdatensätzen, des metrischen Wertes, der der Zuordnungshypothese entspricht,
   wobei die Schätzung der projizierten Geschwindigkeitskomponente eine Schätzung der Radialgeschwindigkeit und/oder eine Schätzung der lateralen Geschwindigkeit und/oder eine Schätzung der longitudinalen Geschwindigkeit umfasst, die Schätzung der Radialgeschwindigkeit auf der Grundlage der Geschwindigkeitsschätzung erhalten wird, die Schätzung der lateralen Geschwindigkeit auf der Grundlage der Geschwindigkeitsschätzung erhalten wird und die Schätzung der longitudinalen Geschwindigkeit auf der Grundlage der Geschwindigkeitsschätzung erhalten wird.

5. Verfahren nach einem der Ansprüche 1 bis 3,
   wobei das Bestimmen, auf der Grundlage der Geschwindigkeitsschätzung, die der Zuordnungshypothese entspricht, und der Geschwindigkeitsmessdaten in den mindestens zwei Messdatensätzen, eines metrischen Wertes, der der Zuordnungshypothese entspricht, Folgendes umfasst:

   Bestimmen, basierend auf der Geschwindigkeitsschätzung, die der Zuordnungshypothese entspricht, und den Geschwindigkeitsmessdaten in den mindestens zwei Messdatensätzen, ob die Zuordnungshypothese eine gültige Zuordnungshypothese ist; und
   für eine gültige Zuordnungshypothese, Bestimmen des der Zuordnungshypothese entsprechenden metrischen Wertes.

6. Verfahren nach Anspruch 5,
   wobei die Tatsache, dass die Zuordnungshypothese gültig ist, Folgendes bedeutet:
   ein Bereichswert, der auf der Grundlage der Geschwindigkeitsschätzung, die der Zuordnungshypothese entspricht, und der Geschwindigkeitsmessdaten in den mindestens zwei Messdatensätzen ermittelt wurde, ist kleiner oder gleich einem voreingestellten Schwellenwert.

7. Verfahren nach einem der Ansprüche 1 bis 6,
wobei der metrische Wert, der der Zuordnungshypothese entspricht, ein Likelihood-Funktionswert oder ein Log-Likelihood-Funktionswert oder ein Bereichswert ist, der auf der Grundlage der Geschwindigkeitsmessdaten und der Geschwindigkeitsschätzung erhalten wird.

8. Verfahren nach einem der Ansprüche 1 bis 7,
wobei das Bestimmen einer Zuordnungsbeziehung der Vielzahl von Messdatensätzen auf der Grundlage eines metrischen Wertes, der mindestens einer Zuordnungshypothese der Vielzahl von Messdatensätzen entspricht, Folgendes umfasst:

Bestimmen einer Maximum-Likelihood-Zuordnungshypothese oder einer globalen Nearest-Neighbor-Zuordnungshypothese auf der Grundlage des metrischen Wertes, der der mindestens einen Zuordnungshypothese der Vielzahl von Messdatensätzen entspricht; und
Bestimmen der Zuordnungsbeziehung der Vielzahl von Messdatensätzen auf der Grundlage der Maximum-Likelihood-Zuordnungshypothese oder der globalen Nearest-Neighbor-Zuordnungshypothese.

9. Verfahren nach einem der Ansprüche 1 bis 7,
wobei das Bestimmen einer Zuordnungsbeziehung der Vielzahl von Messdatensätzen auf der Grundlage eines metrischen Wertes, der mindestens einer Zuordnungshypothese der Vielzahl von Messdatensätzen entspricht, Folgendes umfasst:
Bestimmen der Zuordnungsbeziehung der Vielzahl von Messdatensätzen auf der Grundlage des metrischen Wertes, der der mindestens einen Zuordnungshypothese der Vielzahl von Messdatensätzen entspricht, und gemäß einer ersten Einschränkungsregel, wobei die erste Einschränkungsregel darin besteht, dass ein Messdatensatz von einem Ziel stammt und das eine Ziel einen oder mehrere Messdatensätze erzeugt.

10. Datenzuordnungsvorrichtung, wobei die Datenzuordnungsvorrichtung Folgendes umfasst:

eine Erhaltungseinheit (801), die so ausgebildet ist, dass sie eine Vielzahl von Messdatensätzen erfasst, wobei jeder der Vielzahl von Messdatensätzen Positionsmessdaten und Geschwindigkeitsmessdaten umfasst; und
eine Bestimmungseinheit (802), die so ausgebildet ist, dass sie auf der Grundlage von Positionsmessdaten, die in mindestens zwei der Vielzahl von Messdatensätzen enthalten sind, eine Geschwindigkeitsschätzung bestimmt, die einer Zuordnungshypothese der mindestens zwei Messdatensätze entspricht;
wobei sich die Zuordnungshypothese auf eine hypothetische Datenzuordnung bezieht, und wobei davon ausgegangen wird, dass die mindestens zwei Messdatensätze, die der Zuordnungshypothese entsprechen, in einer Zuordnungsbeziehung stehen;
wobei die Bestimmungseinheit ferner so ausgebildet ist, dass sie auf der Grundlage der Geschwindigkeitsschätzung, die der Zuordnungshypothese entspricht, und der Geschwindigkeitsmessdaten in den mindestens zwei Messdatensätzen einen metrischen Wert bestimmt, der der Zuordnungshypothese entspricht; und
die Bestimmungseinheit ferner so ausgebildet ist, dass sie eine Zuordnungsbeziehung der Vielzahl von Messdatensätzen auf der Grundlage eines metrischen Wertes bestimmt, der mindestens einer Zuordnungshypothese der Vielzahl von Messdatensätzen entspricht;
wobei jede der mindestens einen Zuordnungshypothese der Vielzahl von Messdatensätzen mindestens zwei der Vielzahl von Messdatensätzen entspricht.

11. Vorrichtung nach Anspruch 10,
wobei die mindestens zwei Messdatensätze von mindestens zwei Momenten stammen; oder die mindestens zwei Messdatensätze von mindestens zwei Sensoren stammen.

12. Vorrichtung nach Anspruch 10 oder 11,
wobei die Geschwindigkeitsschätzung eine oder mehrere von einer geglätteten Geschwindigkeitsschätzung, einer gefilterten Geschwindigkeitsschätzung und einer vorhergesagten Geschwindigkeitsschätzung umfasst.

13. Vorrichtung nach Anspruch 12,

wobei die Bestimmungseinheit speziell ausgebildet ist, um auf der Grundlage einer Schätzung einer projizierten Geschwindigkeitskomponente, die der Zuordnungshypothese entspricht, und der Geschwindigkeitsmessdaten in den mindestens zwei Messdatensätzen den metrischen Wert zu bestimmen, der der Zuordnungshypothese entspricht,

wobei die Schätzung der projizierten Geschwindigkeitskomponente eine Schätzung der Radialgeschwindigkeit und/oder eine Schätzung der lateralen Geschwindigkeit und/oder eine Schätzung der longitudinalen Geschwindigkeit umfasst, die Schätzung der Radialgeschwindigkeit auf der Grundlage der Geschwindigkeitsschätzung erhalten wird, die Schätzung der lateralen Geschwindigkeit auf der Grundlage der Geschwindigkeitsschätzung erhalten wird und die Schätzung der longitudinalen Geschwindigkeit auf der Grundlage der Geschwindigkeitsschätzung erhalten wird.

**14.** Vorrichtung nach einem der Ansprüche 10 bis 12,

wobei die Bestimmungseinheit speziell ausgebildet ist, um auf der Grundlage der Geschwindigkeitsschätzung, die der Zuordnungshypothese entspricht, und der Geschwindigkeitsmessdaten in den mindestens zwei Messdatensätzen zu bestimmen, ob die Zuordnungshypothese eine gültige Zuordnungshypothese ist; und für eine gültige Zuordnungshypothese den der Zuordnungshypothese entsprechenden metrischen Wert zu bestimmen.

**15.** Datenzuordnungsvorrichtung, wobei die Vorrichtung einen Prozessor und einen Speicher umfasst,

wobei der Speicher so ausgebildet ist, dass er computerausführbare Anweisungen speichert; und der Prozessor so ausgebildet ist, dass er die im Speicher gespeicherten computerausführbaren Anweisungen ausführt, so dass die Datenzuordnungsvorrichtung das Verfahren nach einem der Ansprüche 1 bis 9 durchführt.

## Revendications

**1.** Procédé d'association de données, réalisé par un appareil d'association de données, le procédé comprenant :

le fait d'obtenir (501) une pluralité d'éléments de données de mesure, dans lequel chaque élément de la pluralité d'éléments de données de mesure comprend des données de mesure de position et des données de mesure de vitesse ;
le fait de déterminer (502), sur la base de données de mesure de position comprises dans au moins deux éléments de la pluralité d'éléments de données de mesure, une estimation de vitesse correspondant à une hypothèse d'association des au moins deux éléments de données de mesure ; dans lequel l'hypothèse d'association se rapporte à une association de données hypothétique, et dans lequel il est supposé que les au moins deux éléments de données de mesure correspondant à l'hypothèse d'association sont dans une relation d'association ;
le fait de déterminer (503), sur la base de l'estimation de vitesse correspondant à l'hypothèse d'association et de données de mesure de vitesse dans les au moins deux éléments de données de mesure, une valeur métrique correspondant à l'hypothèse d'association ; et
le fait de déterminer (504) une relation d'association de la pluralité d'éléments de données de mesure sur la base d'une valeur métrique correspondant à au moins une hypothèse d'association de la pluralité d'éléments de données de mesure ;
dans lequel chacune de l'au moins une hypothèse d'association de la pluralité d'éléments de données de mesure correspond à au moins deux éléments de la pluralité de données de mesure.

**2.** Procédé selon la revendication 1, dans lequel les au moins deux éléments de données de mesure proviennent d'au moins deux moments ; ou les au moins deux éléments de données de mesure proviennent d'au moins deux capteurs.

**3.** Procédé selon la revendication 1 ou 2, dans lequel l'estimation de vitesse comprend une ou plusieurs estimations parmi une estimation de vitesse lissée, une estimation de vitesse filtrée, et une estimation de vitesse prédite.

**4.** Procédé selon la revendication 3, dans lequel la détermination, sur la base de l'estimation de vitesse correspondant à l'hypothèse d'association et de données de mesure de vitesse dans les au moins deux éléments de données de mesure, d'une valeur métrique correspondant à l'hypothèse d'association comprend :
le fait de déterminer, sur la base d'une estimation d'un composant de vitesse projetée correspondant à l'hypothèse d'association et des données de mesure de vitesse dans les au moins deux éléments de données de mesure, la valeur métrique correspondant à l'hypothèse d'association, dans lequel l'estimation du composant de vitesse projetée comprend une estimation de vitesse radiale et/ou une estimation de vitesse latérale et/ou une estimation de vitesse longitudinale, l'estimation de vitesse radiale étant obtenue sur la base de l'estimation de vitesse, l'estimation de vitesse latérale étant obtenue sur la base de l'estimation de vitesse, et l'estimation de vitesse longitudinale étant obtenue sur la base de l'estimation de vitesse.

5. Procédé selon n'importe laquelle des revendications 1 à 3, dans lequel la détermination, sur la base de l'estimation de vitesse correspondant à l'hypothèse d'association et de données de mesure de vitesse dans les au moins deux éléments de données de mesure, d'une valeur métrique correspondant à l'hypothèse d'association comprend :

le fait de déterminer, sur la base de l'estimation de vitesse correspondant à l'hypothèse d'association et des données de mesure de vitesse dans les au moins deux éléments de données de mesure, si l'hypothèse d'association est une hypothèse d'association valide ; et
pour une hypothèse d'association valide, le fait de déterminer la valeur métrique correspondant à l'hypothèse d'association.

6. Procédé selon la revendication 5, dans lequel le fait que l'hypothèse d'association soit valide signifie : une valeur de gamme, déterminée sur la base de l'estimation de vitesse correspondant à l'hypothèse d'association et des données de mesure de vitesse dans les au moins deux éléments de données de mesure, est inférieure ou égale à un seuil prédéfini.

7. Procédé selon n'importe laquelle des revendications 1 à 6, dans lequel la valeur métrique correspondant à l'hypothèse d'association est une valeur de fonction de vraisemblance ou une valeur de fonction de vraisemblance logarithmique ou une valeur de gamme qui est obtenue sur la base des données de mesure de vitesse et de **l'estimation** de vitesse.

8. Procédé selon n'importe laquelle des revendications 1 à 7, dans lequel la détermination d'une relation d'association de la pluralité d'éléments de données de mesure sur la base d'une valeur métrique correspondant à au moins une hypothèse d'association de la pluralité d'éléments de données de mesure comprend :

le fait de déterminer une hypothèse d'association à vraisemblance maximum ou une hypothèse d'association globale du plus proche voisin basée sur la valeur métrique correspondant à l'au moins une hypothèse d'association de la pluralité d'éléments de données de mesure ; et
le fait de déterminer la relation d'association de la pluralité d'éléments de données de mesure sur la base de l'hypothèse d'association à vraisemblance maximum ou de l'hypothèse d'association globale de voisin le plus proche.

9. Procédé selon n'importe laquelle des revendications 1 à 7, dans lequel la détermination d'une relation d'association de la pluralité d'éléments de données de mesure sur la base d'une valeur métrique correspondant à au moins une hypothèse d'association de la pluralité d'éléments de données de mesure comprend :
le fait de déterminer la relation d'association de la pluralité d'éléments de données de mesure sur la base de la valeur métrique correspondant à l'au moins une hypothèse d'association de la pluralité d'éléments de données de mesure et en fonction d'une première règle de contrainte, dans lequel la première règle de contrainte est qu'un élément de données de mesure provient d'une cible et que cette une cible génère un ou plusieurs éléments de mesure.

10. Appareil d'association de données, l'appareil d'association de données comprenant :

une unité d'obtention (801), configurée pour obtenir une pluralité d'éléments de données de mesure, dans lequel chaque élément de la pluralité d'éléments de données de mesure comprend des données de mesure de position et des données de mesure de vitesse ; et
une unité de détermination (802), configurée pour déterminer, sur la base de données de mesure de position comprises dans au moins deux éléments de la pluralité d'éléments de données de mesure, une estimation de vitesse correspondant à une hypothèse d'association des au moins deux éléments de données de mesure ; dans lequel l'hypothèse d'association se rapporte à une association de données hypothétique, et dans lequel les au moins deux éléments de données de mesure correspondant à l'hypothèse d'association sont supposés être dans une relation d'association ;
dans lequel
l'unité de détermination est configurée en outre pour déterminer, sur la base de l'estimation de vitesse correspondant à l'hypothèse d'association et de données de mesure de vitesse dans les au moins deux éléments de données de mesure, une valeur métrique correspondant à l'hypothèse d'association ; et

l'unité de détermination est configurée en outre pour déterminer une relation d'association de la pluralité d'éléments de données de mesure sur la base d'une valeur métrique correspondant à au moins une hypothèse d'association de la pluralité d'éléments de données de mesure ;

dans lequel chacune de l'au moins une hypothèse d'association de la pluralité d'éléments de données de mesure correspond à au moins deux éléments de la pluralité de données de mesure.

11. Appareil selon la revendication 10, dans lequel les au moins deux éléments de données de mesure proviennent d'au moins deux moments ; ou les au moins deux éléments de données de mesure proviennent d'au moins deux capteurs.

12. Appareil selon la revendication 10 ou 11, dans lequel l'estimation de vitesse comprend une ou plusieurs estimations parmi une estimation de vitesse lissée, une estimation de vitesse filtrée, et une estimation de vitesse prédite.

13. Appareil selon la revendication 12, dans lequel l'unité de détermination est configurée spécifiquement pour déterminer, sur la base d'une estimation d'un composant de vitesse projetée correspondant à l'hypothèse d'association et des données de mesure de vitesse dans les au moins deux éléments de données de mesure, la valeur métrique correspondant à l'hypothèse d'association, dans lequel l'estimation du composant de vitesse projetée comprend une estimation de vitesse radiale et/ou une estimation de vitesse latérale et/ou une estimation de vitesse longitudinale, l'estimation de vitesse radiale étant obtenue sur la base de l'estimation de vitesse, l'estimation de vitesse latérale étant obtenue sur la base de l'estimation de vitesse, et l'estimation de vitesse longitudinale étant obtenue sur la base de l'estimation de vitesse.

14. Appareil selon n'importe laquelle des revendications 10 à 12, dans lequel l'unité de détermination est configurée spécifiquement pour déterminer, sur la base de l'estimation de vitesse correspondant à l'hypothèse d'association et des données de mesure de vitesse dans les au moins deux éléments de données de mesure, si l'hypothèse d'association est une hypothèse d'association valide ; et

pour une hypothèse d'association valide, déterminer la valeur métrique correspondant à l'hypothèse d'association.

15. Appareil d'association de données, l'appareil comprenant un processeur et une mémoire, la mémoire étant configurée pour stocker des instructions exécutables par ordinateur ; et

le processeur étant configuré pour exécuter les instructions exécutables par ordinateur stockées dans la mémoire, de sorte que l'appareil d'association de données réalise le procédé selon n'importe laquelle des revendications 1 à 9.

Time t                          Time t+1

FIG. 1

FIG. 2

FIG. 3

FIG. 4

501

Obtain a plurality of pieces of measurement data

502

Determine, based on position measurement data included in at least two of the plurality of pieces of measurement data, a velocity estimate corresponding to an association hypothesis of the at least two pieces of measurement data

503

Determine, based on the velocity estimate corresponding to the association hypothesis and velocity measurement data in the at least two pieces of measurement data, a metric value corresponding to the association hypothesis

504

Determine an association relationship of the plurality of pieces of measurement data based on a metric value corresponding to at least one association hypothesis of the plurality of pieces of measurement data

FIG. 5

601

Obtain a plurality of pieces of measurement data

602

Determine, based on position measurement data included in two of the plurality of pieces of measurement data, a velocity estimate corresponding to an association hypothesis of the two pieces of measurement data

603

Determine, based on the velocity estimate corresponding to the association hypothesis and velocity measurement data in the two pieces of measurement data, a metric value corresponding to the association hypothesis

604

Determine an association relationship of the plurality of pieces of measurement data based on a metric value corresponding to at least one association hypothesis of the plurality of pieces of measurement data

FIG. 6

701

Obtain a plurality of pieces of measurement data

702

Determine, based on position measurement data included in three of the plurality of pieces of measurement data, a velocity estimate corresponding to an association hypothesis of the three pieces of measurement data

70.

Determine, based on the velocity estimate corresponding to the association hypothesis and velocity measurement data in the three pieces of measurement data, a metric value corresponding to the association hypothesis

704

Determine an association relationship of the plurality of pieces of measurement data based on a metric value corresponding to at least one association hypothesis of the plurality of pieces of measurement data

FIG. 7

801

Obtaining unit

802

Determining unit

Data association apparatus

FIG. 8

FIG. 9

**EP 4 040 194 B1**

**Patent documents cited in the description**

- CN 102749626 A